(19) Europäisches Patentamt
European Patent Office
Office européen des brevets

(11) EP 4 450 535 A1

(12) EUROPEAN PATENT APPLICATION
published in accordance with Art. 153(4) EPC

(43) Date of publication:
**23.10.2024 Bulletin 2024/43**

(21) Application number: **23875276.0**

(22) Date of filing: **06.10.2023**

(51) International Patent Classification (IPC):
***C08G 64/16*** *(2006.01)* ***C08G 64/08*** *(2006.01)*
***C08L 69/00*** *(2006.01)* ***G02B 1/04*** *(2006.01)*
***C08G 64/30*** *(2006.01)* ***C08G 63/66*** *(2006.01)*
***C08G 63/64*** *(2006.01)*

(52) Cooperative Patent Classification (CPC):
**C08G 63/64; C08G 63/66; C08G 64/08; C08G 64/16; C08G 64/30; C08L 69/00; G02B 1/04**

(86) International application number:
**PCT/KR2023/015453**

(87) International publication number:
**WO 2024/076215 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.10.2022 KR 20220128853**
**07.10.2022 KR 20220128859**
**07.10.2022 KR 20220128861**
**24.11.2022 KR 20220159379**

(71) Applicant: **LG Chem, Ltd.**
**Yeongdeungpo-gu**
**Seoul 07336 (KR)**

(72) Inventors:
- **CHOI, Il Hwan**
  **Daejeon 34122 (KR)**
- **KIM, Kyeongmun**
  **Daejeon 34122 (KR)**
- **YOO, Seungmin**
  **Daejeon 34122 (KR)**
- **YIM, Hye Jin**
  **Daejeon 34122 (KR)**
- **LEE, Seungmook**
  **Daejeon 34122 (KR)**
- **BAEK, Hyeonwoo**
  **Daejeon 34122 (KR)**
- **BAE, Jaesoon**
  **Daejeon 34122 (KR)**

(74) Representative: **Hoffmann Eitle**
**Patent- und Rechtsanwälte PartmbB**
**Arabellastraße 30**
**81925 München (DE)**

(54) **RESIN AND METHOD FOR PREPARING SAME**

(57) The present application relates to a resin including a unit of Chemical Formula 1 and a unit of Chemical Formula 2, a method for preparing the same, a resin composition including the same, and a molded article including the resin composition.

EP 4 450 535 A1

## Description

[Technical Field]

The present specification relates to a resin and a method for preparing the same.

The present specification claims priority to and the benefit of Korean Patent Application Nos. 10-2022-0128853, 10-2022-0128859 and 10-2022-0128861 filed in the Korean Intellectual Property Office on October 7, 2022, and claims priority to and the benefit of Korean Patent Application No. 10-2022-0159379 filed in the Korean Intellectual Property Office on November 24, 2022, the entire contents of which are incorporated herein by reference.

[Background Art]

Optical glass or optical resin is used as an optical material for plastic optical products and optical films such as various lenses, prisms, optical disc substrates, and optical fibers. Although optical glass has excellent heat resistance, transparency, dimensional stability, and chemical resistance, the optical glass has the problems of high material cost, poor moldability, and low productivity.

Meanwhile, optical materials including optical resins can be mass-produced by injection molding. As the optical resin, a polycarbonate resin, a polyester resin, a polyester-carbonate resin, and the like are used.

However, the optical resin has a disadvantage in that processability deteriorates due to its insufficient fluidity. Therefore, it may be difficult to apply the optical resin to the injection molding of an article that requires the aforementioned precision. In order to apply the resin to injection molding, molding temperature, mold temperature, and the like need to be increased, but the molding cycle becomes longer, so that the molding cost increases, or the resin deteriorates, the color deteriorates during molding, and the like.

To solve this problem, examples of a method of improving the color fluidity of a resin during the molding of an optical material include methods of lowering the viscosity, lowering the weight average molecular weight, adding a low-molecular weight oligomer, widening the molecular weight distribution, and the like, but excellent physical properties inherent in the resin, such as heat resistance and impact resistance, tend to deteriorate.

Further, optical materials with a high refractive index are generally required to have transparency equal to or more than a predetermined level. In particular, due to the transparent properties of polycarbonate, the range of use of polycarbonate in the art related to optical materials tends to continuously expand, and there is a need for providing optical materials capable of effectively blocking yellowishness from polycarbonate.

Therefore, attempts have been continuously made to improve processability, and implement various colors by exhibiting a low yellow index, while maintaining the advantages of a resin.

[Detailed Description of the Invention]

[Technical Problem]

An exemplary embodiment of the present specification has been made in an effort to provide a resin having a novel structure and a method for preparing the same.

Another exemplary embodiment of the present specification has been made in an effort to provide a resin composition including a resin having a novel structure and a molded article prepared from the resin composition.

[Technical Solution]

An exemplary embodiment of the present specification provides a resin including a unit of the following Chemical Formula 1 and a unit of the following Chemical Formula 2.

[Chemical Formula 1]

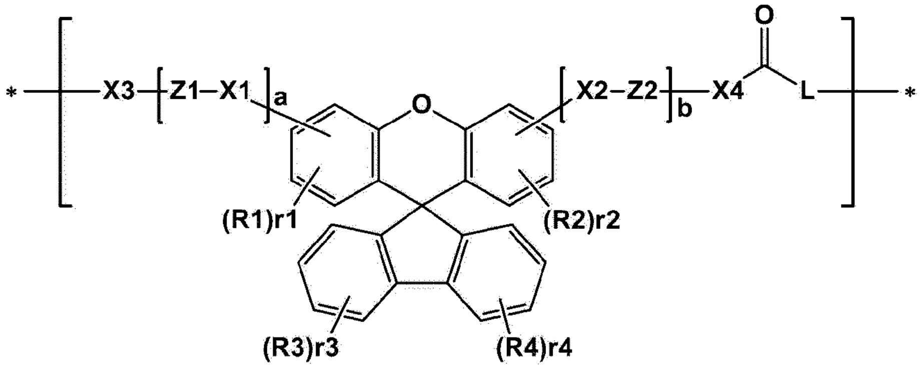

in Chemical Formula 1,

L is a direct bond; or -L'-C(=O)-,

L' is a substituted or unsubstituted arylene group,

X1 to X4 are each independently O; or S,

Z1 and Z2 are each independently a substituted or unsubstituted alkylene group; or a substituted or unsubstituted cycloalkylene group,

a and b are each independently an integer from 1 to 10, and when a and b are each 2 or higher, structures in each parenthesis are the same as or different from each other,

R1 to R4 are each independently hydrogen; a substituted or unsubstituted alkyl group; a substituted or unsubstituted cycloalkyl group; a substituted or unsubstituted aryl group; or a substituted or unsubstituted heteroaryl group,

r1 and r2 are each independently an integer from 0 to 3, and when r1 and r2 are each 2 or higher, two or more of R1 and R2 are each the same as or different from each other,

r3 and r4 are each independently an integer from 0 to 4, and when r3 and r4 are each 2 or higher, two or more of R3 and R4 are each the same as or different from each other,

* means a moiety linked to the main chain of the resin,

[Chemical Formula 2]

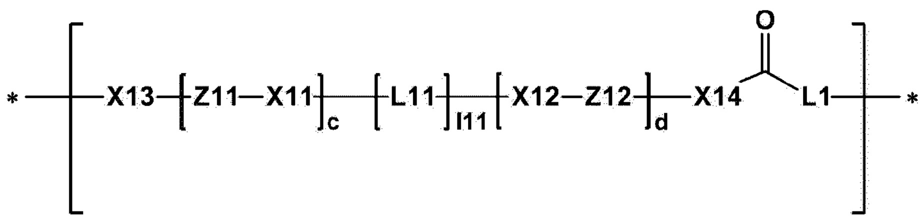

in Chemical Formula 2,

L1 is a direct bond; or -L1'-C(=O)-,

L1' is a substituted or unsubstituted arylene group,

L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,

l11 is an integer from 1 to 5, and when l11 is 2 or higher, two or more L11s are the same as or different from each other,

X11 to X14 are each independently O; or S,

Z11 and Z12 are each independently a substituted or unsubstituted alkylene group; or a substituted or unsubstituted cycloalkylene group,

c and d are each independently an integer from 0 to 10, and when c and d are each 2 or higher, structures in each parenthesis are the same as or different from each other, and

* means a moiety linked to the main chain of the resin.

An exemplary embodiment of the present specification provides a method for preparing the resin according to the above-described exemplary embodiment, the method including: polymerizing a composition for preparing a resin, which includes a compound of the following Chemical Formula 1a; a compound of the following Chemical Formula 2a; and one or more of a polycarbonate precursor and a polyester precursor.

[Chemical Formula 1a]

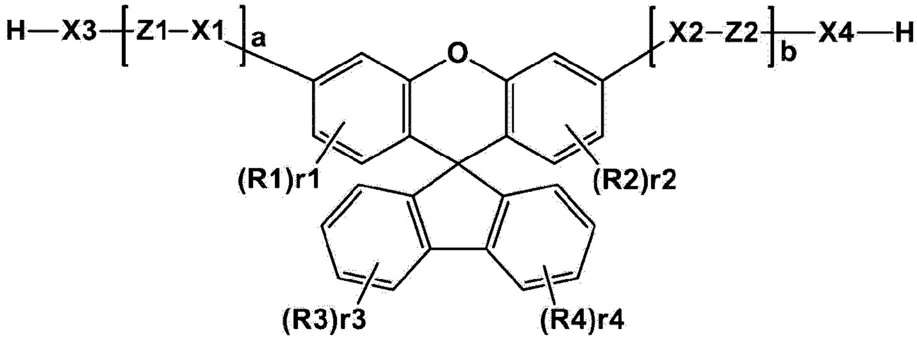

in Chemical Formula 1a,
X1 to X4 are each independently O or S,
Z1 and Z2 are each independently a substituted or unsubstituted alkylene group; or a substituted or unsubstituted cycloalkylene group,
a and b are each independently an integer from 1 to 10, and when a and b are each 2 or higher, structures in each parenthesis are the same as or different from each other,
R1 to R4 are each independently hydrogen; a substituted or unsubstituted alkyl group; a substituted or unsubstituted cycloalkyl group; a substituted or unsubstituted aryl group; or a substituted or unsubstituted heteroaryl group,
r1 and r2 are each independently an integer from 0 to 3, and when r1 and r2 are each 2 or higher, two or more of R1 and R2 are each the same as or different from each other,
r3 and r4 are each independently an integer from 0 to 4, and when r3 and r4 are each 2 or higher, two or more of R3 and R4 are each the same as or different from each other,

[Chemical Formula 2a]

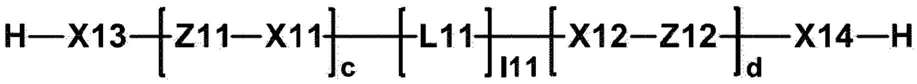

in Chemical Formula 2a,
L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,
l11 is an integer from 1 to 5, and when l11 is 2 or higher, two or more L11s are the same as or different from each other,
X11 to X14 are each independently O or S,
Z11 and Z12 are each independently a substituted or unsubstituted alkylene group; or a substituted or unsubstituted cycloalkylene group, and
c and d are each independently an integer from 0 to 10, and when c and d are each 2 or higher, structures in each parenthesis are the same as or different from each other.

Another exemplary embodiment of the present specification provides a resin composition including the resin according to the above-described exemplary embodiment.

Still another exemplary embodiment of the present specification provides a molded article including the resin composition including the resin according to the above-described exemplary embodiment.

[Advantageous Effects]

The resin according to the exemplary embodiments of the present specification has a high refractive index and high transparency.

By using the resin according to the exemplary embodiments of the present specification, an excellent optical lens, optical film, optical thin film, or optical resin having a small thickness can be obtained.

By using the resin according to the exemplary embodiments of the present specification, an excellent optical

lens, optical film, optical thin film, or optical resin having a high refractive index and a low yellow index can be obtained.

[Best Mode]

Hereinafter, the present specification will be described in more detail.

For a resin including the unit represented by Chemical Formula 1 according to an exemplary embodiment of the present specification, from the relationship formula between the molecular structure and the refractive index, which is known by the Lorentz-Lorenz's formula, it can be seen that the refractive index of a material composed of molecules is increased by increasing the electron density of the molecule and reducing the molecular volume. In addition, the core structure of Chemical Formula 1 is spiro[fluorene-9,9'-xanthene], and in the case of an electron-rich core structure, the refractive index of the resin may be further improved by increasing the electron density of the structure represented by Chemical Formula 1.

By including the units represented by Chemical Formulae 1 and 2, the resin may supplement the glass transition temperature (Tg) of the unit represented by Chemical Formula 1 or make the chain behavior of the unit represented by Chemical Formula 1 flexible, and has a technical effect advantageous for the injection processing of a molded article.

Therefore, the resin according to an exemplary embodiment of the present specification has a high refractive index and high transparency, and an optical lens, an optical film, or an optical resin using the resin has a small thickness and may exhibit excellent optical characteristics.

The resin according to an exemplary embodiment of the present specification may be a polycarbonate resin, a polyester resin, or a polyester-carbonate resin. Unless otherwise specifically limited in the present specification, the resin includes all of the above three types of resins.

Throughout the specification of the present application, the term "combination thereof" included in the Markush type expression means a mixture or combination of one or more selected from the group consisting of constituent elements described in the Markush type expression, and means including one or more selected from the group consisting of the above-described constituent elements.

In the present specification, room temperature is the same as defined in the art, generally means the temperature of an experimental room, a laboratory, and the like, particularly refers to the temperature used when an experiment is conducted without specifying or adjusting the temperature or when a sample and a material are left to stand in a room, and means 15°C to 25°C in the art.

In the present specification, normal pressure is the same as defined in the art, and generally means a pressure of about 1 atmosphere, which is the same as normal atmospheric pressure.

When one part "includes" one constituent element in the present specification, unless otherwise specifically described, this does not mean that another constituent element is excluded, but means that another constituent element may be further included.

Unless otherwise defined in the present disclosure, all technical and scientific terms used in the present disclosure have the same meaning as commonly understood by one with ordinary skill in the art to which the present disclosure pertains. Although methods and materials similar to or equivalent to those described in the present disclosure may be used in the practice or in the test of exemplary embodiments of the present disclosure, suitable methods and materials will be described below. All publications, patent applications, patents, and other references mentioned in the present disclosure are hereby incorporated by reference in their entireties, and in the case of conflict, the present disclosure, including definitions, will control unless a particular passage is mentioned. In addition, the materials, methods, and examples are illustrative only and are not intended to be limiting.

Examples of the substituents in the present specification will be described below, but are not limited thereto.

In the present specification,

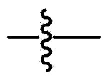

means a moiety to be linked.

In the present specification, the term "substitution" means that a hydrogen atom bonded to a carbon atom or nitrogen atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In the present specification, the term "substituted or unsubstituted" means being substituted with one or more substituents selected from the group consisting of deuterium; a halogen group; a hydroxyl group; a cyano group; an alkyl group; a cycloalkyl group; an alkoxy group; an alkenyl group; an aryloxy group; an arylthio group; alkylthio group;

a silyl group; an aryl group; a condensed ring group of an aromatic hydrocarbon ring and an aliphatic hydrocarbon ring; and a heteroaryl group, being substituted with a substituent to which two or more substituents among the exemplified substituents are linked, or having no substituent.

In the present specification, the fact that two or more substituents are linked indicates that hydrogen of any one substituent is linked to another substituent. For example, when two substituents are linked to each other, a phenyl group and a naphthyl group may be linked to each other to become a substituent of

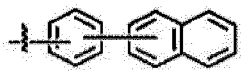

or

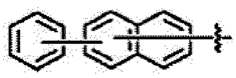

.

Further, the case where three substituents are linked to one another includes not only a case where (Substituent 1)-(Substituent 2)-(Substituent 3) are consecutively linked to one another, but also a case where (Substituent 2) and (Substituent 3) are linked to (Substituent 1). For example, a phenyl group, a naphthyl group , and an isopropyl group may be linked to one another to become a substituent of

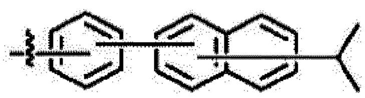

,

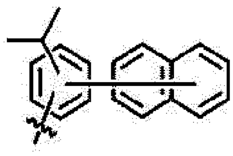

, or

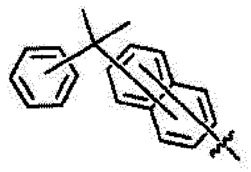

.

The above-described definition also applies equally to the case where four or more substituents are linked to one another.

In the present specification, hydrogen may be hydrogen, deuterium, or tritium.

In the present specification, a portion wherein a substituent is not indicated in the chemical formula structure may mean that hydrogen, deuterium, or tritium is substituted.

In the present specification, examples of a halogen group include fluorine, chlorine, bromine or iodine.

In the present specification, an alkyl group may be straight-chained or branched, and the number of carbon atoms thereof is not particularly limited, but is preferably 1 to 30. Specific examples thereof include methyl, ethyl, propyl, n-propyl, isopropyl, butyl, n-butyl, isobutyl, tert-butyl, sec-butyl, 1-methyl-butyl, 1-ethylbutyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethyl-propyl, isohexyl, 2-methylpentyl, 4-methylhexyl, 5-methylhexyl, and the like, but are not limited thereto.

In the present specification, a cycloalkyl group is not particularly limited, but has preferably 3 to 30 carbon atoms, and specific examples thereof include cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, an adamantyl group, and the like, but are not limited thereto.

In the present specification, an alkoxy group may be straight-chained, branched, or cyclic. The number of carbon atoms of the alkoxy group is not particularly limited, but is preferably 1 to 30. Specific examples thereof include methoxy, ethoxy, n-propoxy, isopropoxy, n-butoxy, isobutoxy, tert-butoxy, sec-butoxy, n-pentyloxy, neopentyloxy, isopentyloxy, n-hexyloxy, 3,3-dimethylbutyloxy, 2-ethylbutyloxy, n-octyloxy, n-nonyloxy, n-decyloxy, benzyloxy, p-methylbenzyloxy, and the like, but are not limited thereto.

In the present specification, an alkenyl group may be straight-chained or branched, and the number of carbon atoms thereof is not particularly limited, but is preferably 2 to 30. Specific examples thereof include vinyl, 1-propenyl,

isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, a stilbenyl group, a styrenyl group, and the like, but are not limited thereto.

In the present specification, an aryl group is not particularly limited, but has preferably 6 to 30 carbon atoms, and the aryl group may be monocyclic or polycyclic.

When the aryl group is a monocyclic aryl group, the number of carbon atoms is not particularly limited, but is preferably 6 to 50. Specific examples of the monocyclic aryl group include a phenyl group, a biphenyl group, a terphenyl group, and the like, but are not limited thereto.

When the aryl group is a polycyclic aryl group, the number of carbon atoms thereof is not particularly limited, but is preferably 10 to 50. Specific examples of the polycyclic aryl group include a naphthyl group, an anthracene group, a phenanthrene group, a triphenylene group, a pyrene group, a phenalene group, a perylene group, a chrysene group, a fluorene group, and the like, but are not limited thereto.

In the present specification, the fluorene group may be substituted, and adjacent groups may be bonded to each other to form a ring.

Examples of the case where the fluorene group is substituted include

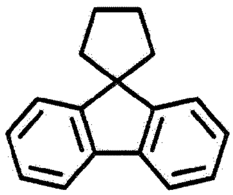 , 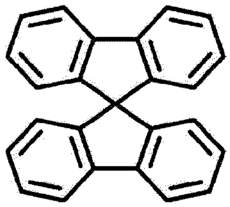 ,

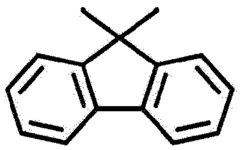 , 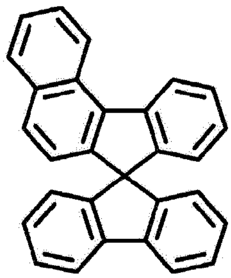 , 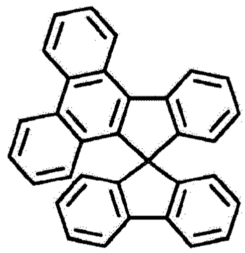 ,

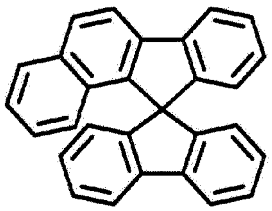 , 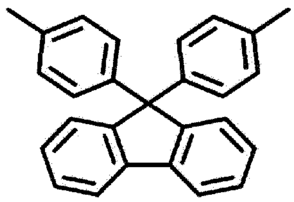 , 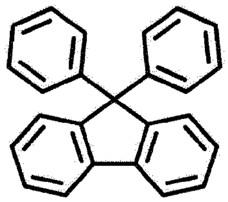 ,

and the like, but are not limited thereto.

In the present specification, the "adjacent" group may mean a substituent substituted with an atom directly linked to an atom in which the corresponding substituent is substituted, a substituent disposed to be sterically closest to the corresponding substituent, or another substituent substituted with an atom in which the corresponding substituent is substituted. For example, two substituents substituted at the ortho position in a benzene ring and two substituents substituted with the same carbon in an aliphatic ring may be interpreted as groups which are "adjacent" to each other.

In the present specification, a heteroaryl group includes one or more atoms other than carbon, that is, one or more heteroatoms, and specifically, the heteroatom may include one or more atoms selected from the group consisting of O, N, Se, S, and the like. The number of carbon atoms thereof is not particularly limited, but is preferably 2 to 30, and the heteroaryl group may be monocyclic or polycyclic. Examples of the heteroaryl group include a thiophene group, a furan group, a pyrrole group, an imidazole group, a thiazole group, an oxazole group, an oxadiazole group, a pyridine group, a bipyridine group, a pyrimidine group, a triazine group, a triazole group, an acridine group, a pyridazine group, a pyrazine group, a quinoline group, a quinazoline group, a quinoxaline group, a phthalazine group, a pyridopyrimidine

group, a pyridopyrazine group, a pyrazinopyrazine group, an isoquinoline group, an indole group, a carbazole group, a benzoxazole group, a benzimidazole group, a benzothiazole group, a benzocarbazole group, a benzothiophene group, a dibenzothiophene group, a benzofuran group, a phenanthridine group, a phenanthroline group, an isoxazole group, a thiadiazole group, a dibenzofuran group, a dibenzosilole group, a phenoxathiin group, a phenoxazine group, a phenothiazine group, a dihydroindenocarbazole group, a spirofluorenexanthene group, a spirofluorenethioxanthene group, a tetrahydronaphthothiophene group, a tetrahydronaphthofuran group, a tetrahydrobenzothiophene group, a tetrahydrobenzofuran group, and the like, but are not limited thereto.

In the present specification, the silyl group may be an alkylsilyl group, an arylsilyl group, an alkylarylsilyl group, a heteroarylsilyl group, and the like. The above-described examples of the alkyl group may be applied to the alkyl group in the alkylsilyl group, the above-described examples of the aryl group may be applied to the aryl group in the arylsilyl group, the examples of the alkyl group and the aryl group may be applied to the alkyl group and the aryl group in the alkylarylsilyl group, and the examples of the heterocyclic group may be applied to the heteroaryl group in the heteroarylsilyl group.

In the present specification, a hydrocarbon ring group may be an aromatic hydrocarbon ring group, an aliphatic hydrocarbon ring group, or a condensed group of an aromatic hydrocarbon ring and an aliphatic hydrocarbon ring and may be selected among examples of the cycloalkyl group, the aryl group, and a combination thereof, and examples of the hydrocarbon ring group include a phenyl group, a cyclohexyl group, an adamantyl group, a bicyclo[2.2.1]heptyl group, a bicyclo[2.2.1]octyl group, a tetrahydronaphthalene group, a tetrahydroanthracene group, a 1,2,3,4-tetrahydro-1,4-methanonaphthalene group, a 1,2,3,4-tetrahydro-1,4-ethanonaphthalene group, a spirocyclopentanefluorene group, a spiroadamantanefluorene group, a spirocyclohexanefluorene group, and the like, but are not limited thereto.

In the present specification, the aryloxy group may be represented by -ORo, and the description on the above-described aryl group is applied to Ro.

In the present specification, the arylthio group may be represented by -SRs1, and the description on the above-described aryl group is applied to Rs1.

In the present specification, the alkylthio group may be represented by -SRs2, and the description on the above-described alkyl group is applied to Rs2.

In the present specification, an alkylene group means a group having two bonding positions in an alkyl group, that is, a divalent group. The above-described description on the alkyl group may be applied to the alkylene group, except for a divalent alkylene group.

In the present specification, the cycloalkylene group means a group having two bonding positions in a cycloalkyl group, that is, a divalent group. The above-described description on the cycloalkyl group may be applied to the cycloalkylene groups, except for a divalent cycloalkylene group.

In the present specification, a divalent condensed ring group of an aromatic hydrocarbon ring and an aliphatic hydrocarbon ring means a group having two bonding positions in the condensed ring group of the aromatic hydrocarbon ring and the aliphatic hydrocarbon ring, that is, a divalent group. The above-described description on the condensed ring group of the aromatic hydrocarbon ring and the aliphatic hydrocarbon ring may be applied, except that the groups are each a divalent group.

In the present specification, an arylene group means a group having two bonding positions in an aryl group, that is, a divalent group. The above-described description on the aryl group may be applied to the arylene group, except for a divalent group.

According to an exemplary embodiment of the present specification, provided is a resin including a unit of the following Chemical Formula 1 and a unit of the following Chemical Formula 2.

[Chemical Formula 1]

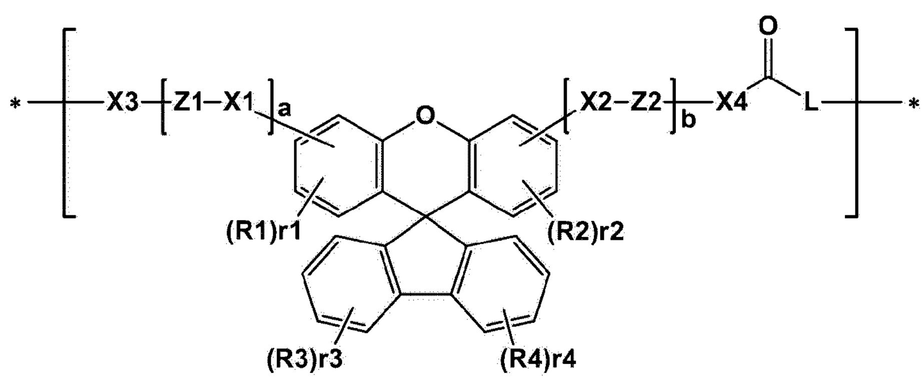

in Chemical Formula 1,
L is a direct bond; or -L'-C(=O)-,
L' is a substituted or unsubstituted arylene group,
X1 to X4 are each independently O; or S,
Z1 and Z2 are each independently a substituted or unsubstituted alkylene group; or a substituted or unsubstituted cycloalkylene group,
a and b are each independently an integer from 1 to 10, and when a and b are each 2 or higher, structures in each parenthesis are the same as or different from each other,
R1 to R4 are each independently hydrogen; a substituted or unsubstituted alkyl group; a substituted or unsubstituted cycloalkyl group; a substituted or unsubstituted aryl group; or a substituted or unsubstituted heteroaryl group,
r1 and r2 are each independently an integer from 0 to 3, and when r1 and r2 are each 2 or higher, two or more of R1 and R2 are each the same as or different from each other,
r3 and r4 are each independently an integer from 0 to 4, and when r3 and r4 are each 2 or higher, two or more of R3 and R4 are each the same as or different from each other,
* means a moiety linked to the main chain of the resin,

[Chemical Formula 2]

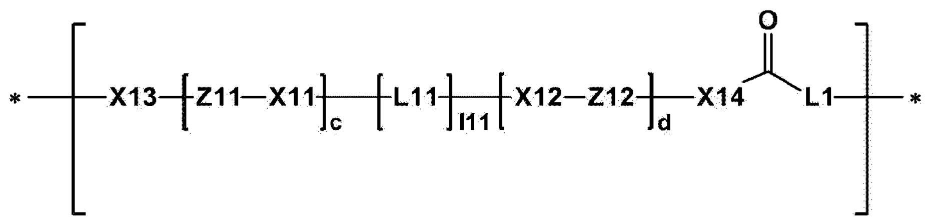

in Chemical Formula 2,
L1 is a direct bond; or -L1'-C(=O)-,
L1' is a substituted or unsubstituted arylene group,
L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,
l11 is an integer from 1 to 5, and when l11 is 2 or higher, two or more L11s are the same as or different from each other,
X11 to X14 are each independently O; or S,
Z11 and Z12 are each independently a substituted or unsubstituted alkylene group; or a substituted or unsubstituted cycloalkylene group,
c and d are each independently an integer from 0 to 10, and when c and d are each 2 or higher, structures in each parenthesis are the same as or different from each other, and
* means a moiety linked to the main chain of the resin.

According to an exemplary embodiment of the present specification, Chemical Formula 1 is represented by the following Chemical Formula 1-1.

[Chemical Formula 1-1]

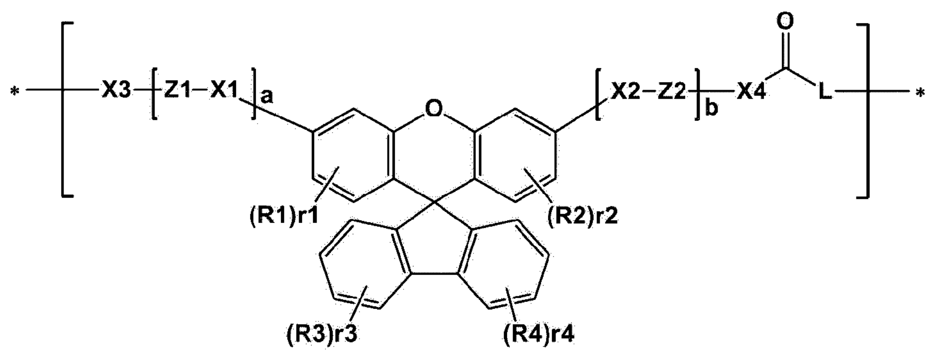

in Chemical Formula 1-1,
the definition of each substituent is the same as that defined in Chemical Formula 1.

According to an exemplary embodiment of the present specification, Chemical Formula 1 is represented by any one of the following Chemical Formulae 1-2 and 1-3.

[Chemical Formula 1-2]

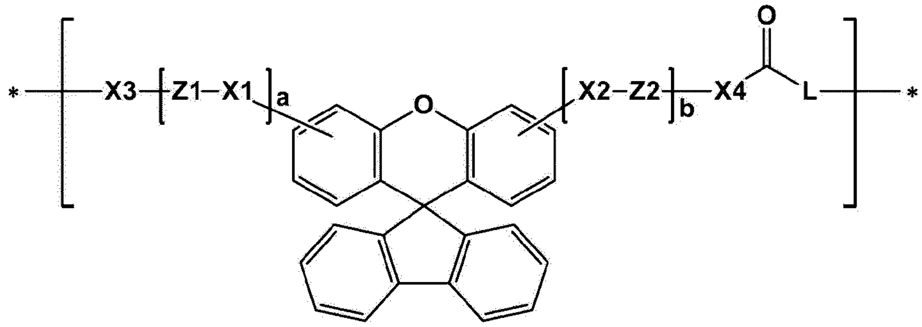

[Chemical Formula 1-3]

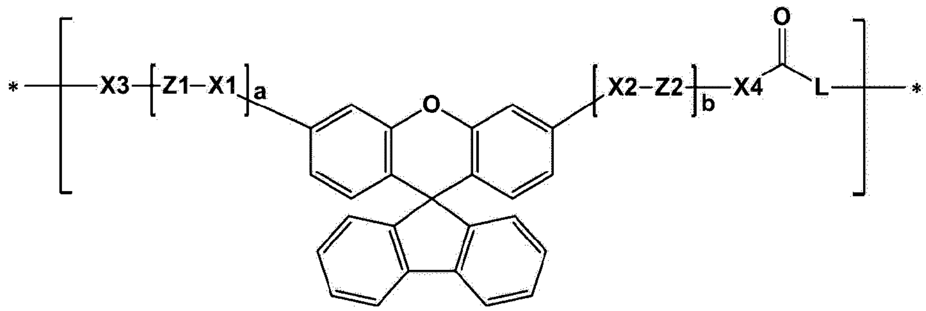

in Chemical Formulae 1-2 and 1-3,
the definition of each substituent is the same as that defined in Chemical Formula 1.

According to an exemplary embodiment of the present specification, L is a direct bond.
According to an exemplary embodiment of the present specification, L is a direct bond, and the resin is a polycarbonate resin.
According to an exemplary embodiment of the present specification, L is a direct bond, and the resin is a polyester-carbonate resin.
According to an exemplary embodiment of the present specification, L is -L'-C(=O)-.
According to an exemplary embodiment of the present specification, L is -L'-C(=O)-, and the resin is a polyester resin.
According to an exemplary embodiment of the present specification, L is -L'-C(=O)-, and the resin is a polyester-carbonate resin.
According to an exemplary embodiment of the present specification, L' is a monocyclic or polycyclic arylene group having 6 to 30 carbon atoms.
According to an exemplary embodiment of the present specification, L' is a monocyclic or polycyclic arylene group having 6 to 20 carbon atoms.
According to an exemplary embodiment of the present specification, L' is a phenylene group; or a naphthylene group.
According to an exemplary embodiment of the present specification, L' is a phenylene group.
According to an exemplary embodiment of the present disclosure, X1 to X4 are O.
According to an exemplary embodiment of the present disclosure, X1 to X4 are S.
According to an exemplary embodiment of the present specification, X1 and X2 are S, and X3 and X4 are O.
According to an exemplary embodiment of the present specification, X1 and X2 are O, and X3 and X4 are S.

According to an exemplary embodiment of the present specification, X1 is O.
According to an exemplary embodiment of the present specification, X2 is O.
According to an exemplary embodiment of the present specification, X3 is O.
According to an exemplary embodiment of the present specification, X4 is O.
According to an exemplary embodiment of the present specification, X1 is S.
According to an exemplary embodiment of the present specification, X2 is S.
According to an exemplary embodiment of the present specification, X3 is S.
According to an exemplary embodiment of the present specification, X4 is S.
According to an exemplary embodiment of the present specification, a is 1.
According to an exemplary embodiment of the present specification, b is 1.
According to an exemplary embodiment of the present specification, a is 2.
According to an exemplary embodiment of the present specification, b is 2.
According to an exemplary embodiment of the present specification, a is 3.
According to an exemplary embodiment of the present specification, b is 3.
When a and b are an integer from 1 to 10, the resin may have optimal fluidity and processability compared to when a and b are 0.
According to an exemplary embodiment of the present specification, Z1 and Z2 are the same as or different from each other, and are each independently a substituted or unsubstituted straight-chained or branched alkylene group having 1 to 30 carbon atoms; or a substituted or unsubstituted monocyclic or polycyclic cycloalkylene group having 3 to 30 carbon atoms.
According to an exemplary embodiment of the present specification, Z1 and Z2 are the same as or different from each other, and are each independently a substituted or unsubstituted straight-chained or branched alkylene group having 1 to 20 carbon atoms; or a substituted or unsubstituted monocyclic or polycyclic cycloalkylene group having 3 to 20 carbon atoms.
According to an exemplary embodiment of the present specification, Z1 and Z2 are the same as or different from each other, and are each independently a substituted or unsubstituted straight-chained or branched alkylene group having 1 to 10 carbon atoms; or a substituted or unsubstituted monocyclic or polycyclic cycloalkylene group having 3 to 10 carbon atoms.
According to an exemplary embodiment of the present specification, Z1 and Z2 are the same as or different from each other, and are each independently a substituted or unsubstituted straight-chained or branched alkylene group having 1 to 30 carbon atoms.
According to an exemplary embodiment of the present specification, Z1 and Z2 are the same as or different from each other, and are each independently a substituted or unsubstituted straight-chained or branched alkylene group having 1 to 20 carbon atoms.
According to an exemplary embodiment of the present specification, Z1 and Z2 are the same as or different from each other, and are each independently a substituted or unsubstituted straight-chained or branched alkylene group having 1 to 10 carbon atoms.
According to an exemplary embodiment of the present specification, Z1 and Z2 are the same as or different from each other, and are each independently a substituted or unsubstituted ethylene group.
According to an exemplary embodiment of the present specification, R1 to R4 are the same as or different from each other, and are each independently hydrogen; a substituted or unsubstituted straight-chained or branched alkyl group having 1 to 30 carbon atoms; a substituted or unsubstituted monocyclic or polycyclic cycloalkyl group having 3 to 30 carbon atoms; a substituted or unsubstituted monocyclic or polycyclic aryl group having 6 to 30 carbon atoms; or a monocyclic or polycyclic heteroaryl group having 2 to 30 carbon atoms, which is substituted or unsubstituted and includes one or more of O, S and N.
According to an exemplary embodiment of the present specification, R1 to R4 are the same as or different from each other, and are each independently hydrogen; a substituted or unsubstituted straight-chained or branched alkyl group having 1 to 20 carbon atoms; a substituted or unsubstituted monocyclic or polycyclic cycloalkyl group having 3 to 20 carbon atoms; a substituted or unsubstituted monocyclic or polycyclic aryl group having 6 to 20 carbon atoms; or a monocyclic or polycyclic heteroaryl group having 2 to 20 carbon atoms, which is substituted or unsubstituted and includes one or more of O, S and N.
According to an exemplary embodiment of the present specification, R1 to R4 are the same as or different from each other, and are each independently hydrogen; a substituted or unsubstituted straight-chained or branched alkyl group having 1 to 10 carbon atoms; a substituted or unsubstituted monocyclic or polycyclic cycloalkyl group having 3 to 10 carbon atoms; a substituted or unsubstituted monocyclic or polycyclic aryl group having 6 to 10 carbon atoms; or a monocyclic or polycyclic heteroaryl group having 2 to 10 carbon atoms, which is substituted or unsubstituted and includes one or more of O, S and N.
According to an exemplary embodiment of the present specification, R1 to R4 are each hydrogen.

According to an exemplary embodiment of the present specification, L1 is a direct bond.

According to an exemplary embodiment of the present specification, L1 is a direct bond, and the resin is a polycarbonate resin.

According to an exemplary embodiment of the present specification, L1 is a direct bond, and the resin is a polyester-carbonate resin.

According to an exemplary embodiment of the present specification, L1 is -L1'-C(=O)-.

According to an exemplary embodiment of the present specification, L1 is -L1'-C(=O)-, and the resin is a polyester resin.

According to an exemplary embodiment of the present specification, L1 is -L1'-C(=O)-, and the resin is a polyester-carbonate resin.

According to an exemplary embodiment of the present specification, L1' is a monocyclic or polycyclic arylene group having 6 to 30 carbon atoms.

According to an exemplary embodiment of the present specification, L1' is a monocyclic or polycyclic arylene group having 6 to 20 carbon atoms.

According to an exemplary embodiment of the present specification, L1' is a phenylene group; or a naphthylene group.

According to an exemplary embodiment of the present specification, L1' is a phenylene group.

According to an exemplary embodiment of the present specification, L11 is a substituted or unsubstituted straight-chained or branched alkylene group having 1 to 30 carbon atoms; a substituted or unsubstituted monocyclic or polycyclic cycloalkylene group having 3 to 30 carbon atoms; a divalent condensed ring group of a monocyclic or polycyclic aromatic hydrocarbon ring having 6 to 30 carbon atoms and an aliphatic hydrocarbon ring having 3 to 30 carbon atoms, which is unsubstituted or substituted with a monocyclic or polycyclic aryl group having 6 to 30 carbon atoms; or a monocyclic or polycyclic arylene group having 6 to 30 carbon atoms, which is unsubstituted or substituted with a straight-chained or branched alkyl group having 1 to 30 carbon atoms or a monocyclic or polycyclic aryl group having 6 to 30 carbon atoms.

According to an exemplary embodiment of the present specification, L11 is a substituted or unsubstituted straight-chained or branched alkylene group having 1 to 20 carbon atoms; a substituted or unsubstituted monocyclic or polycyclic cycloalkylene group having 3 to 20 carbon atoms; a divalent condensed ring group of a monocyclic or polycyclic aromatic hydrocarbon ring having 6 to 20 carbon atoms and an aliphatic hydrocarbon ring having 3 to 20 carbon atoms, which is unsubstituted or substituted with a monocyclic or polycyclic aryl group having 6 to 20 carbon atoms; or a monocyclic or polycyclic arylene group having 6 to 20 carbon atoms, which is unsubstituted or substituted with a straight-chained or branched alkyl group having 1 to 20 carbon atoms or a monocyclic or polycyclic aryl group having 6 to 20 carbon atoms.

According to an exemplary embodiment of the present specification, L11 is $C(CH_3)_2$; a phenylene group unsubstituted or substituted with a methyl group; a biphenylene group; a divalent naphthyl group; or a divalent fluorene group.

According to an exemplary embodiment of the present specification, L11 is a divalent condensed ring group of a monocyclic or polycyclic aromatic hydrocarbon ring having 6 to 30 carbon atoms and an aliphatic hydrocarbon ring having 3 to 30 carbon atoms, which is unsubstituted or substituted with a monocyclic or polycyclic aryl group having 6 to 30 carbon atoms; or a monocyclic or polycyclic arylene group having 6 to 30 carbon atoms, which is unsubstituted or substituted with a straight-chained or branched alkyl group having 1 to 30 carbon atoms or a monocyclic or polycyclic aryl group having 6 to 30 carbon atoms.

According to an exemplary embodiment of the present specification, L11 is a divalent condensed ring group of a monocyclic or polycyclic aromatic hydrocarbon ring having 6 to 20 carbon atoms and an aliphatic hydrocarbon ring having 3 to 20 carbon atoms, which is unsubstituted or substituted with a monocyclic or polycyclic aryl group having 6 to 20 carbon atoms; or a monocyclic or polycyclic arylene group having 6 to 20 carbon atoms, which is unsubstituted or substituted with a straight-chained or branched alkyl group having 1 to 20 carbon atoms or a monocyclic or polycyclic aryl group having 6 to 20 carbon atoms.

According to an exemplary embodiment of the present specification, L11 is a phenylene group unsubstituted or substituted with a methyl group; a biphenylene group; a fluorene group substituted with a naphthalene group; a phenylene group; a binaphthalene group; or bisphenol A.

According to an exemplary embodiment of the present specification, l11 is 1.

According to an exemplary embodiment of the present specification, l11 is 2, and two L11s are the same as or different from each other.

According to an exemplary embodiment of the present specification, l11 is 3, and three L11s are the same as or different from each other.

According to an exemplary embodiment of the present specification, l11 is 4, and the four L11s are the same as or different from each other.

According to an exemplary embodiment of the present specification, l11 is 5, and the five L11s are the same

as or different from each other.

According to an exemplary embodiment of the present specification, X11 is O.

According to an exemplary embodiment of the present specification, X12 is O.

According to an exemplary embodiment of the present specification, X13 is O.

According to an exemplary embodiment of the present specification, X14 is O.

According to an exemplary embodiment of the present specification, X11 to X14 are O.

According to an exemplary embodiment of the present specification, Z11 and Z12 are the same as or different from each other, and are each independently a straight-chained or branched alkylene group having 1 to 30 carbon atoms.

According to an exemplary embodiment of the present specification, Z11 and Z12 are the same as or different from each other, and are each independently a straight-chained or branched alkylene group having 1 to 20 carbon atoms.

According to an exemplary embodiment of the present specification, Z11 and Z12 are the same as or different from each other, and are each independently a straight-chained or branched alkylene group having 1 to 10 carbon atoms.

According to an exemplary embodiment of the present specification, Z11 and Z12 are an ethylene group.

According to an exemplary embodiment of the present specification, c is 1.

According to an exemplary embodiment of the present specification, d is 1.

According to an exemplary embodiment of the present specification, c is 0.

According to an exemplary embodiment of the present specification, d is 0.

According to an exemplary embodiment of the present specification, the resin may have -OH; -SH; $-CO_2CH_3$; or - $OC_6H_5$ as an end group.

According to an exemplary embodiment of the present specification, the unit of Chemical Formula 2 is at least any one of the following Chemical Formulae 2-1 to 2-4.

[Chemical Formula 2-1]

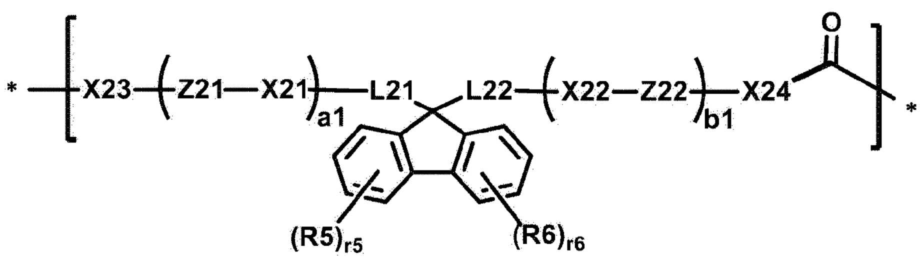

[Chemical Formula 2-2]

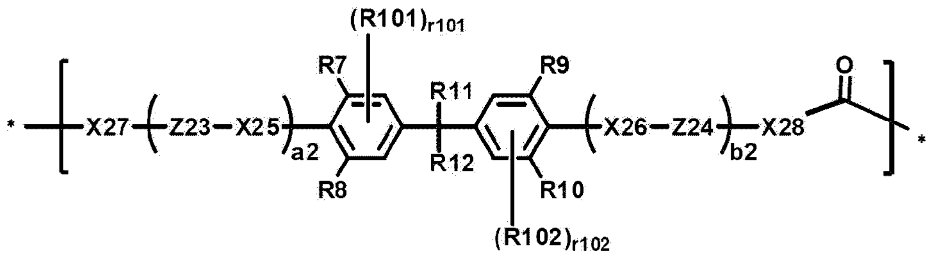

[Chemical Formula 2-3]

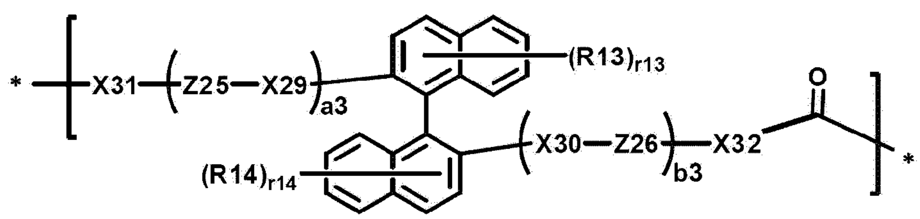

[Chemical Formula 2-4]

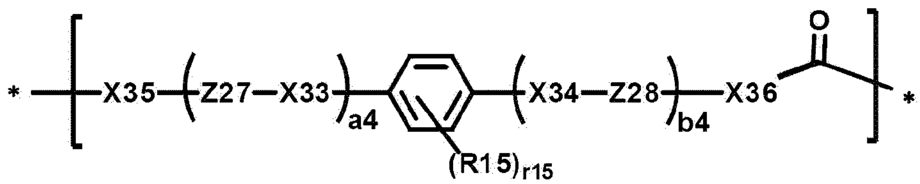

In Chemical Formulae 2-1 to 2-4,
X21 to X36 are the same as or different from each other, and are each independently O or S,
L21 and L22 are the same as or different from each other, and are each independently a substituted or unsubstituted arylene group; or a substituted or unsubstituted heteroarylene group,
Z21 to Z28 are the same as or different from each other, and are each independently a substituted or unsubstituted alkylene group; or a substituted or unsubstituted cycloalkylene group,
R5 to R10 and R13 to R15 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted aromatic hydrocarbon ring group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring group,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
a1 to a4 and b1 to b4 are each an integer from 0 to 10,
r5, r6, and r15 are each an integer from 0 to 4, and when r5, r6, and r15 are each 2 or higher, two or more of R5, R6, and R15 are each the same as or different from each other,
r13 and r14 are each an integer from 0 to 6, and when r13 and r14 are each 2 or higher, two or more of R13 and R14 are each the same as or different from each other,
r101 and r102 are each an integer from 0 to 2, and when r101 and r102 are each 2 or higher, two or more of R101 and R102 are each the same as or different from each other, and
* means a moiety linked to the main chain of the resin.

According to an exemplary embodiment of the present specification, Z21 to Z28 are the same as or different from each other, and are each independently a substituted or unsubstituted straight-chained or branched alkylene group having 1 to 30 carbon atoms; or a substituted or unsubstituted monocyclic or polycyclic cycloalkylene group having 3 to 30 carbon atoms.
According to an exemplary embodiment of the present specification, Z21 to Z28 are the same as or different from each other, and are each independently a substituted or unsubstituted straight-chained or branched alkylene group having 1 to 20 carbon atoms; or a substituted or unsubstituted monocyclic or polycyclic cycloalkylene group having 3 to 20 carbon atoms.
According to an exemplary embodiment of the present specification, Z21 to Z28 are the same as or different from each other, and are each independently a substituted or unsubstituted straight-chained or branched alkylene group having 1 to 10 carbon atoms; or a substituted or unsubstituted monocyclic or polycyclic cycloalkylene group having 3 to 10 carbon atoms.
According to an exemplary embodiment of the present specification, Z21 to Z28 are the same as or different from each other, and are each independently a substituted or unsubstituted straight-chained or branched alkylene group having 1 to 30 carbon atoms.
According to an exemplary embodiment of the present specification, Z21 to Z28 are the same as or different from each other, and are each independently a substituted or unsubstituted straight-chained or branched alkylene group having 1 to 20 carbon atoms.
According to an exemplary embodiment of the present specification, Z21 to Z28 are the same as or different from each other, and are each independently a substituted or unsubstituted straight-chained or branched alkylene group having 1 to 10 carbon atoms.
According to an exemplary embodiment of the present specification, Z21 to Z28 are the same as or different

from each other, and are each independently a substituted or unsubstituted ethylene group.

According to an exemplary embodiment of the present specification, R101 and R102 are the same as or different from each other, and are each independently hydrogen; a substituted or unsubstituted straight-chained or branched alkyl group having 1 to 30 carbon atoms; a substituted or unsubstituted monocyclic or polycyclic cycloalkyl group having 3 to 30 carbon atoms; a substituted or unsubstituted monocyclic or polycyclic aryl group having 6 to 30 carbon atoms; or a substituted or unsubstituted monocyclic or polycyclic heteroaryl group having 2 to 30 carbon atoms, which includes one or more of O, S and N.

According to an exemplary embodiment of the present specification, R101 and R102 are the same as or different from each other, and are each independently hydrogen; a substituted or unsubstituted straight-chained or branched alkyl group having 1 to 20 carbon atoms; a substituted or unsubstituted monocyclic or polycyclic cycloalkyl group having 3 to 20 carbon atoms; a substituted or unsubstituted monocyclic or polycyclic aryl group having 6 to 20 carbon atoms; or a substituted or unsubstituted monocyclic or polycyclic heteroaryl group having 2 to 20 carbon atoms, which includes one or more of O, S and N.

According to an exemplary embodiment of the present specification, R101 and R102 are the same as or different from each other, and are each independently hydrogen; a substituted or unsubstituted straight-chained or branched alkyl group having 1 to 10 carbon atoms; a substituted or unsubstituted monocyclic or polycyclic cycloalkyl group having 3 to 10 carbon atoms; a substituted or unsubstituted monocyclic or polycyclic aryl group having 6 to 10 carbon atoms; or a substituted or unsubstituted monocyclic or polycyclic heteroaryl group having 2 to 10 carbon atoms, which includes one or more of O, S and N.

According to an exemplary embodiment of the present specification, R101 and R102 are each independently hydrogen.

According to an exemplary embodiment of the present disclosure, X21 to X36 are O.

According to an exemplary embodiment of the present disclosure, X21 to X36 are S.

According to an exemplary embodiment of the present specification, X21 to X24 are O.

According to an exemplary embodiment of the present specification, X25 to X28 are O.

According to an exemplary embodiment of the present specification, X29 to X32 are O.

According to an exemplary embodiment of the present specification, X33 to X36 are O.

According to an exemplary embodiment of the present specification, X21 to X24 are S.

According to an exemplary embodiment of the present specification, X25 to X28 are S.

According to an exemplary embodiment of the present specification, X29 to X32 are S.

According to an exemplary embodiment of the present specification, X33 to X36 are S.

According to an exemplary embodiment of the present specification, L21 and L22 are each independently a monocyclic or polycyclic arylene group having 6 to 30 carbon atoms, which is unsubstituted or substituted with a hydroxyl group, a straight-chained or branched alkyl group having 1 to 30 carbon atoms, or a monocyclic or polycyclic aryl group having 6 to 30 carbon atoms.

According to an exemplary embodiment of the present specification, L21 and L22 are each independently a monocyclic or polycyclic arylene group having 6 to 20 carbon atoms, which is unsubstituted or substituted with a hydroxyl group, a straight-chained or branched alkyl group having 1 to 20 carbon atoms, or a monocyclic or polycyclic aryl group having 6 to 20 carbon atoms.

According to an exemplary embodiment of the present specification, L21 and L22 are each independently a phenylene group unsubstituted or substituted with a hydroxyl group, a methyl group, a phenyl group, or a naphthyl group; or a divalent naphthyl group.

According to an exemplary embodiment of the present specification, R5 to R10 and R13 to R15 are each independently hydrogen; a straight-chained or branched alkyl group having 1 to 30 carbon atoms; a substituted or unsubstituted monocyclic or polycyclic cycloalkyl group having 3 to 30 carbon atoms; a substituted or unsubstituted monocyclic or polycyclic aryl group having 6 to 30 carbon atoms; or a substituted or unsubstituted monocyclic or polycyclic heteroaryl group having 2 to 30 carbon atoms, which includes one or more of O, S and N, or are bonded to an adjacent group to form a monocyclic or polycyclic aromatic hydrocarbon ring having 6 to 30 carbon atoms.

According to an exemplary embodiment of the present specification, R5 to R10 and R13 to R15 are the same as or different from each other, and are each independently hydrogen; a straight-chained or branched alkyl group having 1 to 20 carbon atoms; a substituted or unsubstituted monocyclic or polycyclic cycloalkyl group having 3 to 20 carbon atoms; a substituted or unsubstituted monocyclic or polycyclic aryl group having 6 to 20 carbon atoms; or a substituted or unsubstituted monocyclic or polycyclic heteroaryl group having 2 to 20 carbon atoms, which includes one or more of O, S and N, or are bonded to an adjacent group to form a monocyclic or polycyclic aromatic hydrocarbon ring having 6 to 20 carbon atoms.

According to an exemplary embodiment of the present specification, R5 to R10 and R13 to R15 are the same as or different from each other, and are each independently hydrogen; a substituted or unsubstituted monocyclic or polycyclic aryl group having 6 to 30 carbon atoms; or a substituted or unsubstituted monocyclic or polycyclic heteroaryl

group having 2 to 30 carbon atoms, which includes one or more of O, S and N, or are bonded to an adjacent group to form a monocyclic or polycyclic aromatic hydrocarbon ring having 6 to 30 carbon atoms.

According to an exemplary embodiment of the present specification, R5 to R10 and R13 to R15 are the same as or different from each other, and are each independently hydrogen; a substituted or unsubstituted monocyclic or polycyclic aryl group having 6 to 20 carbon atoms; or a substituted or unsubstituted monocyclic or polycyclic heteroaryl group having 2 to 20 carbon atoms, which includes one or more of O, S and N, or are bonded to an adjacent group to form a monocyclic or polycyclic aromatic hydrocarbon ring having 6 to 20 carbon atoms.

According to an exemplary embodiment of the present specification, R5 to R10 and R13 to R15 are the same as or different from each other, and are each independently hydrogen; a substituted or unsubstituted monocyclic or polycyclic aryl group having 6 to 30 carbon atoms; or a substituted or unsubstituted monocyclic or polycyclic heteroaryl group having 2 to 30 carbon atoms, which includes one or more of O, S and N, or are bonded to an adjacent group to form a monocyclic or polycyclic aromatic hydrocarbon ring having 6 to 30 carbon atoms.

According to an exemplary embodiment of the present specification, R5 to R10 and R13 to R15 are the same as or different from each other, and are each independently hydrogen; a substituted or unsubstituted monocyclic or polycyclic aryl group having 6 to 20 carbon atoms; or a substituted or unsubstituted monocyclic or polycyclic heteroaryl group having 2 to 20 carbon atoms, which includes one or more of O, S and N, or are bonded to an adjacent group to form a monocyclic or polycyclic aromatic hydrocarbon ring having 6 to 20 carbon atoms.

According to an exemplary embodiment of the present specification, R5 to R10 and R13 to R15 are the same as or different from each other, and are each independently hydrogen; a phenyl group; or a naphthyl group, or are bonded to an adjacent group to form a benzene.

According to an exemplary embodiment of the present specification, R5 to R10 and R13 to R15 are the same as or different from each other, and are each independently hydrogen.

According to an exemplary embodiment of the present specification, R11 and R12 are the same as or different from each other, and are each independently hydrogen; a straight-chained or branched alkyl group having 1 to 30 carbon atoms; a monocyclic or polycyclic cycloalkyl group having 6 to 30 carbon atoms; a monocyclic or polycyclic aryl group having 6 to 30 carbon atoms; or a monocyclic or polycyclic heteroaryl group having 2 to 30 carbon atoms, or are bonded to each other to form a monocyclic or polycyclic aliphatic hydrocarbon ring having 6 to 30 carbon atoms, which is unsubstituted or substituted with a straight-chained or branched alkyl group having 1 to 30 carbon atoms.

According to an exemplary embodiment of the present specification, R11 and R12 are the same as or different from each other, and are each independently hydrogen; a straight-chained or branched alkyl group having 1 to 20 carbon atoms; a monocyclic or polycyclic cycloalkyl group having 6 to 20 carbon atoms; a monocyclic or polycyclic aryl group having 6 to 20 carbon atoms; or a monocyclic or polycyclic heteroaryl group having 2 to 20 carbon atoms, or are bonded to each other to form a monocyclic or polycyclic aliphatic hydrocarbon ring having 6 to 20 carbon atoms, which is unsubstituted or substituted with a straight-chained or branched alkyl group having 1 to 20 carbon atoms.

According to an exemplary embodiment of the present specification, R11 and R12 are the same as or different from each other, and are each independently hydrogen; a methyl group; or a phenyl group, or are bonded to each other to form a cyclohexane unsubstituted or substituted with a methyl group; or a cyclododecane.

According to an exemplary embodiment of the present specification, R11 and R12 are the same as or different from each other, and are each independently hydrogen; a methyl group; or a phenyl group.

According to an exemplary embodiment of the present specification, R11 and R12 are the same as or different from each other, and are each independently a methyl group.

According to an exemplary embodiment of the present specification, the resin is a polycarbonate resin, a polyester resin, or a polyester-carbonate resin, which includes the unit of Chemical Formula 1 and the unit of Chemical Formula 2.

According to an exemplary embodiment of the present specification, the resin is a polycarbonate resin including the unit of Chemical Formula 1 and the unit of Chemical Formula 2.

According to an exemplary embodiment of the present specification, the resin is a polycarbonate resin, L of Chemical Formula 1 is a direct bond, and L1 of Chemical Formula 2 is a direct bond.

According to an exemplary embodiment of the present specification, the resin is a polycarbonate resin, Chemical Formula 1 is represented by the following Chemical Formula 1-C, and Chemical Formula 2 is represented by the following Chemical Formula 2-C.

[Chemical Formula 1-C]

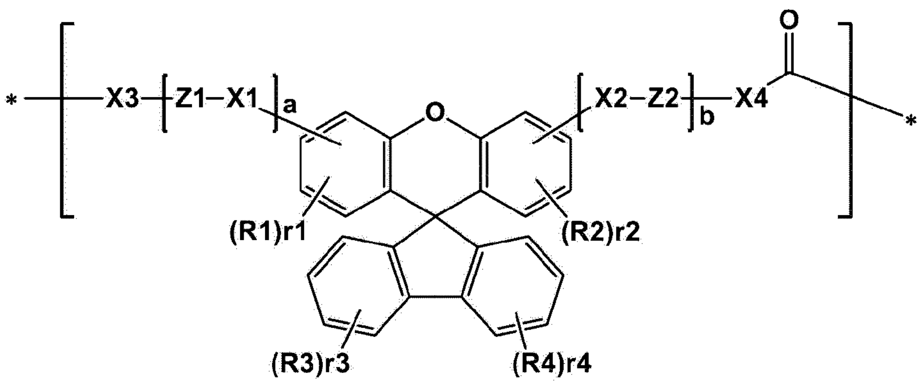

[Chemical Formula 2-C]

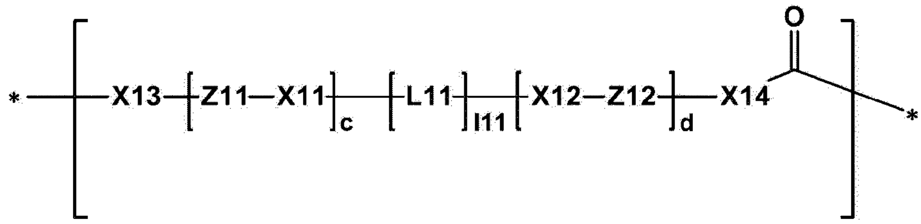

in Chemical Formulae 1-C and 2-C,
the definition of each substituent is the same as that defined in Chemical Formulae 1 and 2.

According to an exemplary embodiment of the present specification, the resin is a polycarbonate resin, and Chemical Formula 1 is represented by the following Chemical Formula 1-C-1.

[Chemical Formula 1-C-1]

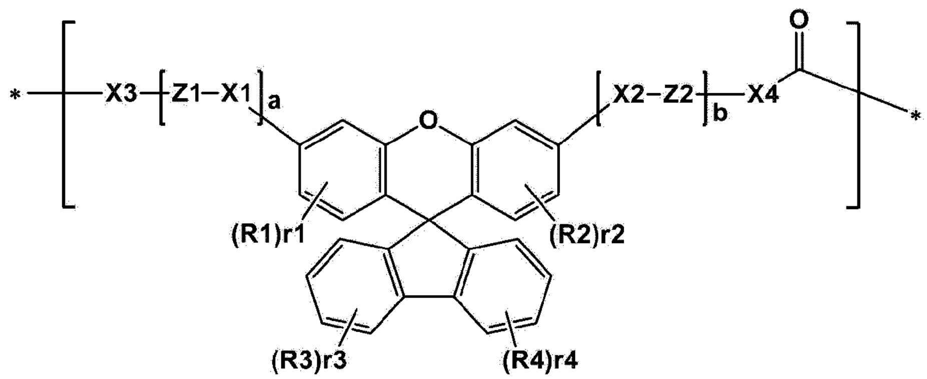

in Chemical Formula 1-C-1,
the definition of each substituent is the same as that defined in Chemical Formula 1.

According to an exemplary embodiment of the present specification, the resin is a polycarbonate resin, and Chemical Formula 1 is any one of the following Chemical Formulae 1-C-2 and 1-C-3.

[Chemical Formula 1-C-2]

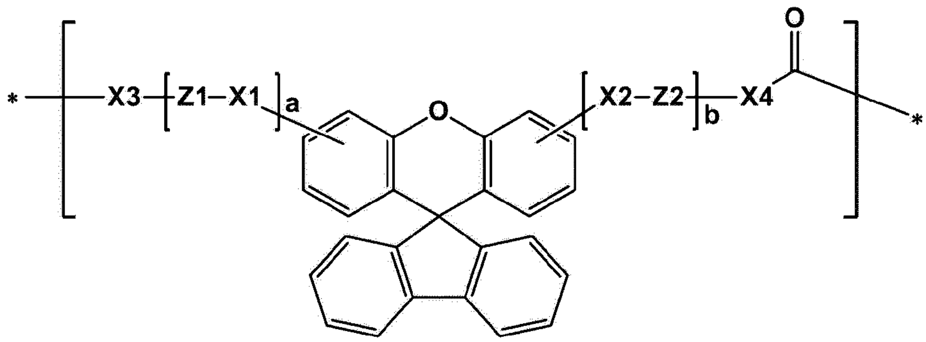

[Chemical Formula 1-C-3]

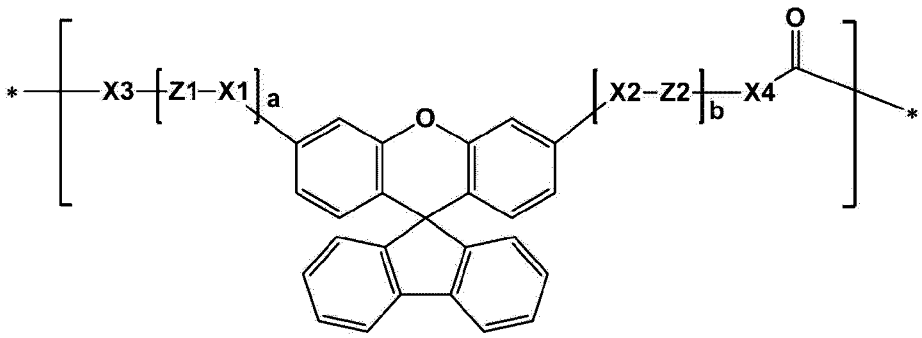

in Chemical Formulae 1-C-2 and 1-C-3,
the definition of each substituent is the same as that defined in Chemical Formula 1.

According to an exemplary embodiment of the present specification, the resin is a polycarbonate resin, and Chemical Formula 2 is represented by the following Chemical Formula 3-1 or 3-2.

[Chemical Formula 3-1]

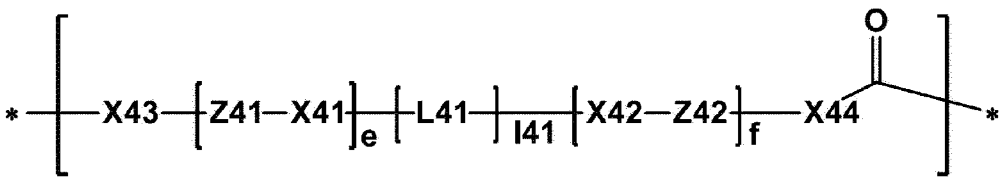

[Chemical Formula 3-2]

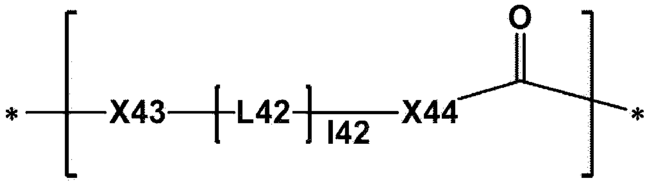

in Chemical Formulae 3-1 and 3-2,

l41 and l42 are each independently an integer from 1 to 5,

when l41 is 1 or 2, L41 is a substituted or unsubstituted monocyclic arylene group,

when l41 is an integer from 3 to 5, L41 is a substituted or unsubstituted polycyclic arylene group,

L42 is a substituted or unsubstituted polycyclic arylene group,

X41 to X44 are each independently O; or S,

Z41 and Z42 are each independently a substituted or unsubstituted alkylene group; or a substituted or unsubstituted cycloalkylene group,

e and f are each independently an integer from 1 to 10, and when e and f are each 2 or higher, structures in each parenthesis are the same as or different from each other, and

* means a moiety linked to the main chain of the resin.

The specific description on X41 to X44, Z41 and Z42 is the same as that on X11 to X14, Z11 and Z12 in Chemical Formula 2.

The specific description on L41 and L42 is the same as the description among the descriptions on L11 in Chemical Formula 2 according to the repeating number l41 as long as it satisfies the above conditions.

According to an exemplary embodiment of the present specification, when l41 is 1 or 2, L41 is a substituted or unsubstituted phenylene group.

According to an exemplary embodiment of the present specification, when l41 is 1 or 2, L41 is a phenylene group unsubstituted or substituted with a methyl group.

According to an exemplary embodiment of the present specification, when l41 is an integer from 3 to 5, L41 is a substituted or unsubstituted divalent naphthyl group; or a substituted or unsubstituted divalent fluorene group.

According to an exemplary embodiment of the present specification, when l41 is an integer from 3 to 5, L41 is a divalent naphthyl group; or a divalent fluorene group.

According to an exemplary embodiment of the present specification, L42 is a substituted or unsubstituted divalent naphthyl group.

According to an exemplary embodiment of the present specification, L42 is a divalent naphthyl group.

According to an exemplary embodiment of the present specification, the resin is a polycarbonate resin, and when the polycarbonate resin has a thickness of 1 mm or less, the polycarbonate resin has a yellow index (YI) of 20 or less.

Since the polycarbonate resin having a low yellow index (YI) of 20 or less can implement various colors, the polycarbonate resin may provide optical products with various colors, and is particularly suitable for optical materials that require high transparency.

The yellow index (YI) according to an exemplary embodiment of the present specification is measured in accordance with ASTM D1925 for a specimen in which a polycarbonate resin has a thickness of 1 mm.

For the specimen, a specimen with a length, a width and a thickness of 50 mm, 50 mm and 1 mm or less, respectively may be prepared by supplying a polycarbonate composition to a twin-screw extruder (L/D=36, Φ=45, barrel temperature 240°C) at a rate of 55 kg per hour to produce pellets, and then injection-molding the pellets to an injection molding machine (manufactured by Hankuk Hydraulic Machine, HMW-016S-15t).

According to an exemplary embodiment of the present specification, the resin is a polycarbonate resin, and when the polycarbonate resin has a thickness of 1 mm or less, the polycarbonate resin has a yellow index (YI) of 0 or more and 20 or less.

According to an exemplary embodiment of the present specification, the resin is a polycarbonate resin, and when the polycarbonate resin has a thickness of 1 mm or less, the polycarbonate resin has a yellow index (YI) of 1 or more and 19 or less, 2 or more and 18 or less, or 3 or more and 17 or less.

According to an exemplary embodiment of the present specification, the resin is a polycarbonate resin, and when the polycarbonate resin has a thickness of 1 mm or less, the polycarbonate resin has a yellow index (YI) of 8 or less.

According to an exemplary embodiment of the present specification, the resin is a polycarbonate resin, and when the polycarbonate resin has a thickness of 1 mm or less, the polycarbonate resin has a yellow index (YI) of 0 or more and 8 or less, or 1 or more and 8 or less.

According to an exemplary embodiment of the present specification, the polycarbonate resin may have a thickness of 1 mm or less, 0.9 mm or less, 0.8 mm or less, 0.7 mm or less, 0.6 mm or less, or 0.5 mm or less. The polycarbonate resin may have a thickness of more than 0 mm.

When the polycarbonate resin has a thickness of 1 mm or less, in the case where the yellow index (YI) satisfies a range of 20 or less, the polycarbonate resin can implement various colors due to the low yellow index, and thus may provide optical products with various colors, and is particularly suitable for optical materials that require high transparency.

When the polycarbonate resin has a thickness of 1 mm or less, in the case where the yellow index (YI) is within a range of more than 20, the polycarbonate resin may be limited in use for optical products because high transparency and variety of colors cannot be expected.

According to an exemplary embodiment of the present specification, the terminal of the polycarbonate resin is a phenoxy group, and the concentration of the terminal phenoxy group is 3000 ppm or more. Specifically, the concentration of the terminal phenoxy group is 3,500 ppm to 5,500 ppm, more specifically 4,000 ppm to 5,000 ppm.

When the concentration of the terminal phenoxy group is 3,000 ppm or more, processability is improved, so that injectability is excellent.

In the present specification, the concentration of the terminal phenoxy group may be calculated as follows. First, 0.25 g of pellets are dried and dissolved in 10 ml of methylene chloride, then 40 ml of triethylamine is added thereto, and the resulting mixture is allowed to penetrate and react with 0.04 g of anthraquinone carboxylic acid anhydride at room temperature. Thereafter, the reaction product is washed with water, excess anthraquinone carboxylic acid anhydride is removed, methylene chloride is removed from the organic layer, and the resulting solid is subjected to GPC analysis using a GPC system (Shodex GPC system-11 manufactured by Showa Denko K.K.) that is equipped with a UV detector (UV wavelength: 325 nm). Based on one-point calibration curve method established by using a sample with known terminal phenoxy group concentration, a peak area is obtained, and then the phenoxy group concentration is calculated from the peak area.

According to an exemplary embodiment of the present specification, the content of the terminal phenoxy group is 5 wt% or less based on 100 wt% of the polycarbonate resin.

According to an exemplary embodiment of the present specification, the content of the terminal phenoxy group is 0 wt% to 5 wt% based on 100 wt% of the polycarbonate resin. According to an exemplary embodiment of the present specification, the content of the terminal phenoxy group is 1 wt% to 4 wt%, or 2 wt% to 3 wt% based on 100 wt% of the polycarbonate resin. When the resin satisfies the content range of the terminal phenoxy group, the processability of the polycarbonate resin is improved, so that the injectability is excellent.

According to an exemplary embodiment of the present specification, the resin is a polyester resin including the unit of Chemical Formula 1 and the unit of Chemical Formula 2.

According to an exemplary embodiment of the present specification, the resin is a polyester resin, Chemical Formula 1 is represented by the following Chemical Formula 11, and Chemical Formula 2 is represented by the following Chemical Formula 12.

[Chemical Formula 11]

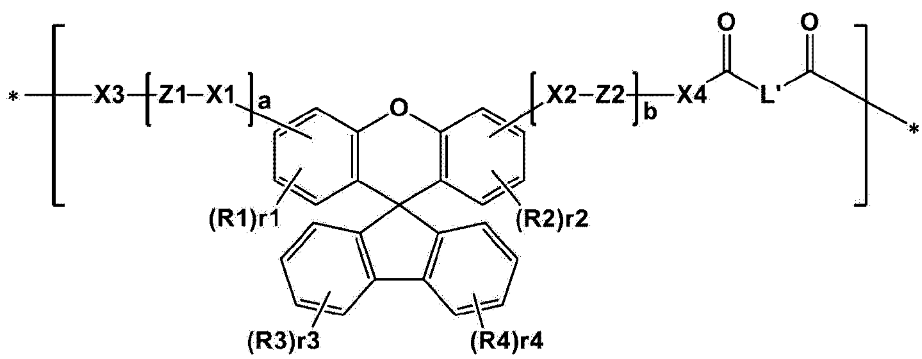

in Chemical Formula 11,
the definition of each substituent is the same as that defined in Chemical Formula 1,

[Chemical Formula 12]

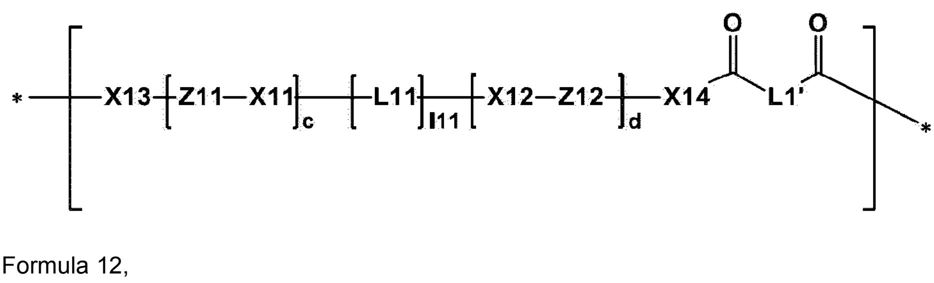

in Chemical Formula 12,

the definition of each substituent is the same as that defined in Chemical Formula 2.

According to an exemplary embodiment of the present specification, the resin is a polyester resin, and Chemical Formula 1 is represented by the following Chemical Formula 11-1.

[Chemical Formula 11-1]

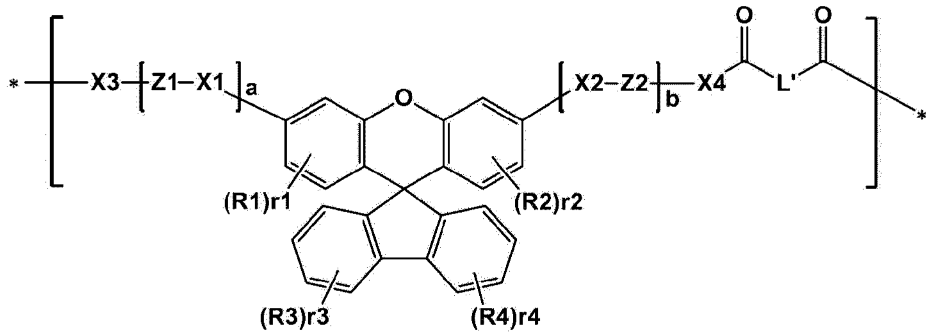

in Chemical Formula 11-1,
the definition of each substituent is the same as that defined in Chemical Formula 1.

According to an exemplary embodiment of the present specification, the resin is a polyester resin, and Chemical Formula 1 is any one of the following Chemical Formulae 11-2 and 11-3.

[Chemical Formula 11-2]

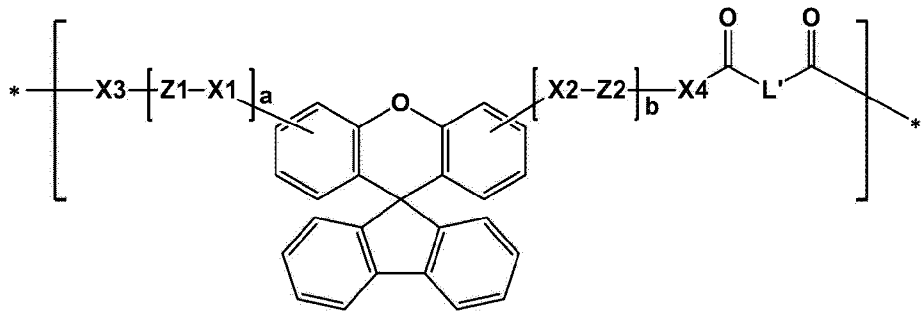

[Chemical Formula 11-3]

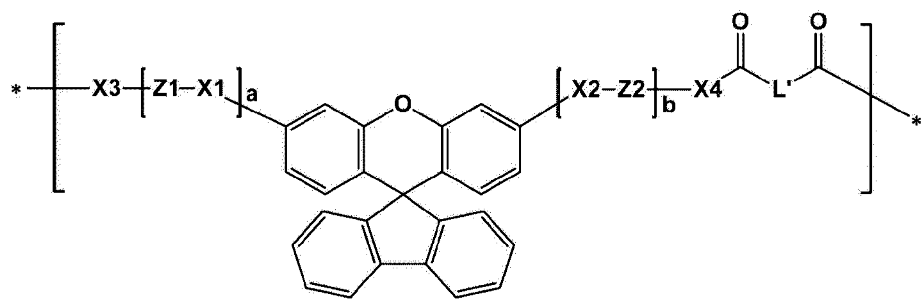

in Chemical Formulae 11-2 and 11-3,
the definition of each substituent is the same as that defined in Chemical Formula 1.

According to an exemplary embodiment of the present specification, the resin may be a polyester-carbonate resin including the unit of Chemical Formula 1 and the unit of Chemical Formula 2.

The polyester-carbonate resin is advantageous in terms of heat resistance compared to the polycarbonate resin, which is because the resin including a polyester resin has a strong linear chain caused by an arylene group and relative flexibility deteriorates due to the resonance effect.

According to an exemplary embodiment of the present specification, the resin is a polyester-carbonate resin, and the polyester-carbonate resin includes a unit of the following Chemical Formula 21.

[Chemical Formula 21]

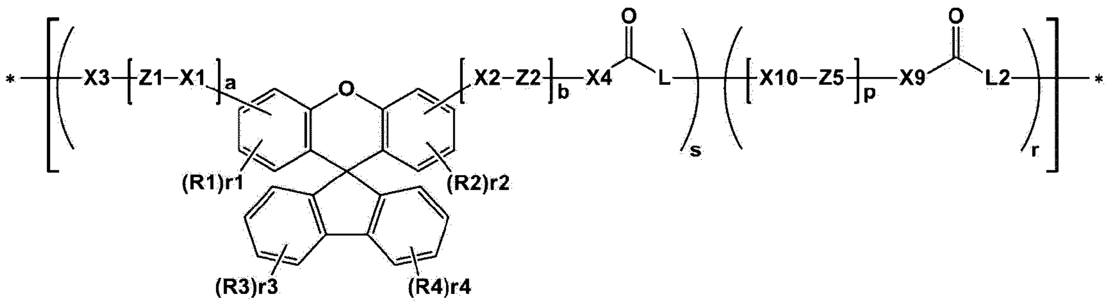

in Chemical Formula 21,

the definitions of L, X1 to X4, Z1, Z2, a, b, R1 to R4 and r1 to r4 are the same as those defined in Chemical Formula 1,

L2 is a direct bond; or -L2'-C(=O)-,

L2' is a substituted or unsubstituted arylene group,

X9 and X10 are each independently O or S,

Z5 is a substituted or unsubstituted alkylene group; or a substituted or unsubstituted cycloalkylene group,

p is an integer from 0 to 6, and when p is 2 or higher, structures in each parenthesis are the same as or different from each other,

r is a real number of $0 \leq r < 1$ as a mole fraction,

s is a real number of 0 < s d 1 as a mole fraction,

r+s=1, and

* means a moiety linked to the main chain of the resin.

According to an exemplary embodiment of the present specification, the unit of Chemical Formula 21 includes the unit of Chemical Formula 1.

According to an exemplary embodiment of the present specification, p is 0.

According to an exemplary embodiment of the present specification, p is 1.

According to an exemplary embodiment of the present specification, L2 is a direct bond.

According to an exemplary embodiment of the present specification, L2 is -L2'-C(=O)-.

According to an exemplary embodiment of the present specification, L2' is a monocyclic or polycyclic arylene group having 6 to 30 carbon atoms.

According to an exemplary embodiment of the present specification, L2' is a monocyclic or polycyclic arylene group having 6 to 20 carbon atoms.

According to an exemplary embodiment of the present specification, L2' is a phenylene group; or a naphthylene group.

According to an exemplary embodiment of the present specification, L2' is a phenylene group.

According to an exemplary embodiment of the present specification, L is a direct bond, and L2 is -L2'-C(=O)-.

According to an exemplary embodiment of the present specification, L is -L'-C(=O)-, and L2 is a direct bond.

According to an exemplary embodiment of the present specification, Z5 is a substituted or unsubstituted straight-chained or branched alkylene group having 1 to 30 carbon atoms; or a substituted or unsubstituted monocyclic or polycyclic cycloalkylene group having 3 to 30 carbon atoms.

According to an exemplary embodiment of the present specification, Z5 is a substituted or unsubstituted straight-chained or branched alkylene group having 1 to 20 carbon atoms; or a substituted or unsubstituted monocyclic or polycyclic cycloalkylene group having 3 to 20 carbon atoms.

According to an exemplary embodiment of the present specification, Z5 is a substituted or unsubstituted straight-chained or branched alkylene group having 1 to 10 carbon atoms; or a substituted or unsubstituted monocyclic or

polycyclic cycloalkylene group having 3 to 10 carbon atoms.

According to an exemplary embodiment of the present specification, Z5 is a substituted or unsubstituted straight-chained or branched alkylene group having 1 to 30 carbon atoms.

According to an exemplary embodiment of the present specification, Z5 is a substituted or unsubstituted straight-chained or branched alkylene group having 1 to 20 carbon atoms.

According to an exemplary embodiment of the present specification, Z5 is a substituted or unsubstituted straight-chained or branched alkylene group having 1 to 10 carbon atoms.

According to an exemplary embodiment of the present specification, Z5 is a substituted or unsubstituted ethylene group.

According to an exemplary embodiment of the present disclosure, X9 and X10 are O.

According to an exemplary embodiment of the present disclosure, X9 and X10 are S.

According to an exemplary embodiment of the present specification, X1 to X4, X9 and X10 are O.

According to an exemplary embodiment of the present specification, X1 to X4, X9 and X10 are S.

According to an exemplary embodiment of the present specification, X1 to X4 are S, and X9 and X10 are O.

According to an exemplary embodiment of the present specification, X1 to X4 are O, and X9 and X10 are S.

According to an exemplary embodiment of the present specification, X9 is O.

According to an exemplary embodiment of the present specification, X10 is O.

According to an exemplary embodiment of the present specification, X9 is S.

According to an exemplary embodiment of the present specification, X10 is S.

According to an exemplary embodiment of the present specification, r is 0 to 0.999 as a mole fraction, s is 0.001 to 1 as a mole fraction, preferably, r is 0 to 0.99 and s is 0.01 to 1, and more preferably, r is 0 to 0.9 and s is 0.1 to 1.

According to an exemplary embodiment of the present specification, r is 0.001 to 0.999 as a mole fraction, s is 0.001 to 0.999 as a mole fraction, preferably, r is 0.01 to 0.99 and s is 0.01 to 0.99, and more preferably, r is 0.1 to 0.9 and s is 0.1 to 0.9.

When r and s of Chemical Formula 21 are within the above ranges, a polyester-carbonate resin having desired physical properties may be obtained by appropriately adjusting r and s, which are the mole fractions.

According to an exemplary embodiment of the present specification, Chemical Formula 21 is any one of the following Chemical Formulae 21-A to 21-D.

[Chemical Formula 21-A]

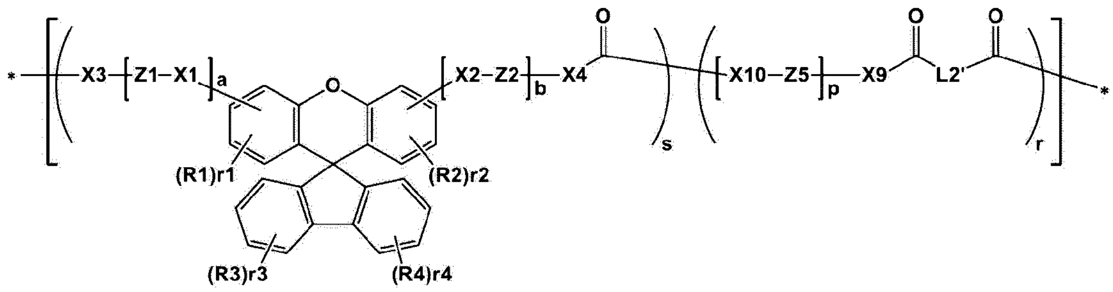

[Chemical Formula 21-B]

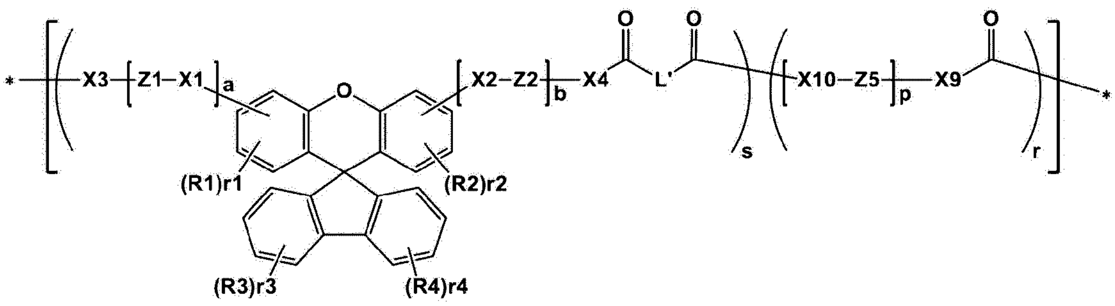

[Chemical Formula 21-C]

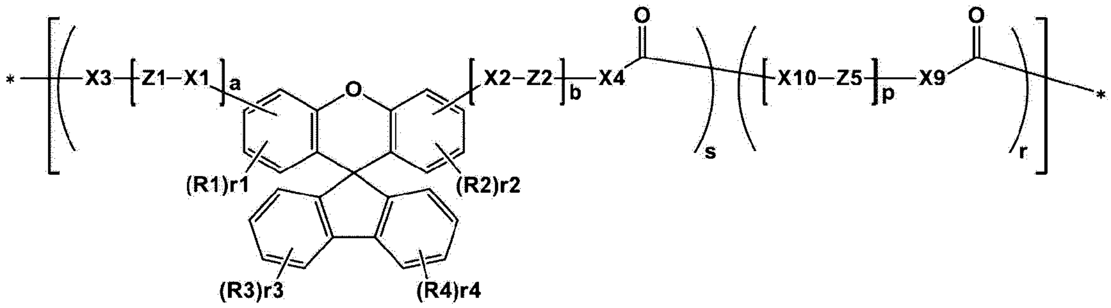

[Chemical Formula 21-D]

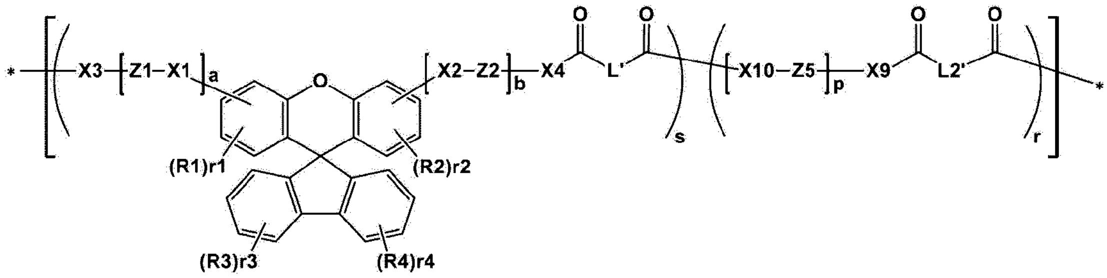

in Chemical Formulae 21-A to 21-D,
the definition of each substituent is the same as that defined in Chemical Formula 21.

According to an exemplary embodiment of the present specification, Chemical Formula 21 is the following Chemical Formula 21-1.

[Chemical Formula 21-1]

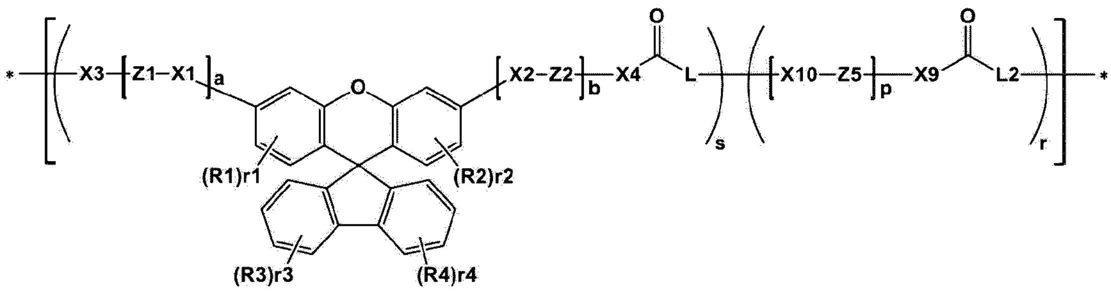

in Chemical Formula 21-1,
the definition of each substituent is the same as that defined in Chemical Formula 21.

According to an exemplary embodiment of the present specification, Chemical Formula 21 is any one of the following Chemical Formulae 21-2 and 21-3.

[Chemical Formula 21-2]

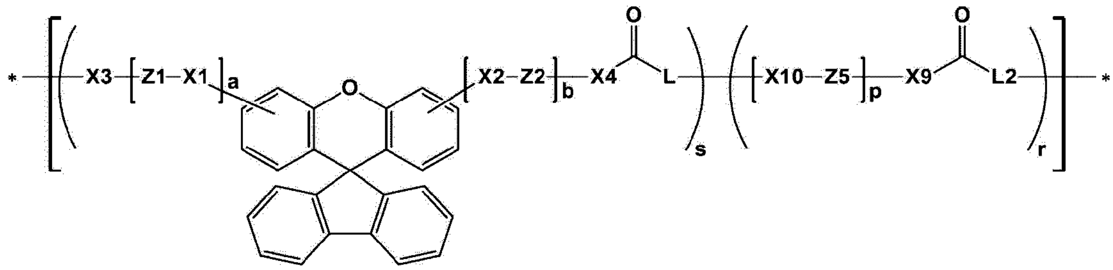

[Chemical Formula 21-3]

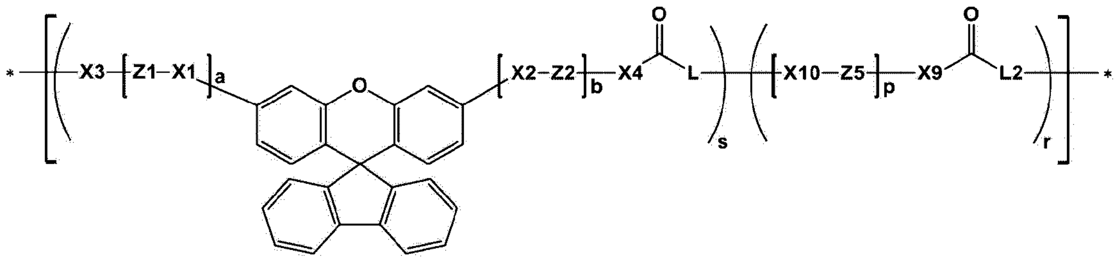

in Chemical Formulae 21-2 and 21-3,
the definition of each substituent is the same as that defined in Chemical Formula 21.

According to an exemplary embodiment of the present specification, the resin is a polyester-carbonate resin, and the polyester-carbonate resin includes a unit of the following Chemical Formula 22.

[Chemical Formula 22]

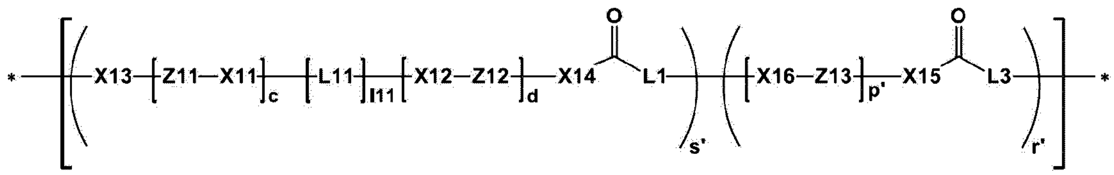

in Chemical Formula 22,
the definitions of L1, L11, l11, X11 to X14, Z11, Z12, c and d are the same as those defined in Chemical Formula 2,
L3 is a direct bond; or -L3'-C(=O)-,
L3' is a substituted or unsubstituted arylene group,
X15 and X16 are each independently O or S,
Z13 is a substituted or unsubstituted alkylene group; or a substituted or unsubstituted cycloalkylene group,
p' is an integer from 0 to 6, and when p' is 2 or higher, structures in each parenthesis are the same as or different from each other,
r' is a real number of $0 \leq r' < 1$ as a mole fraction,
s' is a real number of $0 < s' \leq 1$ as a mole fraction,
$r' + s' = 1$, and
* means a moiety linked to the main chain of the resin.

According to an exemplary embodiment of the present specification, the unit of Chemical Formula 22 includes the unit of Chemical Formula 2.

According to an exemplary embodiment of the present specification, p' is 0.

According to an exemplary embodiment of the present specification, p' is 1.

According to an exemplary embodiment of the present specification, L3 is a direct bond.

According to an exemplary embodiment of the present specification, L3 is -L3'-C(=O)-.

According to an exemplary embodiment of the present specification, L3' is a monocyclic or polycyclic arylene group having 6 to 30 carbon atoms.

According to an exemplary embodiment of the present specification, L3' is a monocyclic or polycyclic arylene group having 6 to 20 carbon atoms.

According to an exemplary embodiment of the present specification, L3' is a monocyclic or polycyclic arylene group having 6 to 10 carbon atoms.

According to an exemplary embodiment of the present specification, L3' is a phenylene group; or a naphthylene group.

According to an exemplary embodiment of the present specification, L3' is a phenylene group.

According to an exemplary embodiment of the present specification, L1 and L3 are a direct bond.

According to an exemplary embodiment of the present specification, L1 is -L1'-C(=O)-, and L3 is -L3'-C(=O)-.

According to an exemplary embodiment of the present specification, L1 is a direct bond, and L3 is -L3'-C(=O)-.

According to an exemplary embodiment of the present specification, L1 is -L1'-C(=O)-, and L3 is a direct bond.

According to an exemplary embodiment of the present specification, Z13 is a substituted or unsubstituted straight-chained or branched alkylene group having 1 to 30 carbon atoms; or a substituted or unsubstituted monocyclic or polycyclic cycloalkylene group having 3 to 30 carbon atoms.

According to an exemplary embodiment of the present specification, Z13 is a substituted or unsubstituted straight-chained or branched alkylene group having 1 to 20 carbon atoms; or a substituted or unsubstituted monocyclic or polycyclic cycloalkylene group having 3 to 20 carbon atoms.

According to an exemplary embodiment of the present specification, Z13 is a substituted or unsubstituted straight-chained or branched alkylene group having 1 to 10 carbon atoms; or a substituted or unsubstituted monocyclic or polycyclic cycloalkylene group having 3 to 10 carbon atoms.

According to an exemplary embodiment of the present specification, Z13 is a substituted or unsubstituted straight-chained or branched alkylene group having 1 to 30 carbon atoms.

According to an exemplary embodiment of the present specification, Z13 is a substituted or unsubstituted straight-chained or branched alkylene group having 1 to 20 carbon atoms.

According to an exemplary embodiment of the present specification, Z13 is a substituted or unsubstituted straight-chained or branched alkylene group having 1 to 10 carbon atoms.

According to an exemplary embodiment of the present specification, Z13 is a substituted or unsubstituted ethylene group.

According to an exemplary embodiment of the present disclosure, X15 and X16 are O.

According to an exemplary embodiment of the present disclosure, X15 and X16 are S.

According to an exemplary embodiment of the present specification, X11 to X16 are O.

According to an exemplary embodiment of the present specification, X11 to X16 are S.

According to an exemplary embodiment of the present specification, X11 to X14 are S, and X15 and X16 are O.

According to an exemplary embodiment of the present specification, X11 to X14 are O, and X15 and X16 are S.

According to an exemplary embodiment of the present specification, X15 is O.

According to an exemplary embodiment of the present specification, X16 is O.

According to an exemplary embodiment of the present specification, X15 is S.

According to an exemplary embodiment of the present specification, X16 is S.

According to an exemplary embodiment of the present specification, r' is 0 to 0.999 as a mole fraction, s' is 0.001 to 1 as a mole fraction, preferably, r' is 0 to 0.99, s' is 0.01 to 1, and more preferably, r' is 0 to 0.9, and s' is 0.1 to 1.

According to an exemplary embodiment of the present specification, r' is 0.001 to 0.999 as a mole fraction, s' is 0.001 to 0.999 as a mole fraction, preferably, r' is 0.01 to 0.99 and s' is 0.01 to 0.99, and more preferably, r' is 0.1 to 0.9 and s' is 0.1 to 0.9.

When r' and s' of Chemical Formula 22 are within the above ranges, a polyester-carbonate resin having desired physical properties may be obtained by appropriately adjusting r' and s', which are the mole fractions.

According to an exemplary embodiment of the present specification, Chemical Formula 22 is any one of the following Chemical Formulae 22-A to 22-D.

[Chemical Formula 22-A]

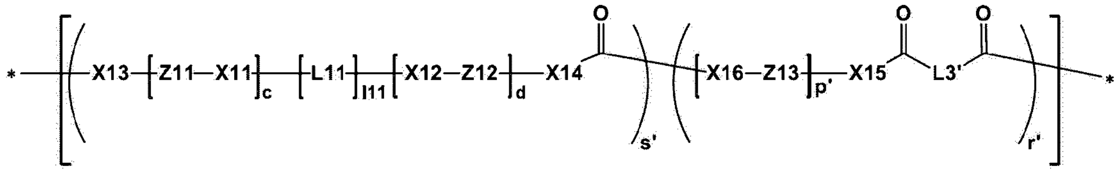

[Chemical Formula 22-B]

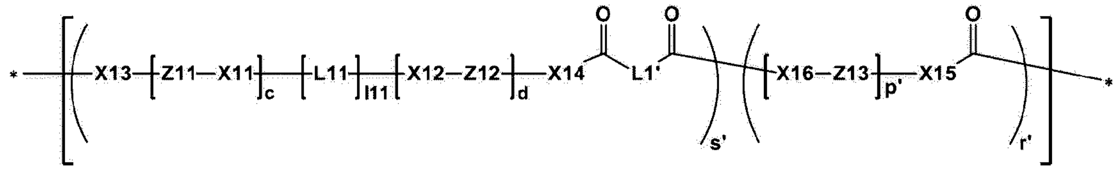

[Chemical Formula 22-C]

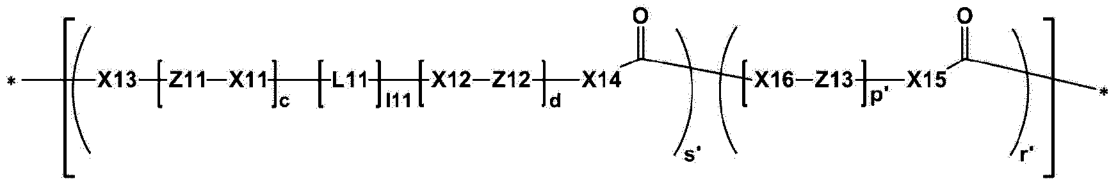

[Chemical Formula 22-D]

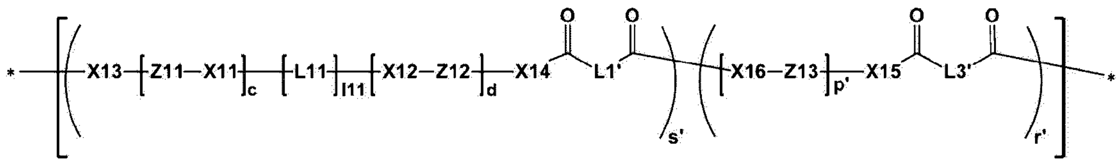

in Chemical Formulae 22-A to 22-D,
the definition of each substituent is the same as that defined in Chemical Formula 22.

According to an exemplary embodiment of the present specification, the resin has a weight average molecular weight (Mw) of 5,000 g/mol to 500,000 g/mol.

In the present specification, the weight average molecular weights (Mws) of the resin and the oligomer used in the preparation thereof may be measured by gel permeation chromatography (GPC) using a polystyrene (PS) standard using Agilent 1200 series. Specifically, the weight average molecular weights may be measured using an Agilent 1200 series device using a Polymer Laboratories PLgel MIX-B 300 mm length column, and in this case, the measurement temperature is 40°C, the solvent used is tetrahydrofuran (THF), and the flow rate is 1 mL/min. The sample of the resin or oligomer is each prepared at a concentration of 10 mg/10 mL, and then fed in an amount of 10 μL, and the weight average molecular weight (Mw) value is induced using a calibration curve formed using a polystyrene standard. In this case, nine types of polystyrene standard products with a molecular weight (g/mol) of 2,000 / 10,000 / 30,000 / 70,000 / 200,000 / 700,000 / 2,000,000 / 4,000,000 / 10,000,000 are used.

In an exemplary embodiment of the present specification, the polycarbonate resin has a weight average molecular weight of 3,000g/mol to 500,000 g/mol, preferably 5,000 g/mol to 200,000 g/mol, 7,000 g/mol to 150,000 g/mol, 8,000 g/mol to 100,000 g/mol. The polycarbonate resin has a weight average molecular weight of more preferably 9,000 g/mol to 90,000 g/mol, 10,000 g/mol to 80,000 g/mol, 12,000 g/mol to 70,000 g/mol, 13,000 g/mol to 60,000 g/mol, or 13,000 g/mol to 50,000 g/mol.

According to an exemplary embodiment of the present specification, the polycarbonate resin has a weight average molecular weight of 5,000g/mol to 500,000 g/mol, preferably 5,000 g/mol to 200,000 g/mol, 5,000 g/mol to

100,000 g/mol, or 5,000 g/mol to 51,000 g/mol. The polycarbonate resin has a weight average molecular weight of more preferably 7,000 g/mol to 51,000 g/mol, 8,000 g/mol to 51,000 g/mol, 9,000 g/mol to 51,000 g/mol, 10,000 g/mol to 51,000 g/mol, or 11,000 g/mol to 51,000 g/mol. When the polycarbonate resin satisfies the above-described weight average molecular weight range, the polycarbonate resin may have optimum fluidity and processability.

In an exemplary embodiment of the present disclosure, the polycarbonate resin has a number average molecular weight of 2,000g/mol to 300,000 g/mol, 3,000g/mol to 200,000 g/mol, 4,000g/mol to 150,000 g/mol, 4,500g/mol to 100,000 g/mol, preferably 5,000g/mol to 80,000 g/mol, 6,000g/mol to 50,000 g/mol, 7,000g/mol to 30,000 g/mol, or 8,000g/mol to 27,000 g/mol.

According to an exemplary embodiment of the present disclosure, the polycarbonate resin has a number average molecular weight of 4,000 g/mol to 100,000 g/mol, 4,000 g/mol to 50,000 g/mol, 4,000 g/mol to 30,000 g/mol, 5,000 g/mol to 30,000 g/mol, preferably 6,000 g/mol to 30,000 g/mol. When the polycarbonate resin satisfies the above-described number average molecular weight range, the polycarbonate resin may have optimum fluidity and processability.

According to an exemplary embodiment of the present specification, the polyester resin has a weight average molecular weight of 5,000g/mol to 500,000 g/mol, preferably 6,000 g/mol to 400,000 g/mol, 7,000 g/mol to 300,000 g/mol, 8,000 g/mol to 200,000 g/mol, or 9,000 g/mol to 100,000 g/mol. The polyester resin has a weight average molecular weight of more preferably 10,000 g/mol to 90,000 g/mol, 15,000 g/mol to 85,000 g/mol, 20,000 g/mol to 80,000 g/mol, or 25,000 g/mol to 75,000 g/mol. When the polyester resin satisfies the above-described weight average molecular weight range, the polyester resin may have optimum fluidity and processability.

According to an exemplary embodiment of the present disclosure, the polyester resin has a number average molecular weight of 2,000 g/mol to 300,000 g/mol, 4,000 g/mol to 250,000 g/mol, 5,000 g/mol to 210,000 g/mol, 6,000 g/mol to 180,000 g/mol, 7,000 g/mol to 150,000 g/mol, 8,000 g/mol to 120,000 g/mol, 9,000 g/mol to 90,000 g/mol, preferably 10,000 g/mol to 60,000 g/mol, 11,000 g/mol to 50,000 g/mol, or 12,000 g/mol to 45,000 g/mol.

According to an exemplary embodiment of the present specification, the polyester-carbonate resin has a weight average molecular weight of 5,000 g/mol to 500,000 g/mol, preferably 5,000 g/mol to 300,000 g/mol, 7,000 g/mol to 250,000 g/mol, or 9,000 g/mol to 200,000 g/mol. The polyester-carbonate resin has a weight average molecular weight of more preferably 10,000 g/mol to 150,000 g/mol, 12,000 g/mol to 100,000 g/mol, 13,000 g/mol to 80,000 g/mol, 14,000 g/mol to 60,000 g/mol, or 15,000 g/mol to 55,000 g/mol. When the polyester-carbonate resin satisfies the above-described weight average molecular weight range, the polyester-carbonate resin may have optimum fluidity and processability.

According to an exemplary embodiment of the present disclosure, the polyester-carbonate resin has a number average molecular weight of 2,000 g/mol to 300,000 g/mol, 3,000 g/mol to 200,000 g/mol, 4,000 g/mol to 100,000 g/mol, 5,000 g/mol to 80,000 g/mol, preferably 6,000 g/mol to 60,000 g/mol, 7,000 g/mol to 40,000 g/mol, or 8,000 g/mol to 30,000 g/mol.

According to an exemplary embodiment of the present specification, the resin has a glass transition temperature (Tg) of 90°C to 200°C.

In the present specification, the glass transition temperature (Tg) may be measured by a differential scanning calorimeter (DSC). Specifically, the glass transition temperature may be measured from a graph obtained by heating 5.5 mg to 8.5 mg of the polycarbonate resin sample to 270°C under a nitrogen atmosphere, and then scanning the resin sample while heating the resin sample at a heating rate of 10°C/min during the second heating after cooling.

According to an exemplary embodiment of the present specification, the polycarbonate resin may have a glass transition temperature (Tg) of 90°C to 200°C. The glass transition temperature may be preferably 100°C to 190°C, 120°C to 180°C, 120°C to 170°C, 125°C to 170°C, or 128°C to 160°C. When the polycarbonate resin satisfies the above glass transition temperature range, it's heat resistance and injectability are excellent, and the glass transition temperature is easily adjusted when a polycarbonate resin composition is prepared by mixing with a resin having a glass transition temperature different from the above-described range, so that the physical properties desired in the present specification may be satisfied.

According to an exemplary embodiment of the present specification, the polyester resin may have a glass transition temperature (Tg) of 90°C to 200°C. The glass transition temperature may be preferably 90°C to 190°C, 100°C to 185°C, and 110°C to 180°C. When the polyester resin satisfies the above glass transition temperature range, it's heat resistance and injectability are excellent, and the glass transition temperature is easily adjusted when a polyester resin composition is prepared by mixing with a resin having a glass transition temperature different from the above-described range, so that the physical properties desired in the present specification may be satisfied.

According to an exemplary embodiment of the present specification, the polyester-carbonate resin may have a glass transition temperature (Tg) of 90°C to 200°C. The glass transition temperature may be preferably 100°C to 190°C, 110°C to 180°C, 120°C to 170°C, or 130°C to 160°C. When the polyester-carbonate resin satisfies the above glass transition temperature range, it's heat resistance and injectability are excellent, and the glass transition temperature is easily adjusted when a polycarbonate resin composition is prepared by mixing with a resin having a glass transition temperature different from the above-described range, so that the physical properties desired in the present specification may be satisfied.

According to an exemplary embodiment of the present specification, a refractive index of the resin, which is measured at a wavelength of 587 nm, is 1.6 to 1.8.

In the present specification, the refractive index may be confirmed from a polymerized resin sample, and the resulting value according to the wavelength of light may be obtained using a prism-coupler. After the resin sample is brought into close contact with a prism of a prism-coupler, light at a specific wavelength is made incident on the sample through the prism. Thereafter, after an incident angle at which light resonates is measured to measure a refractive index therefrom, the Sellmeier Coefficient which minimizes the error value is obtained and substituted into the Sellmeier's equation, and then a refractive index at a wavelength of D (587 nm) may be confirmed.

According to an exemplary embodiment of the present specification, a refractive index of the polycarbonate resin, which is measured at a wavelength of 587 nm, is 1.5 to 1.75. The refractive index may be preferably 1.55 to 1.71 or 1.65 to 1.69. When the resin satisfies the above refractive index, a thin and light optical lens can be manufactured when the resin is applied to a molded article such as an optical lens.

According to an exemplary embodiment of the present specification, a refractive index of the polycarbonate resin is 1.6 to 1.8 at 587 nm.

According to an exemplary embodiment of the present specification, a refractive index of the polycarbonate resin may be 1.6 to 1.75, or 1.6 to 1.72, preferably 1.61 to 1.69. When the resin satisfies the above refractive index, a thin and light optical lens can be manufactured when the resin is applied to a molded article such as an optical lens.

According to an exemplary embodiment of the present specification, a refractive index of the polyester resin, which is measured at a wavelength of 587 nm, is 1.50 to 1.75. The refractive index may be preferably 1.55 to 1.73, 1.6 to 1.72, 1.62 to 1.7, and 1.63 to 1.69. When the resin satisfies the above refractive index, a thin and light optical lens can be manufactured when the resin is applied to a molded article such as an optical lens.

According to an exemplary embodiment of the present specification, a refractive index of the polyester-carbonate resin, which is measured at a wavelength of 587 nm, is 1.50 to 1.75. The refractive index may be preferably 1.55 to 1.74, 1.60 to 1.73, or 1.61 to 1.69. When the resin satisfies the above refractive index, a thin and light optical lens can be manufactured when the resin is applied to a molded article such as an optical lens.

According to an exemplary embodiment of the present specification, the Abbe's Number of the resin, which is measured at a wavelength of 486 nm, 587 nm, and 656 nm, is 5 to 45.

The Abbe's Number may specifically be obtained by the following Equation by measuring the refractive index ($n_D$, $n_F$, and $n_C$) at a wavelength of D (587 nm), F (486 nm), and C (656 nm), respectively at 20°C.

$$\text{Abbe's Number} = (n_D - 1)/(n_F - n_C)$$

According to an exemplary embodiment of the present specification, the Abbe's Number of the polycarbonate resin, which is measured and calculated at a wavelength of 486, 587, and 656 nm may be 5 to 45 or 10 to 25. The Abbe's Number may be preferably 14 to 22, 15 to 24, 16 to 22, or 18 to 22. When the polycarbonate resin satisfies the above Abbe's Number range, there is an effect that the dispersion is decreased and the sharpness is increased when the polycarbonate resin is applied to a molded article such as an optical lens.

According to an exemplary embodiment of the present specification, the Abbe's Number of the polyester resin, which is measured and calculated at a wavelength of 486, 587, and 656 nm may be 5 to 45. The Abbe's Number may be preferably 7 to 40, and 9 to 35. The Abbe's Number may be more preferably 11 to 30, 13 to 28, 15 to 26, or 17 to 25. When the polyester resin satisfies the above Abbe's Number range, there is an effect that the dispersion is decreased and the sharpness is increased when the polyester resin is applied to a molded article such as an optical lens.

According to an exemplary embodiment of the present specification, the Abbe's Number of the polyester-carbonate resin, which is measured and calculated at a wavelength of 486, 587, and 656 nm may be 5 to 45. The Abbe's Number may be preferably 10 to 29, and more preferably 14 to 26. When the polyester-carbonate resin satisfies the above Abbe's Number range, there is an effect that the dispersion is decreased and the sharpness is increased when the polyester-carbonate resin is applied to a molded article such as an optical lens.

An exemplary embodiment of the present specification provides a method for preparing the resin, the method including: polymerizing a composition for preparing a resin, which includes a compound of the following Chemical Formula 1a; a compound of the following Chemical Formula 2a; and one or more of a polycarbonate precursor and a polyester precursor.

[Chemical Formula 1a]

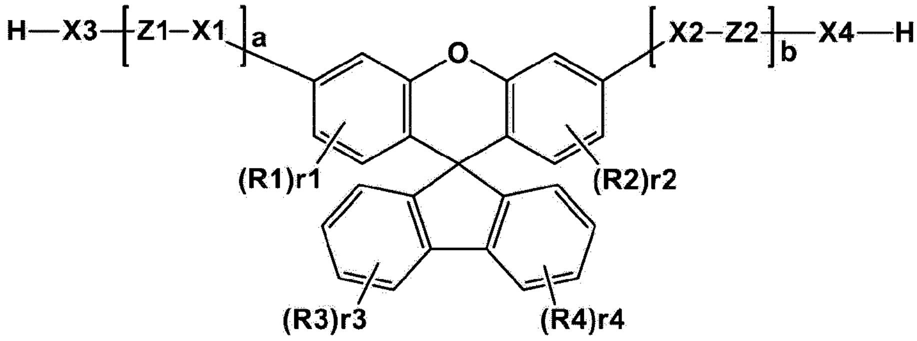

in Chemical Formula 1a,
X1 to X4 are each independently O or S,
Z1 and Z2 are each independently a substituted or unsubstituted alkylene group; or a substituted or unsubstituted cycloalkylene group,
a and b are each independently an integer from 1 to 10, and when a and b are each 2 or higher, structures in each parenthesis are the same as or different from each other,
R1 to R4 are each independently hydrogen; a substituted or unsubstituted alkyl group; a substituted or unsubstituted cycloalkyl group; a substituted or unsubstituted aryl group; or a substituted or unsubstituted heteroaryl group,
r1 and r2 are each independently an integer from 0 to 3, and when r1 and r2 are each 2 or higher, two or more of R1 and R2 are each the same as or different from each other,
r3 and r4 are each independently an integer from 0 to 4, and when r3 and r4 are each 2 or higher, two or more of R3 and R4 are each the same as or different from each other,

[Chemical Formula 2a]

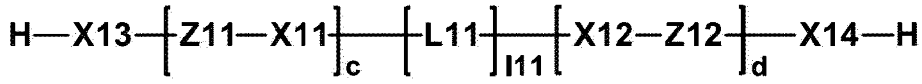

in Chemical Formula 2a,
L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,
l11 is an integer from 1 to 5, and when l11 is 2 or higher, two or more L11s are the same as or different from each other,
X11 to X14 are each independently O or S,
Z11 and Z12 are each independently a substituted or unsubstituted alkylene group; or a substituted or unsubstituted cycloalkylene group, and
c and d are each independently an integer from 0 to 10, and when c and d are each 2 or higher, structures in each parenthesis are the same as or different from each other.

When the composition includes the compound of Chemical Formula 1a, the composition is easily polymerized, and has various ranges of refractive indices or a high refractive index and has a wide range of glass transition temperatures, depending on the substituent.

An exemplary embodiment of the present specification provides a method for preparing a polycarbonate resin, the method including: polymerizing a composition for preparing the polycarbonate resin, which includes the compound of Chemical Formula 1a; the compound of Chemical Formula 2a; and a polycarbonate precursor.

An exemplary embodiment of the present specification provides a method for preparing a polyester resin, the method including: polymerizing a composition for preparing the polyester resin, which includes the compound of Chemical Formula 1a; the compound of Chemical Formula 2a; and a polyester precursor.

An exemplary embodiment of the present specification provides a method for preparing a polyester-carbonate resin, the method including: polymerizing a composition for preparing the polyester-carbonate resin, which includes the compound of Chemical Formula 1a; the compound of Chemical Formula 2a; a polycarbonate precursor; and a polyester precursor.

According to an exemplary embodiment of the present specification, the ratio of the compound of Chemical Formula 1a and the compound of Chemical Formula 2a is 0.01 mole% to 99.99 mole% : 99.99 mole% to 0.01 mole%.

Specifically, the compound of Chemical Formula 1a and the compound of Chemical Formula 2a are included at a ratio of 0.1 mole% to 99.9 mole% : 99.9 mole% to 0.1mole%, 1 mole% to 99 mole% : 99 mole% to 1 mole%, 5 mole% to 95 mole% : 95 mole% to 5 mole%, or 10 mole% to 90 mole%: 90 mole% to 10 mole%.

When the compounds of Chemical Formulae 1a and 2a are included in the above contents, the composition is easily polymerized, has various ranges of refractive indices or a high refractive index and has a wide range of glass transition temperatures, depending on the substituent. Furthermore, the glass transition temperature (Tg) and refractive index can be adjusted, and the chain behavior of the resin can be made flexible, so that there is a technical effect advantageous for the injection processing of a molded article.

The composition for preparing a resin may further include a solvent.

The solvent may be, for example, diphenyl ether, dimethylacetamide or methanol, but is not limited thereto, and any solvent applied in the art may be appropriately adopted.

The solvent may be included in an amount of 5 parts by weight to 60 parts by weight with respect to 100 parts by weight of the composition for preparing a resin.

The solvent may be included in an amount of preferably 5 parts by weight to 50 parts by weight, 7 parts by weight to 45 parts by weight, or 8 parts by weight to 40 parts by weight with respect to 100 parts by weight of the composition for preparing a resin.

According to an exemplary embodiment of the present specification, two or more of Chemical Formula 1a may be included. Two or more of Chemical Formula 1a are the same as or different from each other.

According to an exemplary embodiment of the present specification, the compound of Chemical Formula 1a may be the following compound, but is not limited thereto.

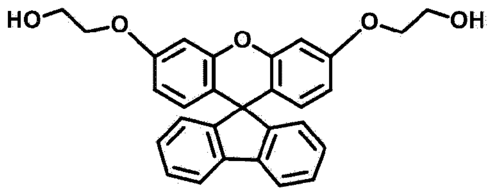

In an exemplary embodiment of the present specification, the compound of Chemical Formula 2a is a compound of the following Chemical Formula 2a-1 to 2a-4.

[Chemical Formula 2a-1]

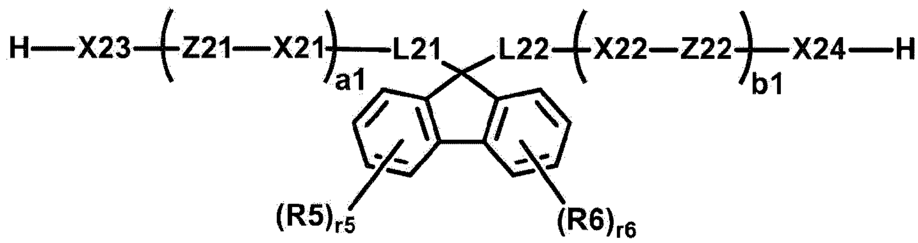

[Chemical Formula 2a-2]

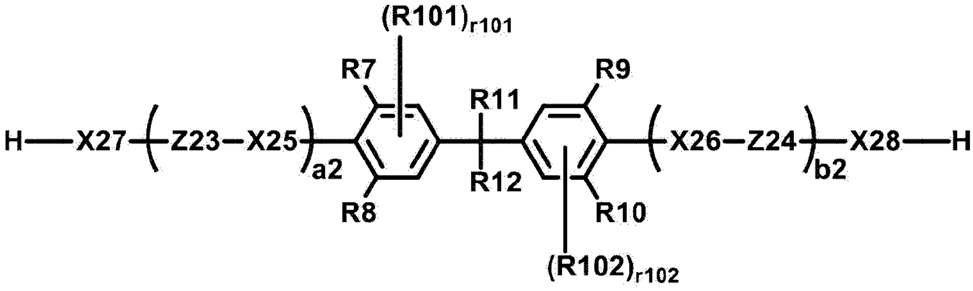

[Chemical Formula 2a-3]

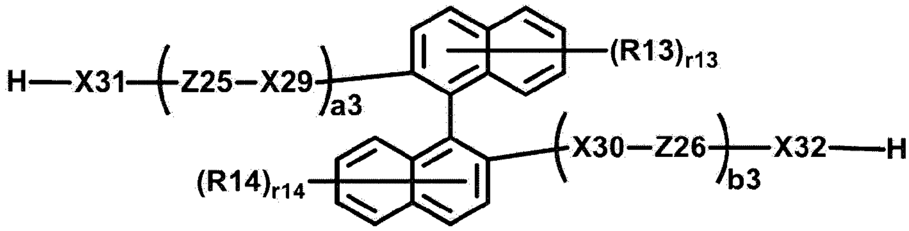

[Chemical Formula 2a-4]

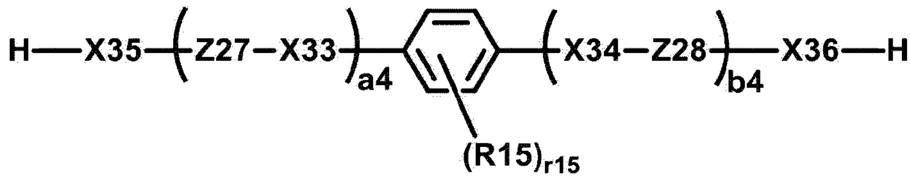

in Chemical Formulae 2a-1 to 2a-4,

the definitions of X21 to X36, L21 and L22, Z21 to Z28, R5 to R15, R101, R102, a1 to a4, b1 to b4, r5, r6, r15, r13, r14, r101 and r102 are the same as those defined in Chemical Formulae 2-1 to 2-4.

According to an exemplary embodiment of the present specification, the compound of Chemical Formula 2a may be any one of the following compounds, but is not limited thereto.

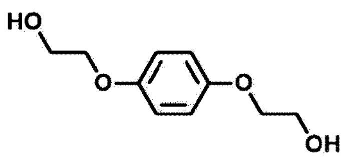
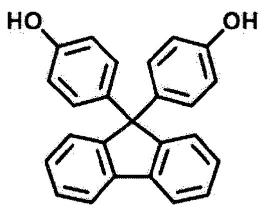
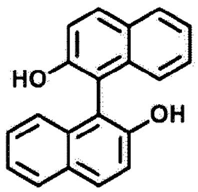

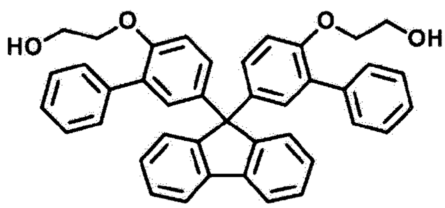
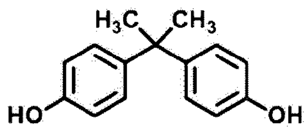

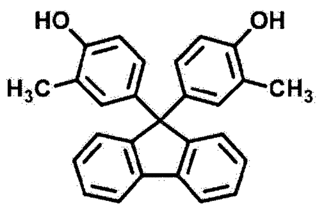
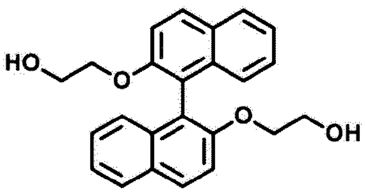

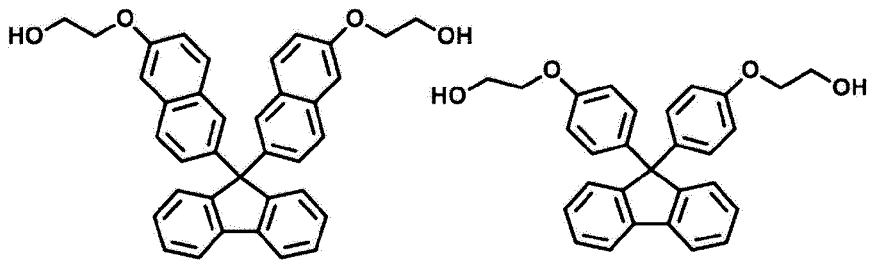

According to an exemplary embodiment of the present specification, the compound of Chemical Formula 1a may be included in an amount of 1 part by weight to 100 parts by weight or 1 part by weight to 99 parts by weight with respect to 100 parts by weight of the composition for preparing a resin.

The compound of Chemical Formula 1a may be included in an amount of preferably 1 to 60 parts by weight, 1 to 50 parts by weight, 1 to 40 parts by weight, 1 to 30 parts by weight, 1 to 20 parts by weight, or 1 to 10 parts by weight with respect to 100 parts by weight of the composition for preparing a resin.

According to an exemplary embodiment of the present specification, the compound of Chemical Formula 2a may be included in an amount of 1 part by weight to 99 parts by weight with respect to 100 parts by weight of the composition for preparing a resin.

The compound of Chemical Formula 2a may be included in an amount of preferably 1 to 60 parts by weight, 1 to 50 parts by weight, 1 to 40 parts by weight, 1 to 30 parts by weight, 1 to 20 parts by weight, or 1 to 10 parts by weight with respect to 100 parts by weight of the composition for preparing a resin.

According to an exemplary embodiment of the present specification, the polycarbonate precursor may be included in an amount of 1 part by weight to 60 parts by weight with respect to 100 parts by weight of the composition for preparing a resin.

The polycarbonate precursor may be included in an amount of preferably 1 to 60 parts by weight, 1 to 55 parts by weight, 1 to 50 parts by weight, 1 to 45 parts by weight, or 1 to 40 parts by weight with respect to 100 parts by weight of the composition for preparing a resin.

According to an exemplary embodiment of the present specification, the polycarbonate precursor is the following Chemical Formula A.

[Chemical Formula A]

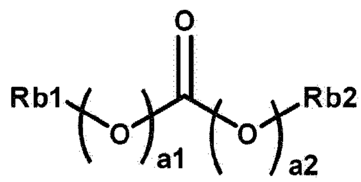

in Chemical Formula A,

Rb1 and Rb2 are each independently a halogen group; a substituted or unsubstituted alkyl group; or a substituted or unsubstituted aryl group, and

a1 and a2 are each 0 or 1.

According to an exemplary embodiment of the present specification, Rb1 and Rb2 are each independently a halogen group; a substituted or unsubstituted straight-chained or branched alkyl group having 1 to 30 carbon atoms; or a substituted or unsubstituted monocyclic or polycyclic aryl group having 6 to 30 carbon atoms.

According to an exemplary embodiment of the present specification, Rb1 and Rb2 are each independently a halogen group; a substituted or unsubstituted straight-chained or branched alkyl group having 1 to 20 carbon atoms; or a substituted or unsubstituted monocyclic or polycyclic aryl group having 6 to 20 carbon atoms.

According to an exemplary embodiment of the present specification, Rb1 and Rb2 are each independently a halogen group; a straight-chained or branched alkyl group having 1 to 30 carbon atoms; or a monocyclic or polycyclic aryl group having 6 to 30 carbon atoms.

According to an exemplary embodiment of the present specification, Rb1 and Rb2 are each independently a halogen group; a straight-chained or branched alkyl group having 1 to 20 carbon atoms; or a monocyclic or polycyclic aryl group having 6 to 20 carbon atoms.

According to an exemplary embodiment of the present specification, Rb1 and Rb2 are each independently -Cl;

a methyl group; an ethyl group; an n-propyl group; an isopropyl group; an n-butyl group; an isobutyl group; or a phenyl group.

According to an exemplary embodiment of the present specification, Chemical Formula A is any one selected from the following compounds.

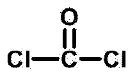

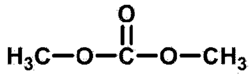

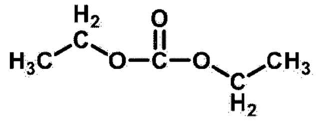

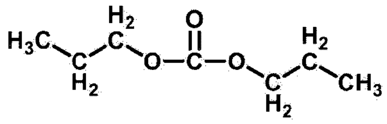

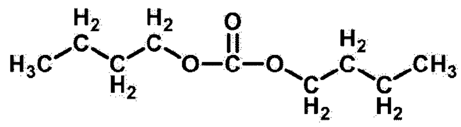

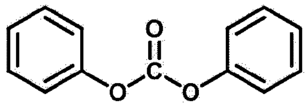

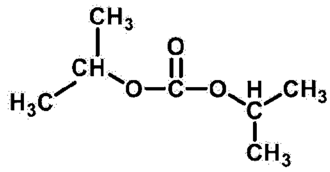

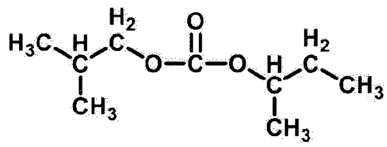

The polycarbonate precursor serves to link an additional comonomer, if necessary, and other specific examples thereof which may be applied in addition to the compound represented by Chemical Formula A include phosgene, triphosgene, diphosgene, bromophosgene, dimethyl carbonate, diethyl carbonate, dibutyl carbonate, dicyclohexyl carbonate, ditolyl carbonate, bis(chlorophenyl) carbonate, m-cresyl carbonate, dinaphthyl carbonate, bis(diphenyl) carbonate, bishaloformate, or the like, and any one of them or a mixture of two or more thereof may be used.

In an exemplary embodiment of the present specification, the polyester precursor may be included in an amount of 1 part by weight to 150 parts by weight with respect to 100 parts by weight of the composition for preparing a resin.

The polyester precursor may be included in an amount of preferably 1 to 140 parts by weight, 1 to 135 parts by weight, 1 to 130 parts by weight, 1 to 125 parts by weight, or 1 to 120 parts by weight with respect to 100 parts by weight of the composition for preparing a resin.

According to an exemplary embodiment of the present specification, the polyester precursor is the following Chemical Formula B.

[Chemical Formula B]

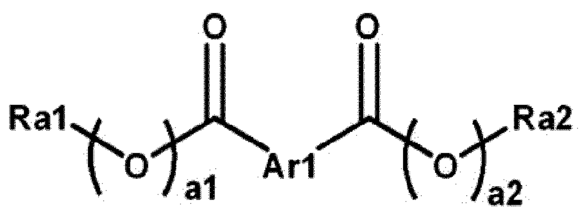

in Chemical Formula B,

Ra1 and Ra2 are each independently a halogen group; a hydroxyl group; a substituted or unsubstituted alkyl group; or a substituted or unsubstituted aryl group,

Ar1 is a substituted or unsubstituted arylene group, and

a1 and a2 are each 0 or 1.

According to an exemplary embodiment of the present specification, Ra1 and Ra2 are each independently a halogen group; a hydroxyl group; a substituted or unsubstituted straight-chained or branched alkyl group having 1 to 30 carbon atoms; a substituted or unsubstituted monocyclic or polycyclic cycloalkyl group having 6 to 30 carbon atoms; or a substituted or unsubstituted monocyclic or polycyclic aryl group having 6 to 30 carbon atoms.

According to an exemplary embodiment of the present specification, Ra1 and Ra2 are each independently a halogen group; a hydroxyl group; a substituted or unsubstituted straight-chained or branched alkyl group having 1 to 20 carbon atoms; a substituted or unsubstituted monocyclic or polycyclic cycloalkyl group having 6 to 20 carbon atoms; or a substituted or unsubstituted monocyclic or polycyclic aryl group having 6 to 20 carbon atoms.

According to an exemplary embodiment of the present specification, Ra1 and Ra2 are each independently a halogen group; a hydroxyl group; a straight-chained or branched alkyl group having 1 to 30 carbon atoms, which is unsubstituted or substituted with a hydroxyl group; a monocyclic or polycyclic cycloalkyl group having 6 to 30 carbon atoms; or a monocyclic or polycyclic aryl group having 6 to 30 carbon atoms.

According to an exemplary embodiment of the present specification, Ra1 and Ra2 are each independently a halogen group; a hydroxyl group; a straight-chained or branched alkyl group having 1 to 20 carbon atoms, which is unsubstituted or substituted with a hydroxyl group; a monocyclic or polycyclic cycloalkyl group having 6 to 20 carbon atoms; or a monocyclic or polycyclic aryl group having 6 to 20 carbon atoms.

According to an exemplary embodiment of the present specification, Ra1 and Ra2 are each independently -Cl; a hydroxyl group; a methyl group; an ethyl group; an n-propyl group; an n-butyl group; an isopropyl group; an isobutyl group; a hydroxyethyl group; or a phenyl group.

According to an exemplary embodiment of the present specification, the definitions of the above-described L' and L1' may be applied to the definition of Ar1.

According to an exemplary embodiment of the present specification, Ar1 is a monocyclic or polycyclic arylene group having 6 to 30 carbon atoms.

According to an exemplary embodiment of the present specification, Ar1 is a monocyclic or polycyclic arylene group having 6 to 20 carbon atoms.

According to an exemplary embodiment of the present specification, Ar1 is a phenylene group; or a naphthylene group.

According to an exemplary embodiment of the present specification, Chemical Formula B is any one selected among the following compounds.

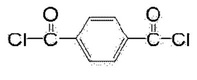 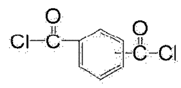 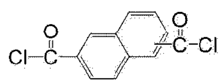

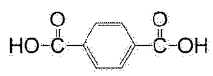 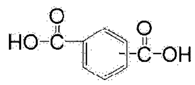 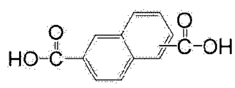

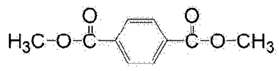 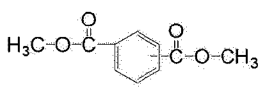 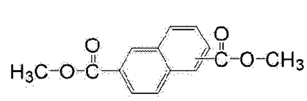

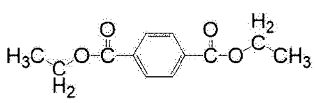 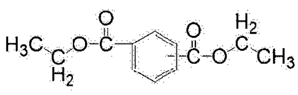 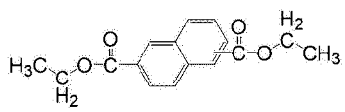

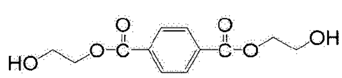 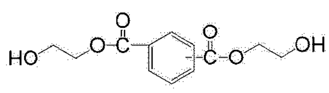 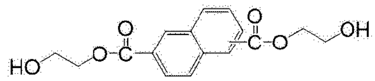

According to an exemplary embodiment of the present specification, the unit of the above-described Chemical Formula 1 may be formed by polymerizing the compound of Chemical Formula 1a; and the polycarbonate precursor of Chemical Formula A or the polyester precursor of Chemical Formula B, and the unit of the above-described Chemical

Formula 2 may be formed by polymerizing the compound of Chemical Formula 2a; and the polycarbonate precursor of Chemical Formula A or the polyester precursor of Chemical Formula B.

According to an exemplary embodiment of the present specification, the resin is a polycarbonate resin, and it is preferred that the polycarbonate resin is polymerized from the compound of Chemical Formula 1a; the compound of Chemical Formula 2a; and the polycarbonate precursor of Chemical Formula A.

The unit of the above-described Chemical Formula 1-C may be formed by polymerizing the compound of Chemical Formula 1a; and the polycarbonate precursor of Chemical Formula A, and the unit of the above-described Chemical Formula 2-C may be formed by polymerizing the compound of Chemical Formula 2a; and the polycarbonate precursor of Chemical Formula A.

According to an exemplary embodiment of the present specification, the resin is a polyester resin, and it is preferred that the polyester resin is polymerized from the compound of Chemical Formula 1a; the compound of Chemical Formula 2a; and the polyester precursor of Chemical Formula B.

The unit of the above-described Chemical Formula 11 may be formed by polymerizing the compound of Chemical Formula 1a; and the polyester precursor of Chemical Formula B, and the unit of the above-described Chemical Formula 12 may be formed by polymerizing the compound of Chemical Formula 2a; and the polyester precursor of Chemical Formula B.

According to an exemplary embodiment of the present specification, the resin is a polyester-carbonate resin, and it is preferred that the polyester-carbonate resin is polymerized from the compound of Chemical Formula 1a; the compound of Chemical Formula 2a; the polycarbonate precursor of Chemical Formula A; and the polyester precursor of Chemical Formula B.

The unit of the above-described Chemical Formula 21 may be formed by polymerizing the compound of Chemical Formula 1a; the polycarbonate precursor of Chemical Formula A; and the polyester precursor of Chemical Formula B, and the unit of the above-described Chemical Formula 22 may be formed by polymerizing the compound of Chemical Formula 2a; the polycarbonate precursor of Chemical Formula A; and the polyester precursor of Chemical Formula B.

In the case of the polyester resin, the precursor (terephthalate

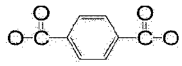
)

has a higher molecular weight than the precursor (carbonate

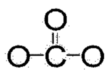
)

of the polycarbonate resin, and accounts for a large proportion of the weight of the resin. Since the precursor lowers the concentration of a diol monomer which implements a high refractive index, the refractive index of the polycarbonate resin is relatively higher than that of the polyester resin. In addition, the polyester resin has a large length of the conjugated bond due to the structural feature compared to the polycarbonate resin, and exhibits properties in which the yellow index is generally high due to hydrogen bonding inside and outside the molecule and heat resistance characteristics such as Tg are high.

The compound of Chemical Formula 1a may be used in an amount of 1 part by mol to 100 parts by mol, and 1 part by mol to 99 parts by mol with respect to 100 parts by mol of the entire monomer constituting the resin including the unit of Chemical Formula 1.

The polycarbonate precursor of Chemical Formula A may be used in an amount of 50 parts by mol to 150 parts by mol with respect to 100 parts by mol of the entire monomer of the compound of Chemical Formula 1a constituting the resin.

The polyester precursor of Chemical Formula B may be used in an amount of 1 part by mol to 150 parts by mol with respect to 100 parts by mol of the entire monomer of the compound of Chemical Formula 1a constituting the resin.

The compound of Chemical Formula 2a may be used in an amount of 1 part by mol to 100 parts by mol, and 1 part by mol to 99 parts by mol with respect to 100 parts by mol of the entire monomer constituting the resin including the unit of Chemical Formula 2.

The polycarbonate precursor of Chemical Formula A may be used in an amount of 50 parts by mol to 150 parts by mol with respect to 100 parts by mol of the entire monomer of the compound of Chemical Formula 2a constituting the resin.

The polyester precursor of Chemical Formula B may be used in an amount of 1 part by mol to 150 parts by mol with respect to 100 parts by mol of the entire monomer of the compound of Chemical Formula 2a constituting the resin.

For the polymerization of the resin according to the present specification, methods known in the art may be used.
It is preferred that the polymerization is performed by a melt polycondensation method.
In the melt polycondensation method, a catalyst may be further applied as needed, and melt polycondensation may be performed using the composition for preparing a resin under heating and further under normal pressure or reduced pressure while removing by-products by an ester exchange reaction. As the catalyst, a material generally applied in the art may be adopted.
Specifically, in the melt polycondensation method, it is preferred that the compound of Chemical Formula 1a; the compound of Chemical Formula 2a; and one or more of the polycarbonate precursor and the polyester precursor are melted in a reaction vessel, and then a reaction is performed in a state where a by-product compound is allowed to stay. In order to allow the by-product compound to stay, the reaction device may be closed, or pressure may be controlled by reducing pressure or increasing pressure.
The reaction time of this process is 20 minutes or more and 600 minutes or less, preferably 40 minutes or more and 450 minutes or less, and more preferably 60 minutes or more and 300 minutes or less.
In this case, when the by-product compound is distilled off immediately after being produced, a resin to be finally obtained has a small content of high molecular weight materials. However, when the by-product compound is allowed to stay in the reaction vessel for a certain period of time, the finally obtained resin is obtained to have a large content of high molecular weight materials.
The melt polycondensation method may be performed continuously or in a batch manner. The reaction device used for performing the reaction may be a vertical type equipped with an anchor type impeller, a Maxblend impeller, a helical ribbon type impeller or the like, may be a horizontal type equipped with a paddle blade, a lattice blade, a spectacle-shaped blade or the like, and may be an extruder type equipped with a screw. In addition, it is desirably performed to use a reaction device in which these reaction devices are appropriately combined in consideration of the viscosity of the polymer.
In the method for preparing a resin used in the present specification, the catalyst may be removed or deactivated in order to maintain heat stability and hydrolysis stability after the completion of the polymerization reaction. A method of deactivating the catalyst by adding a known acidic material in the art may be preferably performed.
As the acidic material, for example, esters such as butyl benzoate; aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenylphosphine and bis(diphenylphosphino)ethane; boric acids such as boric acid and phenylboric acid; aromatic sulfonic acid salts such as dodecylbenzenesulfonic acid tetrabutylphosphonium salts; organic halides such as stearic acid chloride, benzoyl chloride and p-toluenesulfonic acid chloride; alkylsulfuric acids such as dimethylsulfuric acid; organic halides such as benzyl chloride, and the like are preferably used.
The acidic material may be used in an amount of 0.1 parts by mol to 5 parts by mol, preferably 0.1 parts by mol to 1 part by mol with respect to 100 parts by mol of the catalyst.
When the amount of the acidic material is smaller than 0.1 parts by mol, the deactivation effect becomes insufficient, which is not preferred. Further, when the amount exceeds 5 parts by mol, the heat resistance of the resin deteriorates and the molded article is easily colored, which is not preferred.
After the catalyst is deactivated, a process of devolatilizing and removing a low boiling point compound in the resin may be further performed under a pressure of 0.1 mmHg to 1 mmHg and at a temperature of 200°C to 350°C. In this process, a horizontal-type apparatus equipped with a stirring blade having excellent surface renewal ability such as a paddle blade, a lattice blade, and a spectacle-shaped blade, or a thin film evaporator is preferably used.
It is preferred that the content of foreign materials in the resin of the present specification is as small as possible, and filtration of a melting raw material, filtration of a catalyst solution, and the like are preferably performed.
The mesh of the filter used in the filtration is preferably 5 μm or less, and more preferably 1 μm or less. In addition, filtration of the produced resin using a polymer filter is preferably performed. The mesh of the polymer filter is preferably 100 μm or less, and more preferably 30 μm or less. Furthermore, a process of obtaining a resin pellet needs to be performed in a low-dust environment, and the environment is preferably Class 6 or lower, and more preferably Class 5 or lower.
Further, examples of a method of molding a molded article including the resin include compression molding, molds, roll processing, extrusion molding, stretching, and the like in addition to injection molding, but are not limited thereto.
Another exemplary embodiment of the present specification provides a resin composition including the resin according to the above-described exemplary embodiments.

According to an exemplary embodiment of the present specification, the resin may be included in an amount of 1 part by weight to 80 parts by weight based on 100 parts by weight of the resin composition.

According to an exemplary embodiment of the present specification, the resin composition may further include a solvent. The solvent may be, for example, dimethylacetamide or 1,2-dichlorobenzene.

The solvent may be included in an amount of 20 parts by weight to 99 parts by weight based on 100 parts by weight of the resin composition.

The resin composition may further include an additional monomer in addition to the compound of Chemical Formula 1a and the compound of Chemical Formula 2a. The additional monomer is not particularly limited, and a monomer generally applied in the art related to polycarbonate/polyester/polyester-carbonate may be appropriately adopted as long as the main physical properties of the resin composition are not changed. The additional monomer may be used in an amount of 1 part by mol to 50 parts by mol with respect to 100 parts by mol of the entire monomer constituting the resin including the unit of Chemical Formula 1.

The resin composition may further include one or more selected from the group consisting of an additive, for example, an antioxidant, a plasticizer, an anti-static agent, a nucleating agent, a flame retardant, a lubricant, an impact modifier, a fluorescent brightener, a UV absorber, a pigment and a dye, if necessary, in addition to a resin including the unit of Chemical Formula 1 and the unit of Chemical Formula 2.

The additive may be included in an amount of 1 part by weight to 99 parts by weight based on 100 parts by weight of the resin composition.

The type of antioxidant, plasticizer, anti-static agent, nucleating agent, flame retardant, lubricant, impact modifier, fluorescent brightener, UV absorber, pigment or dye is not particularly limited, and those applied in the art may be appropriately adopted.

Still another exemplary embodiment of the present specification provides a molded article including the resin composition according to the above-described exemplary embodiments.

According to an exemplary embodiment of the present specification, the molded article may be prepared from the resin composition or a cured product thereof.

As an example of a method of preparing the molded article, it is possible to include mixing a resin including the unit of Chemical Formula 1 and the additive well using a mixer, preparing the resulting mixture as a pellet by extrusion molding the mixture using an extruder, drying the pellet, and then injecting the pellet using an injection molding machine.

According to an exemplary embodiment of the present specification, the molded article may be an optical lens.

According to an exemplary embodiment of the present specification, the optical lens may have a thickness of 0.1 um to 30 mm.

The optical lens is manufactured using the resin, has a small thickness, a high refractive index and high transparency, and may be preferably applied to a camera.

According to an exemplary embodiment of the present specification, the molded article is an optical film or optical thin film. The optical film or optical thin film is manufactured using the polycarbonate resin, has a small thickness and excellent light harvesting effect and light diffusion effect, and may be preferably applied to backlight modules, flat lenses, and meta lenses of liquid crystal displays, and the like.

According to an exemplary embodiment of the present specification, the optical film or optical thin film has a thickness of 0.1 nm to 10 mm.

In an exemplary embodiment of the present specification, the molded article is an optical resin. The optical resin is manufactured using the polycarbonate resin, and has a low optical loss due to its small thickness, high refractive index and low birefringence.

The optical resin according to an exemplary embodiment of the present specification has a low optical loss due to its high refractive index and low birefringence. The optical resin according to an exemplary embodiment of the present specification has a glass transition temperature of 90 °C to 200°C, which is not very high or low in heat resistance characteristics compared to general optical materials in the related art, and thus is easily processed and shows excellent heat resistance characteristics. When the glass transition temperature exceeds 200°C, it is difficult to process the optical resin because the melt flow index increases, and when the glass transition temperature is less than 90°C, the low heat resistance characteristics result in poor weatherability due to the external environment. Accordingly, there are few optical resins according to an exemplary embodiment of the present specification, which have suitable thermal properties and implement a high refractive index.

[Mode for Invention]

Hereinafter, the present specification will be exemplified in more detail through Examples.

**Preparation Example 1. Preparation of polycarbonate resin**

Preparation Example 1-1. Preparation of Resin 1-1

45.215 g (0.100 mol) of Monomer 1-1 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 1-1, which is a polymer molten resin polymerized by blowing nitrogen into the reactor to create a normal pressure atmosphere, was obtained.

Monomer 1-1:

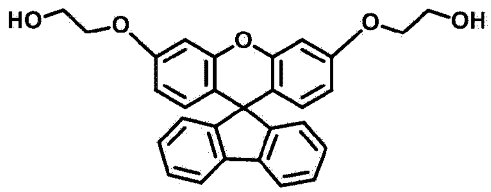

MS: $[M+H]^+$=453

**Preparation Examples 1-2 to 1-17. Preparation of Resins 1-2 to 1-17**

Resins 1-2 to 1-17 were obtained by preparation in the same manner as in Preparation Example 1-1, except that the following monomers were used in amounts of the parts by mol in the following Table 1 instead of Monomer 1-1 in Preparation Example 1-1.

Monomer A:

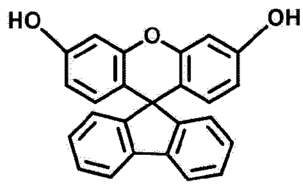

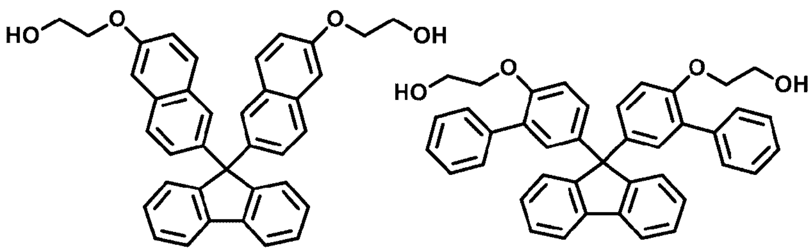

Monomer 2-1

Monomer 2-2

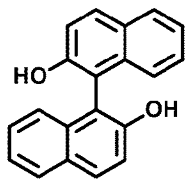

Monomer 2-3

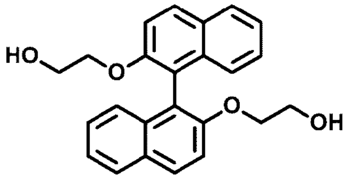

Monomer 2-4

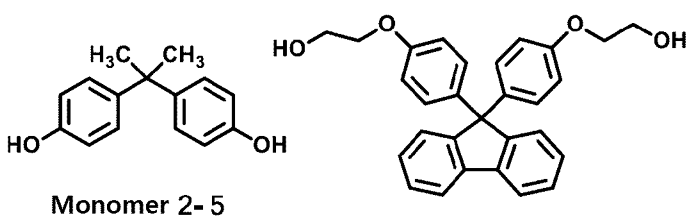

Monomer 2-5

Monomer 2-6

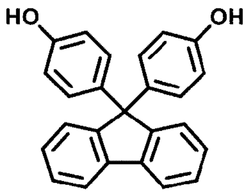

Monomer 2- 7

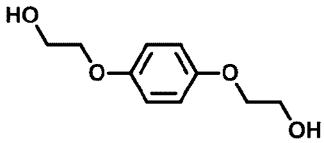

Monomer 2- 8

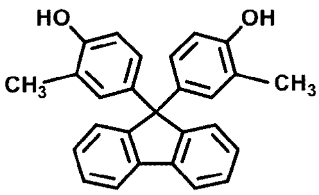

Monomer 2- 9

[Table 1]

| No | Composition (part by mol) of resin (* Based on a total of 100 moles of monomers) | | | | | | | | | | |
|---|---|---|---|---|---|---|---|---|---|---|---|
| | Monom er 1-1 | Monom er A | Monom er 2-1 | Monom er 2-2 | Monom er 2-3 | Monom er 2-4 | Monom er 2-5 | Monom er 2-6 | Monom er 2-7 | Monom er 2-8 | Monom er 2-9 |
| Resi n 1-1 | 100 | | | | | | | | | | |
| Resi | | 100 | | | | | | | | | |
| n 1-2 | | | | | | | | | | | |
| Resi n 1-3 | | | 100 | | | | | | | | |
| Resi n 1-4 | 80 | | 20 | | | | | | | | |
| Resi n 1-5 | 70 | | | | | 30 | | | | | |
| Resi n 1-6 | 50 | | | | 5 | 40 | | 5 | | | |
| Resi n 1-7 | 50 | | | | | 40 | | 5 | 5 | | |
| Resi n 1-8 | 50 | | | | | 40 | | 5 | | 5 | |
| Resi n 1-9 | 50 | | | | | 40 | | 5 | | | 5 |
| Resi | 30 | | | 20 | | 45 | 5 | | | | |
| n 1-10 | | | | | | | | | | | |
| Resi n 1-11 | 30 | | | 40 | | 25 | 5 | | | | |
| Resi n 1-12 | 20 | | 20 | | | 60 | | | | | |
| Resi n 1-13 | 20 | | | 20 | | 60 | | | | | |

(continued)

| No | Composition (part by mol) of resin (* Based on a total of 100 moles of monomers) | | | | | | | | | | |
|---|---|---|---|---|---|---|---|---|---|---|---|
| | Monom er 1-1 | Monom er A | Monom er 2-1 | Monom er 2-2 | Monom er 2-3 | Monom er 2-4 | Monom er 2-5 | Monom er 2-6 | Monom er 2-7 | Monom er 2-8 | Monom er 2-9 |
| Resi n 1-14 | 5 | | 55 | | | 40 | | | | | |
| Resi n 1-15 | 5 | | 25 | 30 | | 40 | | | | | |
| Resi n 1-16 | 1 | | 35 | 20 | | 44 | | | | | |
| Resi n 1-17 | 1 | | 40 | 45 | | 14 | | | | | |

**Experimental Example 1.**

The molecular weight and molecular weight distribution of the polymerized resin sample were confirmed through gel permeation chromatography (GPC), and a thermogram was obtained using a differential scanning calorimeter (DSC) to investigate the thermal characteristics.

For the molecular weight through gel permeation chromatography (GPC), results were obtained by injecting a solution produced by using tetrahydrofuran (THF, stabilized without butylated hydroxytoluene (BHT)) as a solvent, dissolving the resin sample in tetrahydrofuran at a concentration of 1.0 mg/1 ml, filtering the dissolved resin sample with a syringe filter, and measuring the molecular weight at 40°C, and the results are shown in the following Table 2. A Waters RI detector was used, and two Agilent PLgel MIXED-B columns were used.

A differential scanning calorimeter (DSC) was measured to determine the glass transition temperature (Tg) of the resin. A glass transition temperature (Tg) was obtained on a graph obtained by heating 5.5 mg to 8.5 mg of the resin sample to 270°C under $N_2$ flow, cooling the resin sample, and then scanning the resin sample while heating the resin sample at a heating rate of 10 °C/min during the second heating, and the glass transition temperature (Tg) is shown in the following Table 2.

The measurement of the refractive index may be confirmed from a polymerized resin sample, and the resulting value according to the wavelength of light may be obtained using a prism-coupler.

After the resin sample was brought into close contact with a prism of a prism-coupler, light at a specific wavelength was made incident on the sample through the prism. Thereafter, after an incident angle at which light resonates was measured to measure a refractive index therefrom, the Sellmeier Coefficient which minimizes the error value was obtained and substituted into the Sellmeier's equation, and then a refractive index at a wavelength of D (587 nm) was confirmed.

Specifically, the refractive index was measured at a wavelength of 587 nm, and the Abbe's Number was obtained by the following Equation by measuring the refractive index ($n_D$, $n_F$, and $n_C$) at a wavelength of D (587 nm), F (486 nm), and C (656 nm), respectively, and is shown in the following Table 2.

$$\text{Abbe's Number} = (n_D-1)/(n_F - n_C)$$

[Table 2]

| | Polycarbonate Resin | Mn (g/mol) | Mw (g/mol) | PDI | RI (587nm) | Tg (°C) | Abbe's Number |
|---|---|---|---|---|---|---|---|
| Comparative Example 1-1 | Resin 1-1 | 17400 | 33400 | 1.90 | 1.647 | 142 | 22.4 |
| Comparative Example 1-2 | Resin 1-2 | 5700 | 11000 | 1.92 | 1.671 | 207 | 18.7 |
| Comparative Example 1-3 | Resin 1-3 | 10000 | 17000 | 1.70 | 1.686 | 168 | 19.0 |
| Example 1-1 | Resin 1-4 | 7900 | 13200 | 1.67 | 1.651 | 152 | 20.4 |
| Example 1-2 | Resin 1-5 | 26500 | 46400 | 1.75 | 1.655 | 138 | 21.4 |
| Example 1-3 | Resin 1-6 | 9120 | 15500 | 1.70 | 1.652 | 134 | 19.4 |
| Example 1-4 | Resin 1-7 | 12500 | 21800 | 1.74 | 1.661 | 131 | 21.3 |
| Example 1-5 | Resin 1-8 | 15100 | 24800 | 1.64 | 1.651 | 129 | 19.1 |
| Example 1-6 | Resin 1-9 | 15800 | 26700 | 1.69 | 1.663 | 126 | 19.7 |
| Example 1-7 | Resin 1-10 | 13200 | 21200 | 1.61 | 1.656 | 146 | 19.8 |
| Example 1-8 | Resin 1-11 | 14200 | 24500 | 1.73 | 1.652 | 143 | 20.6 |
| Example 1-9 | Resin 1-12 | 21200 | 35400 | 1.67 | 1.671 | 126 | 20.2 |
| Example 1-10 | Resin 1-13 | 18700 | 31600 | 1.69 | 1.658 | 143 | 19.8 |
| Example 1-11 | Resin 1-14 | 24500 | 42100 | 1.72 | 1.682 | 153 | 18.3 |
| Example 1-12 | Resin 1-15 | 28600 | 48500 | 1.70 | 1.676 | 138 | 18.8 |

(continued)

| | Polycarbonate Resin | Mn (g/mol) | Mw (g/mol) | PDI | RI (587nm) | Tg (°C) | Abbe's Number |
|---|---|---|---|---|---|---|---|
| Example 1-13 | Resin 1-16 | 26500 | 46400 | 1.75 | 1.689 | 149 | 19.5 |
| Example 1-14 | Resin 1-17 | 29700 | 50100 | 1.69 | 1.661 | 168 | 19.3 |

In Table 2, Mn means the number average molecular weight, Mw means the weight average molecular weight, PDI means the polydispersity index, RI means the refractive index, Tg means the glass transition temperature, and the refractive index is a value measured at a wavelength of 587 nm.

According to Table 2, the resins of Examples 1-1 to 1-14 include units represented by Chemical Formula 1 and Chemical Formula 2 according to an exemplary embodiment of the present disclosure, so that the core structure of Chemical Formula 1 is rich in electrons as spiro[fluorene-9,9'-xanthene], and thus has a high electron density, thereby improving the refractive index of a polycarbonate resin including the core structure, and accordingly, by including the unit represented by Chemical Formula 2, the glass transition temperature (Tg) of the unit represented by Chemical Formula 1 may be supplemented, or the chain behavior of the unit represented by Chemical Formula 1 may be made to be flexible, and the resins are advantageous in the injection processing of a molded article.

In contrast, the resin of Comparative Example 1-1 does not include the unit represented by Chemical Formula 2 according to an exemplary embodiment of the present disclosure, and thus cannot supplement the glass transition temperature (Tg) of the unit represented by Chemical Formula 1 nor make the chain behavior of the unit represented by Chemical Formula 1 flexible, so that it could be confirmed that the resin is disadvantageous in the injection processing of a molded article, and thus, has a lower refractive index than the resins of Examples 1-1 to 1-14 of the present disclosure.

In order to appropriately apply the resin according to the exemplary embodiments of the present disclosure to a molded article such as an optical lens, a high refractive index is preferentially required, and it could be confirmed that Examples 1-1 to 1-14 were better as optical materials than Comparative Example 1-1 because the refractive index of Comparative Example 1-1 was very low even though the Abbe's Number of Comparative Example 1-1 was higher than those of Examples 1-1 to 1-14.

Although Comparative Examples 1-2 and 1-3 have a refractive index which is at the levels of the Examples, in the case of a homopolymer, there is a problem in that it is difficult to satisfy physical properties that are easily applied to injection. Specifically, the homopolymer has the same repeating structure, and thus has a small free volume due to good accumulation between molecules, so that the homopolymer has high birefringence or poor flowability at high temperatures, and thus is characterized in that it is difficult to perform extrusion/injection. Therefore, in order to prepare a polymer resin which is easily extruded/injected and thermally molded, appropriate physical properties other than the refractive index are required, and the resin according to the exemplary embodiments of the present disclosure has an advantage of facilitating extrusion/injection and thermal molding while having a desired refractive index.

**Preparation Example 2. Preparation of polyester resin**

**Preparation Example 2-1. Preparation of Resin 2-1**

45.251 g (0.100 mol) of Monomer 1-1, 9.710 g (0.050 mol) of terephthaloyl chloride and 9.710 g (0.050 mol) of isophthaloyl chloride were melted and reacted at 250°C for 5 hours. As the reaction proceeded, ethylene glycol was generated as a by-product, and the degree of decompression was adjusted up to 1 Torr to remove the ethylene glycol. After completion of the reaction, Resin 2-1, which is a polymer molten resin polymerized by blowing nitrogen into the reactor to create a normal pressure atmosphere, was obtained.

Monomer 1-1:

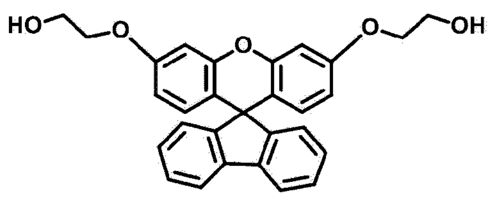

MS: $[M+H]^+$=453

**Preparation Examples 2-2 to 2-17. Preparation of Resins 2-2 to 2-17**

Resins 2-2 to 2-17 were obtained by preparation in the same manner as in Preparation Example 2-1, except that the following monomers were used in amounts of the parts by mol in the following Table 3 instead of Monomer 1-1 in Preparation Example 2-1.

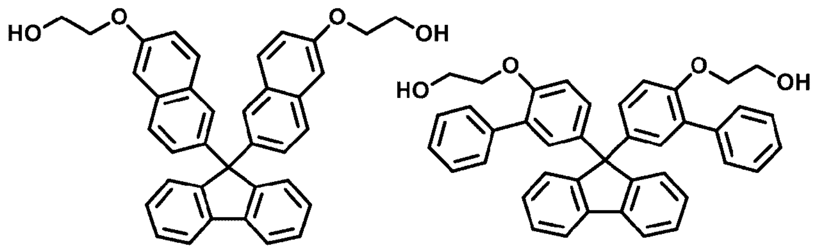

Monomer 2-1

Monomer 2-2

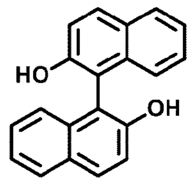

Monomer 2-3

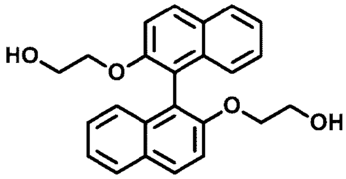

Monomer 2-4

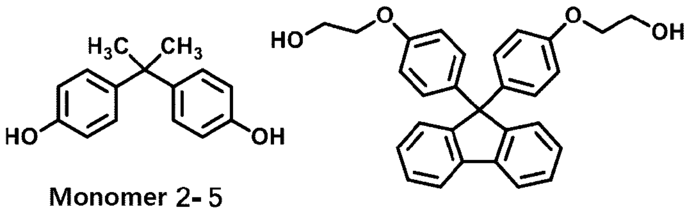

Monomer 2-5

Monomer 2-6

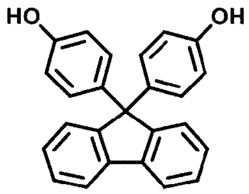

Monomer 2-7

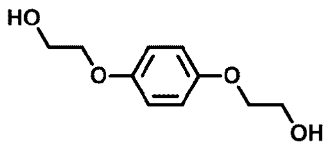

Monomer 2-8

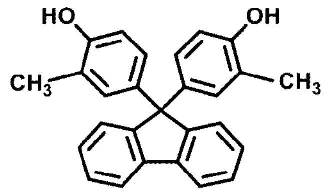

Monomer 2-9

[Table 3]

| No | Composition (part by mol) of resin (* Based on a total of 100 moles of monomers) | | | | | | | | | |
|---|---|---|---|---|---|---|---|---|---|---|
| | Monomer 1-1 | Monomer 2-1 | Monomer 2-2 | Monomer 2-3 | Monomer 2-4 | Monomer 2-5 | Monomer 2-6 | Monomer 2-7 | Monomer 2-8 | Monomer 2-9 |
| Resi n 2-1 | 100 | | | | | | | | | |
| Resi n 2-2 | 70 | | | 15 | | | | | 15 | |
| Resi n 2-3 | 70 | | | 21 | | | | 4 | | 5 |
| Resi n 2-4 | 50 | | | 35 | | | | | 10 | 5 |
| Resi n 2-5 | 50 | | | 35 | | | | 5 | 10 | |
| Resi n 2-6 | 34 | 11 | | 47 | 8 | | | | | |
| Resi n 2-7 | 24 | 32 | | 39 | | | | | 5 | |
| Resin 2-8 | 20 | 30 | | 43 | 7 | | | | | |
| Resi n 2-9 | 20 | 23 | 10 | 47 | | | | | | |
| Resi n 2-10 | 13 | | 27 | 41 | 19 | | | | | |
| Resi n 2-11 | 11 | | | 39 | | 50 | | | | |
| Resi n 2-12 | 10 | 32 | 9 | 49 | | | | | | |
| Resi n 2-13 | 8 | 36 | | 49 | | 7 | | | | |
| Resi n 2-14 | 8 | 36 | | 49 | | 7 | | | | |
| Resi n 2-15 | 1 | 34 | 21 | 44 | | | | | | |
| Resin 2-16 | 1 | | 23 | 31 | 45 | | | | | |
| Resi n 2-17 | 1 | 33 | | 36 | | | | | 30 | |

**Experimental Example 2.**

The molecular weight and molecular weight distribution of the polymerized resin sample were confirmed through gel permeation chromatography (GPC), and a thermogram was obtained using a differential scanning calorimeter (DSC) to investigate the thermal characteristics.

For the molecular weight through gel permeation chromatography (GPC), results were obtained by injecting a solution produced by using tetrahydrofuran (THF, stabilized without butylated hydroxytoluene (BHT)) as a solvent, dissolving the resin sample in tetrahydrofuran at a concentration of 1.0 mg/1 ml, filtering the dissolved resin sample with a syringe filter, and measuring the molecular weight at 40°C, and the results are shown in the following Table 4. A Waters RI detector was used, and two Agilent PLgel MIXED-B columns were used.

A differential scanning calorimeter (DSC) was measured to determine the glass transition temperature (Tg) of the resin. A glass transition temperature (Tg) was obtained on a graph obtained by heating a 5.5 mg to 8.5 mg of the resin sample to 270°C under $N_2$ flow, cooling the resin sample, and then scanning the resin sample while heating the resin sample at a heating rate of 10°C/min during the second heating, and the glass transition temperature (Tg) is shown in the following Table 4.

The measurement of the refractive index may be confirmed from a polymerized resin sample, and the resulting value according to the wavelength of light may be obtained using a prism-coupler.

After the resin sample was brought into close contact with a prism of a prism-coupler, light at a specific wavelength was made incident on the sample through the prism. Thereafter, after an incident angle at which light resonates was measured to measure a refractive index therefrom, the Sellmeier Coefficient which minimizes the error value was obtained and substituted into the Sellmeier's equation, and then a refractive index at a wavelength of D (587 nm) was confirmed.

In order to measure the refractive index and Abbe's Number of the resin, a resin obtained by polymerization was cut into a certain size, and the cross section was flattened by heating and applying pressure to the resin on a hot plate to prepare a sample, and the resulting value according to the wavelength of light was obtained from the prepared sample using a prism-coupler, and is shown in the following Table 4. Specifically, the refractive index was measured at a wavelength of 587 nm, and for the Abbe's Number, an Abbe's Number was obtained by the following Equation by measuring the refractive index ($n_D$, $n_F$, and $n_C$) at a wavelength of D (587 nm), F (486 nm), and C (656 nm), respectively.

$$\text{Abbe's Number} = (n_D - 1)/(n_F - n_C)$$

[Table 4]

| | Polyester Resin | Mn (g/mol) | Mw (g/mol) | PDI | RI (587nm) | Tg (°C) | Abbe's Number |
|---|---|---|---|---|---|---|---|
| Comparative Example 2-1 | Resin 2-1 | 32000 | 60300 | 1.89 | 1.643 | 155 | 22.2 |
| Example 2-1 | Resin 2-2 | 21100 | 38400 | 1.81 | 1.652 | 158 | 21.1 |
| Example 2-2 | Resin 2-3 | 23400 | 36100 | 1.60 | 1.647 | 155 | 21.8 |
| Example 2-3 | Resin 2-4 | 18100 | 32300 | 1.85 | 1.653 | 156 | 21.0 |
| Example 2-4 | Resin 2-5 | 17500 | 31200 | 1.87 | 1.653 | 156 | 20.9 |
| Example 2-5 | Resin 2-6 | 26300 | 51000 | 1.98 | 1.655 | 149 | 20.7 |
| Example 2-6 | Resin 2-7 | 24100 | 41600 | 1.74 | 1.667 | 157 | 19.3 |
| Example 2-7 | Resin 2-8 | 25900 | 45200 | 1.81 | 1.660 | 151 | 20.1 |
| Example 2-8 | Resin 2-9 | 27600 | 49100 | 1.77 | 1.663 | 151 | 19.9 |
| Example 2-9 | Resin 2-10 | 19900 | 35400 | 1.79 | 1.642 | 145 | 22.3 |
| Example 2-10 | Resin 2-11 | 16700 | 30100 | 1.80 | 1.649 | 115 | 21.5 |
| Example 2-11 | Resin 2-12 | 27100 | 49800 | 1.88 | 1.667 | 153 | 19.3 |
| Example 2-12 | Resin 2-13 | 30900 | 55000 | 1.81 | 1.667 | 154 | 19.3 |
| Example 2-13 | Resin 2-14 | 27400 | 48700 | 1.83 | 1.668 | 148 | 19.2 |

(continued)

| | Polyester Resin | Mn (g/mol) | Mw (g/mol) | PDI | RI (587nm) | Tg (°C) | Abbe's Number |
|---|---|---|---|---|---|---|---|
| Example 2-14 | Resin 2-15 | 40200 | 74900 | 1.85 | 1.667 | 158 | 19.3 |
| Example 2-15 | Resin 2-16 | 14200 | 26100 | 1.79 | 1.662 | 142 | 24.6 |
| Example 2-16 | Resin 2-17 | 22900 | 39200 | 1.74 | 1.678 | 171 | 18.0 |

In Table 4, Mn means the number average molecular weight, Mw means the weight average molecular weight, PDI means the polydispersity index, RI means the refractive index, Tg means the glass transition temperature, and the refractive index is a value measured at a wavelength of 587 nm.

According to Table 4, Examples 2-1 to 2-16 include the unit of Chemical Formula 1 according to an exemplary embodiment of the present disclosure, and in particular, the core structure of Chemical Formula 1 is rich in electrons as spiro[fluorene-9,9'-xanthene], and thus has a high electron density, thereby improving the refractive index of a polyester resin including the core structure.

Furthermore, since the unit of Chemical Formula 2 is further included in the unit of Chemical Formula 1, the glass transition temperature (Tg) and refractive index can be adjusted, and the chain behavior of the polyester resin can be made flexible, so that there is a technical effect advantageous for the injection processing of a molded article.

In order to appropriately apply the resin according to the exemplary embodiments of the present disclosure to a molded product such as an optical lens, a high refractive index is preferentially required, and it could be confirmed that Examples 2-1 to 2-16 have a very high refractive index, and thus are excellent as an optical material.

Although Comparative Example 2-1 has a refractive index which is at the levels of the Examples, in the case of a homopolymer, there is a problem in that it is difficult to satisfy physical properties that are easily applied to injection. Specifically, the homopolymer has the same repeating structure, and thus has a small free volume due to good accumulation between molecules, so that the homopolymer has high birefringence or poor flowability at high temperatures, and thus is characterized in that it is difficult to perform extrusion/injection. Therefore, in order to prepare a polymer resin which is easily extruded/injected and thermally molded, appropriate physical properties other than the refractive index are required, and the resin according to the exemplary embodiments of the present disclosure has an advantage of facilitating extrusion/injection and thermal molding while having a desired refractive index.

**Preparation Example 3. Preparation of polyester-carbonate resin**

**Preparation Example 3-1. Preparation of Resin 3-1**

45.251 g (0.100 mol) of Monomer 1-1, 14.995 g (0.070 mol) of diphenylcarbonate, and 5.826 g (0.030 mol) of terephthaloyl chloride were melted and reacted at 250°C for 5 hours. As the reaction proceeded, phenol and hydrochloric acid were generated as by-products, and the degree of decompression was adjusted up to 1 Torr to remove the by-products. After completion of the reaction, Resin 3-1, which is a polymer molten resin polymerized by blowing nitrogen into the reactor to create a normal pressure atmosphere, was obtained.

Monomer 1-1:

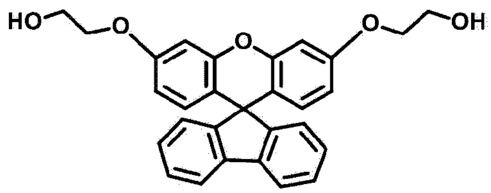

MS: $[M+H]^+$=453

**Preparation Examples 3-2 to 3-15. Preparation of Resins 3-2 to 3-15**

Resins 3-2 to 3-15 were obtained by preparation in the same manner as in Preparation Example 3-1, except that the following monomers were used in amounts of the parts by mol in the following Table 5 instead of Monomer 1-1 in Preparation Example 3-1.

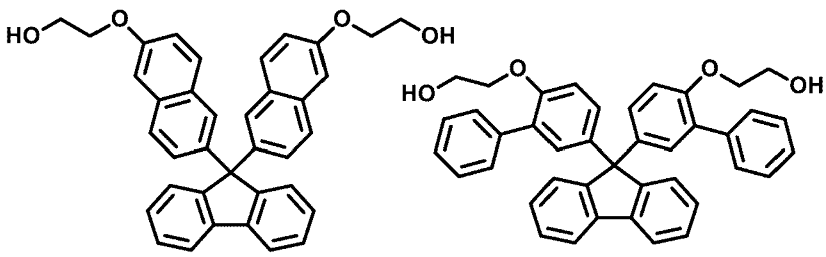

Monomer 2- 1

Monomer 2- 2

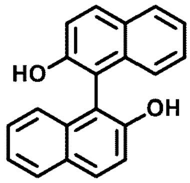

Monomer 2- 3

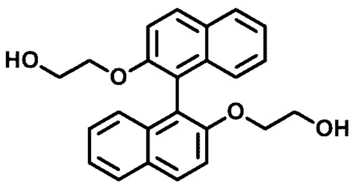

Monomer 2- 4

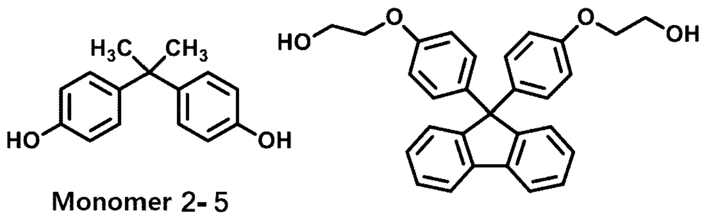

Monomer 2- 5

Monomer 2- 6

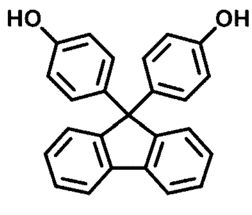

Monomer 2- 7

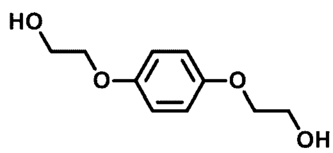

Monomer 2- 8

[Table 5]

| No | Composition (part by mol) of resin (* Based on a total of 100 moles of monomers) | | | | | | | | | | | |
|---|---|---|---|---|---|---|---|---|---|---|---|---|
| | Monom er 1-1 | Monom er 2-1 | Monom er 2-2 | Monom er 2-3 | Monom er 2-4 | Monom er 2-5 | Monom er 2-6 | Monom er 2-7 | Monom er 2-8 | PC precurs or | PE precurs or (para) | PE precurs or (meta) |
| Resi n 3-1 | 100 | | | | | | | | | 70 | 30 | |
| Resi n 3-2 | 80 | | 20 | | | | | | | 70 | 30 | |
| Resi n 3-3 | 70 | | | | 10 | | | 20 | | 70 | 30 | |
| Resi n 3-4 | 70 | | | | | 30 | | | | 70 | 30 | |
| Resi n 3-5 | 50 | | | | | 10 | 5 | | 35 | 30 | 50 | 20 |
| Resi n 3-6 | 50 | 49 | | 1 | | | | | | 30 | 50 | 20 |
| Resi n 3-7 | 30 | | | | | 52 | 18 | | | 30 | 50 | 20 |
| Resi n 3-8 | 30 | | | | 70 | | | | | 30 | 50 | 20 |
| Resi n 3-9 | 20 | | | | 50 | | | | 30 | 80 | 20 | |
| Resi n 3-10 | 20 | | | | 30 | | | 50 | | 60 | 30 | 10 |
| Resi n 3-11 | 5 | | | | 50 | | 30 | | 15 | 50 | 30 | 20 |
| Resi n 3-12 | 5 | 35 | | 15 | 45 | | | | | 50 | 25 | 25 |

(continued)

| No | Composition (part by mol) of resin (* Based on a total of 100 moles of monomers) | | | | | | | | | | | |
|---|---|---|---|---|---|---|---|---|---|---|---|---|
| | Monomer 1-1 | Monomer 2-1 | Monomer 2-2 | Monomer 2-3 | Monomer 2-4 | Monomer 2-5 | Monomer 2-6 | Monomer 2-7 | Monomer 2-8 | PC precursor | PE precursor (para) | PE precursor (meta) |
| Resin 3-13 | 1 | 24 | 30 | | 45 | | | | | 50 | 20 | 30 |
| Resin 3-14 | 1 | 50 | | 34 | 15 | | | | | 40 | 45 | 15 |
| Resin 3-15 | 1 | | 29 | 33 | | 37 | | | | 20 | 60 | 20 |

Table 5 shows the part by mol of each monomer included in Resins 3-1 to 3-15. Further, the PE precursor (para) means the part by mol of terephthaloyl chloride which is a polyester precursor, and the PE precursor (meta) means the part by mol of isophthaloyl chloride which is a polyester precursor.

**Experimental Example 3.**

The molecular weight and molecular weight distribution of the polymerized resin sample were confirmed through gel permeation chromatography (GPC), and a thermogram was obtained using a differential scanning calorimeter (DSC) to investigate the thermal characteristics. For the molecular weight through gel permeation chromatography (GPC), results were obtained by injecting a solution produced by using tetrahydrofuran (THF, stabilized without butylated hydroxytoluene (BHT)) as a solvent, dissolving the resin sample in tetrahydrofuran at a concentration of 1.0 mg/1 ml, filtering the dissolved resin sample with a syringe filter, and measuring the molecular weight at 40°C, and the results are shown in the following Table 6. A Waters RI detector was used, and two Agilent PLgel MIXED-B columns were used.

A differential scanning calorimeter (DSC) was measured to determine the glass transition temperature (Tg) of the resin. A glass transition temperature (Tg) was obtained on a graph obtained by heating 5.5 mg to 8.5 mg of the resin sample to 270°C under $N_2$ flow, cooling the resin sample, and then scanning the resin sample while heating the resin sample at a heating rate of 10°C/min during the second heating, and the glass transition temperature (Tg) is shown in the following Table 6.

In order to measure the refractive index and Abbe's Number of the resin, a prism coupler is used to make a signal light with a certain wavelength incident on a resin sample obtained by polymerization, and the result values according to the wavelength of light were obtained by measuring the output light reflected from the bottom of the prism, and are shown in the following Table 6. Specifically, the refractive index was measured at a wavelength of 589 nm, and for the Abbe's Number, an Abbe's Number was obtained by the following Equation by measuring the refractive index ($n_D$, $n_F$, and $n_C$) at a wavelength of D (587 nm), F (486 nm), and C (656 nm), respectively.

$$\text{Abbe's Number} = (n_D-1)/(n_F - n_C)$$

[Table 6]

| | No. | Mn (g/mol) | Mw (g/mol) | PDI | RI (587nm) | Tg (°C) | Abbe's Number |
|---|---|---|---|---|---|---|---|
| Comparative Example 3-1 | Resin 3-1 | 18300 | 33400 | 1.74 | 1.645 | 145 | 22.2 |
| Example 3-1 | Resin 3-2 | 20500 | 37500 | 1.80 | 1.647 | 148 | 21.5 |
| Example 3-2 | Resin 3-3 | 12700 | 21600 | 1.76 | 1.680 | 156 | 21.7 |
| Example 3-3 | Resin 3-4 | 25300 | 43500 | 1.77 | 1.627 | 146 | 24.3 |
| Example 3-4 | Resin 3-5 | 26100 | 48400 | 1.72 | 1.634 | 126 | 23.6 |
| Example 3-5 | Resin 3-6 | 15100 | 27200 | 1.77 | 1.664 | 160 | 19.5 |
| Example 3-6 | Resin 3-7 | 26200 | 46200 | 1.79 | 1.611 | 146 | 25.8 |
| Example 3-7 | Resin 3-8 | 25800 | 47300 | 1.78 | 1.659 | 138 | 20.6 |
| Example 3-8 | Resin 3-9 | 25400 | 46800 | 1.77 | 1.654 | 113 | 20.7 |
| Example 3-9 | Resin 3-10 | 10500 | 17700 | 1.77 | 1.654 | 174 | 20.8 |
| Example 3-10 | Resin 3-11 | 26200 | 49000 | 1.75 | 1.651 | 128 | 21.5 |
| Example 3-11 | Resin 3-12 | 13200 | 23100 | 1.76 | 1.675 | 154 | 18.3 |
| Example 3-12 | Resin 3-13 | 29000 | 53300 | 1.79 | 1.667 | 150 | 19.1 |
| Example 3-13 | Resin 3-14 | 9800 | 16700 | 1.80 | 1.680 | 175 | 17.7 |
| Example 3-14 | Resin 3-15 | 11000 | 18900 | 1.81 | 1.630 | 145 | 22.9 |

In Table 6, Mn means the number average molecular weight, Mw means the weight average molecular weight, PDI means the polydispersity index, RI means the refractive index, Tg means the glass transition temperature, and the refractive index is a value measured at a wavelength of 587 nm.

According to Table 6, Examples 3-1 to 3-14 include the unit of Chemical Formula 1 as the polyester-carbonate resin according to an exemplary embodiment of the present disclosure, and in particular, the core structure of Chemical Formula 1 is rich in electrons as spiro[fluorene-9,9'-xanthene], and thus has a high electron density, so that it could be confirmed that the refractive index of a polyester-carbonate resin including the core structure was improved.
Furthermore, since the unit of Chemical Formula 2 is further included in the unit of Chemical Formula 1, the glass transition temperature (Tg) and refractive index can be adjusted, and the chain behavior of the polyester-carbonate resin can be made flexible, so that there is a technical effect advantageous for the injection processing of a molded article.
For the polyester-carbonate resin, a polyester-carbonate resin having desired physical properties may be prepared by appropriately adjusting the molar ratio of the polyester precursor and the polycarbonate precursor, and the isomer to combine the characteristics of the polyester resin and the polycarbonate resin.
In order to appropriately apply the resin according to the exemplary embodiments of the present disclosure to a molded product such as an optical lens, a high refractive index is preferentially required, and it could be confirmed that Examples 3-1 to 3-14 have a very high refractive index, and thus are excellent as an optical material.
Although Comparative Example 3-1 has a refractive index which is at the levels of the Examples, in the case of a homopolymer, there is a problem in that it is difficult to satisfy physical properties that are easily applied to injection. Specifically, the homopolymer has the same repeating structure, and thus has a small free volume due to good accumulation between molecules, so that the homopolymer has high birefringence or poor flowability at high temperatures, and thus is characterized in that it is difficult to perform extrusion/injection. Therefore, in order to prepare a polymer resin which is easily extruded/injected and thermally molded, appropriate physical properties other than the refractive index are required, and the resin according to the exemplary embodiments of the present disclosure has an advantage of facilitating extrusion/injection and thermal molding while having a desired refractive index.

**Preparation Example 4. Preparation of polycarbonate resin**

Preparation Example 4-1. Preparation of Resin 4-1

45.053 g (0.100 mol) of Monomer 1-1 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 1, which is a polymerized polymer molten resin, was obtained by blowing nitrogen into the reactor to create a normal pressure atmosphere.

Monomer 1-1:

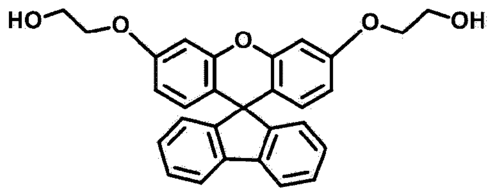

MS: $[M+H]^+$=450

**Preparation Examples 4-2 to 4-4. Preparation of Resins 4-2 to 4-4**

Resins 4-2 to 4-4 were obtained by preparation in the same manner as in Preparation Example 4-1, except that the monomers shown in the following Table 7 were used in amounts of the following parts by mol instead of Monomer 1-1 in Preparation Example 4-1.

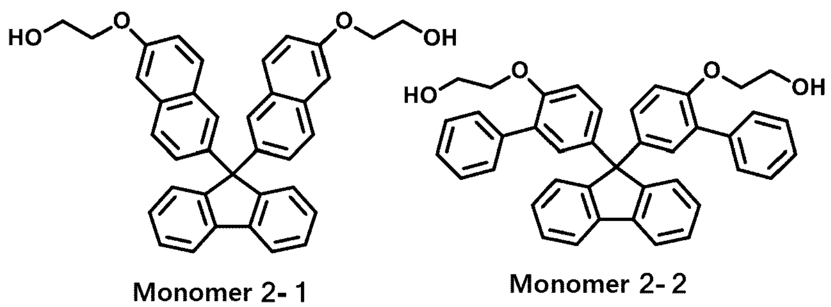

Monomer 2- 1

Monomer 2- 2

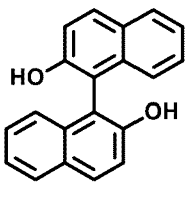

Monomer 2- 3

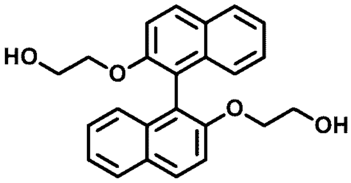

Monomer 2-4

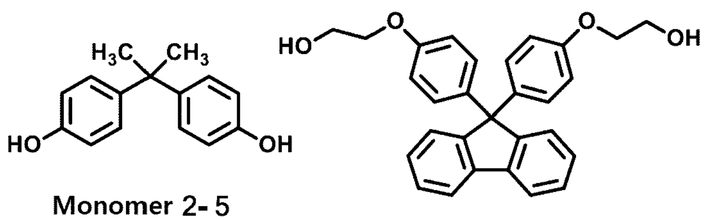

Monomer 2-5

Monomer 2-6

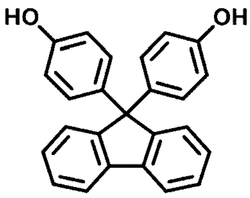

Monomer 2-7

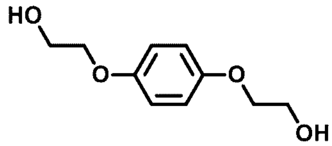

Monomer 2-8

[Table 7]

| No | Composition (part by mol) of resin | | | | | | | | |
|---|---|---|---|---|---|---|---|---|---|
| | Monome r 1-1 | Monome r 2-1 | Monome r 2-2 | Monome r 2-3 | Monome r 2-4 | Monome r 2-5 | Monome r 2-6 | Monome r 2-7 | Monome r 2-8 |
| Resi n 4-1 | 100 | | | | | | | | |
| Resi n 4-2 | 60 | 20 | | | | | 15 | | 5 |
| Resi n 4-3 | 20 | | 25 | | 45 | | 10 | | |
| Resi n 4-4 | 5 | | 40 | | 45 | 10 | | | |

**Experimental Example 4.**

The molecular weight and molecular weight distribution of the polymerized resin sample were confirmed through gel permeation chromatography (GPC), and a thermogram was obtained using a differential scanning calorimeter (DSC) to investigate the thermal characteristics.

For the molecular weight through gel permeation chromatography (GPC), results were obtained by injecting a solution produced by using tetrahydrofuran (THF, stabilized with butylated hydroxytoluene (BHT)) as a solvent, dissolving the resin sample in tetrahydrofuran at a concentration of 1.0 mg/1 ml, filtering the dissolved resin sample with a syringe filter, and measuring the molecular weight at 40°C, and the results are shown in the following Table 8. A Waters RI detector was used, and two Agilent PLgel MIXED-B columns were used.

A differential scanning calorimeter (DSC) was measured to determine the glass transition temperature (Tg) of the resin. A glass transition temperature (Tg) was obtained on a graph obtained by heating 5.5 mg to 8.5 mg of the resin sample to 270°C under $N_2$ flow, cooling the resin sample, and then scanning the resin sample while heating the resin sample at a heating rate of 10°C/min during the second heating, and the glass transition temperature (Tg) is shown in the following Table 8.

The measurement of the refractive index may be confirmed from a polymerized resin sample, and the resulting value according to the wavelength of light may be obtained using a prism-coupler.

After the resin sample was brought into close contact with a prism of a prism-coupler, light at a specific wavelength was made incident on the sample through the prism. Thereafter, after an incident angle at which light resonates was measured to measure a refractive index therefrom, the Sellmeier Coefficient which minimizes the error value was obtained and substituted into the Sellmeier's equation, and then a refractive index at a wavelength of D (587 nm) was confirmed.

Specifically, the refractive index was measured at a wavelength of 587 nm, and the Abbe's Number was obtained by the following Equation by measuring the refractive index ($n_D$, $n_F$, and $n_C$) at a wavelength of D (587 nm), F (486 nm), and C (656 nm), respectively.

$$\text{Abbe's Number} = (n_D-1)/(n_F - n_C)$$

After specimens were prepared from the polycarbonate compositions prepared in the Examples by the following method, the yellow index thereof were evaluated, and the results are shown in Table 8.

1) Preparation of specimen

A specimen with a length, a width and a thickness of 50 mm, 50 mm and 1 mm, respectively was prepared by supplying a polycarbonate composition to a twin-screw extruder (L/D=36, Φ=45, barrel temperature 240°C) at a rate of 55 kg per hour to produce pellets, and then injection-molding the pellets to an injection molding machine (manufactured by Hankuk Hydraulic Machine, HMW-016S-15t).

2) Measurement of Yellow Index (YI)

A YI value was measured at room temperature (20°C) using UltraScan PRO (manufactured by HunterLab Inc.) in accordance with ASTM D1925.

[Table 8]

| | Polycarbonat e Resin | Mn (g/ mol ) | Mw (g/ mol ) | PDI | RI (587nm ) | Tg (°C ) | Abbe' s Numbe r | Yello w index (1 mm) |
|---|---|---|---|---|---|---|---|---|
| Comparativ e Example 4-1 | Resin 4-1 | 26500 | 45100 | 1.8 4 | 1.647 | 142 | 21.7 | 8.43 |
| Example 4-1 | Resin 4-2 | 15200 | 27100 | 1.8 3 | 1.652 | 144 | 21.1 | 6.33 |
| Example 4-2 | Resin 4-3 | 9400 | 16000 | 1.8 8 | 1.657 | 135 | 20.5 | 5.21 |
| Example 4-3 | Resin 4-4 | 22700 | 34200 | 1.9 0 | 1.653 | 138 | 21.0 | 6.04 |

In Table 8, Mn means the number average molecular weight, Mw means the weight average molecular weight, PDI means the polydispersity index, RI means the refractive index, Tg means the glass transition temperature, the refractive index is a value measured at a wavelength of 587 nm, and the yellow index is a value measured when the polycarbonate resin has a thickness of 1 mm.

According to Table 8, the polycarbonate resins of Examples 4-1 to 4-3 have a yellow index of 8 or less when the polycarbonate resin has a thickness of 1 mm or less, may provide optical products with various colors, and are particularly suitable for optical materials that require high transparency because it is possible to implement various colors due to the low yellow index.

According to Table 8, the polycarbonate resin according to the exemplary embodiments of the present disclosure includes the unit of Chemical Formula 1, and in particular, the core structure of Chemical Formula 1 is rich in electrons as spiro[fluorene-9,9'-xanthene], and thus has a high electron density, so that the refractive index of a polycarbonate resin including the core structure is improved.

Furthermore, by including a unit represented by Chemical Formula 2, it is possible to supplement the glass transition temperature (Tg) of the unit represented by Chemical Formula 1 or make the chain behavior of the unit represented by Chemical Formula 1 flexible, and there is a technical effect advantageous for the injection processing of a molded article.

## Claims

**1.** A resin comprising a unit of the following Chemical Formula 1 and a unit of the following Chemical Formula 2:

[Chemical Formula 1]

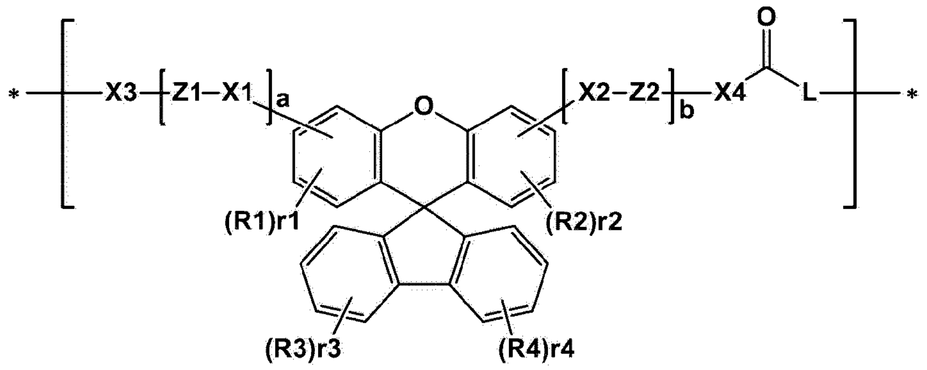

in Chemical Formula 1,
L is a direct bond; or -L'-C(=O)-,
L' is a substituted or unsubstituted arylene group,
X1 to X4 are each independently O; or S,
Z1 and Z2 are each independently a substituted or unsubstituted alkylene group; or a substituted or unsubstituted cycloalkylene group,
a and b are each independently an integer from 1 to 10, and when a and b are each 2 or higher, structures in each parenthesis are the same as or different from each other,
R1 to R4 are each independently hydrogen; a substituted or unsubstituted alkyl group; a substituted or unsubstituted cycloalkyl group; a substituted or unsubstituted aryl group; or a substituted or unsubstituted heteroaryl group,
r1 and r2 are each independently an integer from 0 to 3, and when r1 and r2 are each 2 or higher, two or more of R1 and R2 are each the same as or different from each other,
r3 and r4 are each independently an integer from 0 to 4, and when r3 and r4 are each 2 or higher, two or more of R3 and R4 are each the same as or different from each other,
* means a moiety linked to the main chain of the resin,

[Chemical Formula 2]

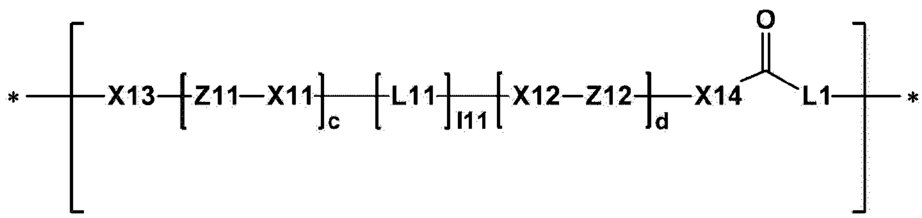

in Chemical Formula 2,
L1 is a direct bond; or -L1'-C(=0)-,
L1' is a substituted or unsubstituted arylene group,
L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,
l11 is an integer from 1 to 5, and when l11 is 2 or higher, two or more L11s are the same as or different from each other,
X11 to X14 are each independently O; or S,
Z11 and Z12 are each independently a substituted or unsubstituted alkylene group; or a substituted or unsubstituted cycloalkylene group,
c and d are each independently an integer from 0 to 10, and when c and d are each 2 or higher, structures in each parenthesis are the same as or different from each other, and
* means a moiety linked to the main chain of the resin.

**2.** The resin of claim 1, wherein the resin is a polycarbonate resin, and

the unit of the Chemical Formula 2 is represented by the following Chemical Formula 3-1 or 3-2:

[Chemical Formula 3-1]

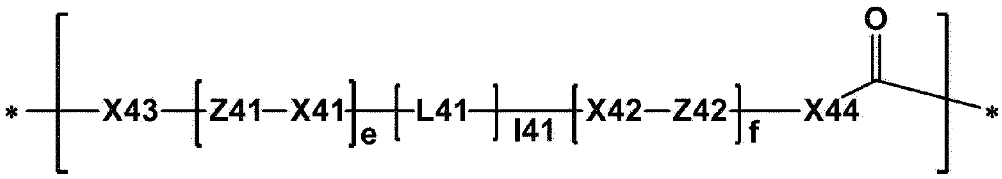

[Chemical Formula 3-2]

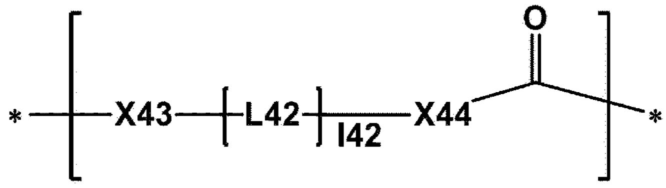

in Chemical Formulae 3-1 and 3-2,
l41 and l42 are each independently an integer from 1 to 5,
when l41 is 1 or 2, L41 is a substituted or unsubstituted monocyclic arylene group,
when l41 is an integer from 3 to 5, L41 is a substituted or unsubstituted polycyclic arylene group,
L42 is a substituted or unsubstituted polycyclic arylene group,
X41 to X44 are each independently O; or S,
Z41 and Z42 are each independently a substituted or unsubstituted alkylene group; or a substituted or unsubstituted cycloalkylene group,
e and f are each independently an integer from 1 to 10, and when e and f are each 2 or higher, structures in each parenthesis are the same as or different from each other, and
* means a moiety linked to the main chain of the resin.

**3.** The resin of claim 1, wherein the resin is a polycarbonate resin, and has a yellow index (YI) of 20 or less when the polycarbonate resin has a thickness of 1 mm or less.

**4.** The resin of claim 1, wherein the resin is a polyester resin,

the unit of the Chemical Formula 1 is represented by the following Chemical Formula 11, and
the unit of the Chemical Formula 2 is represented by the following Chemical Formula 12:

[Chemical Formula 11]

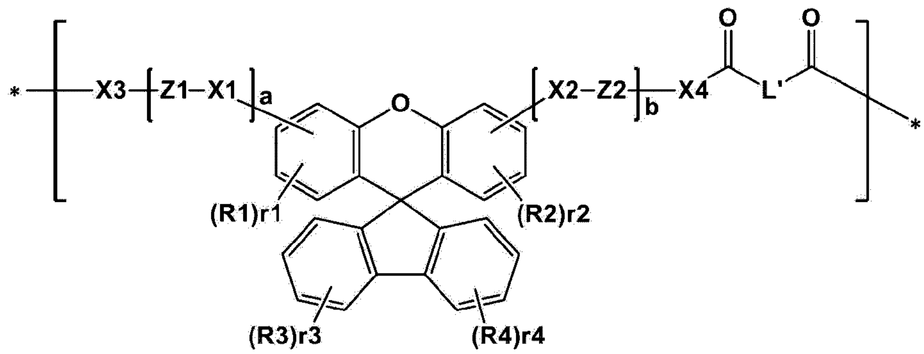

in Chemical Formula 11,
the definition of each substituent is the same as that defined in Chemical Formula 1,

[Chemical Formula 12]

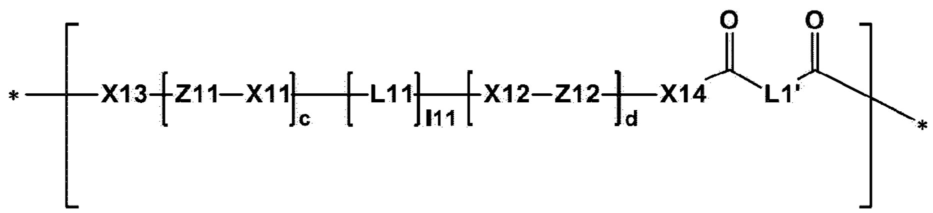

in Chemical Formula 12,
the definition of each substituent is the same as that defined in Chemical Formula 2.

**5.** The resin of claim 1, wherein the resin is a polyester-carbonate resin, and

the polyester-carbonate resin comprises a unit of the following Chemical Formula 21:

[Chemical Formula 21]

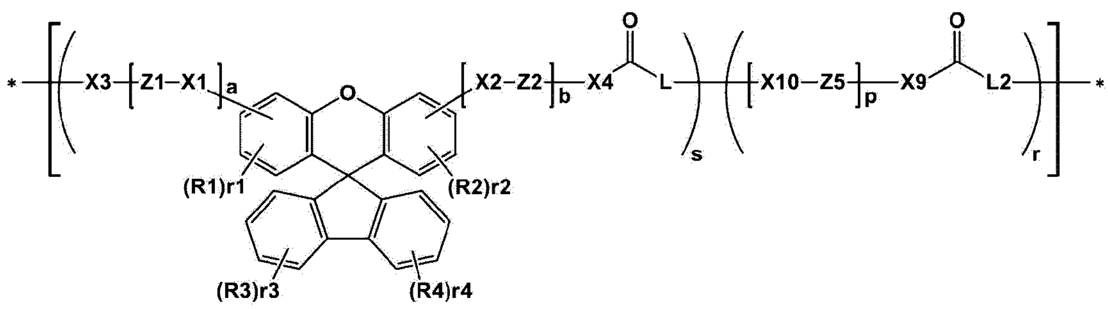

in Chemical Formula 21,
the definitions of L, X1 to X4, Z1, Z2, a, b, R1 to R4 and r1 to r4 are the same as those defined in Chemical Formula 1,
L2 is a direct bond; or -L2'-C(=O)-,
L2' is a substituted or unsubstituted arylene group,
X9 and X10 are each independently O or S,
Z5 is a substituted or unsubstituted alkylene group; or a substituted or unsubstituted cycloalkylene group,
p is an integer from 0 to 6, and when p is 2 or higher, structures in each parenthesis are the same as or different

from each other,
r is a real number of $0 \leq r < 1$ as a mole fraction,
s is a real number of $0 < s \leq 1$ as a mole fraction,
r+s=1, and
* means a moiety linked to the main chain of the resin.

**6.** The resin of claim 1, wherein Chemical Formula 1 is the following Chemical Formula 1-1:

[Chemical Formula 1-1]

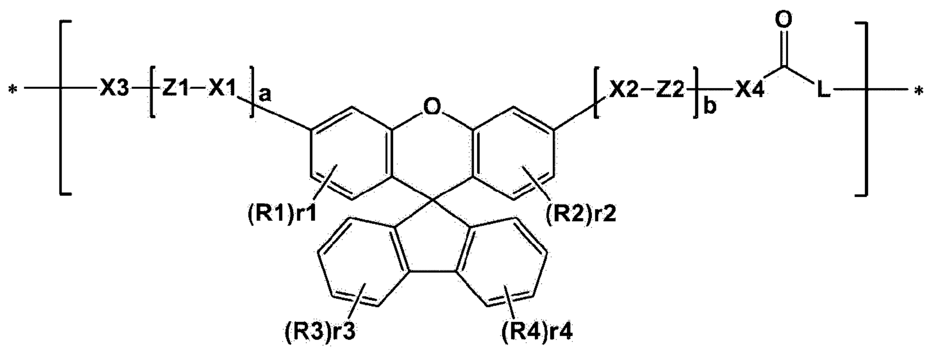

in Chemical Formula 1-1,
the definition of each substituent is the same as that defined in Chemical Formula 1.

**7.** The resin of claim 1, wherein Z1 and Z2 are each independently a substituted or unsubstituted ethylene group.

**8.** The resin of claim 1, wherein X1 to X4 are O.

**9.** The resin of claim 1, wherein the resin has a weight average molecular weight (Mw) of 5,000 g/mol to 500,000 g/mol.

**10.** The resin of claim 1, wherein a refractive index of the resin, which is measured at a wavelength of 587 nm, is 1.6 to 1.8.

**11.** The resin of claim 1, wherein the resin has a glass transition temperature (Tg) of 90°C to 200°C.

**12.** The resin of claim 1, wherein the Abbe's Number of the resin, which is measured at a wavelength of 486 nm, 587 nm, and 656 nm, is 5 to 45.

**13.** A method for preparing the resin of any one of claims 1 to 12, the method comprising polymerizing a composition for preparing a resin, which comprises a compound of the following Chemical Formula 1a; a compound of the following Chemical Formula 2a; and one or more of a polycarbonate precursor and a polyester precursor:

[Chemical Formula 1a]

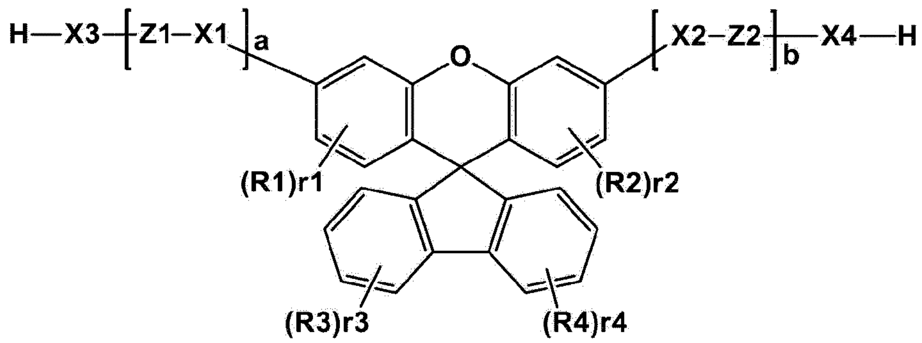

in Chemical Formula 1a,
X1 to X4 are each independently O or S,
Z1 and Z2 are each independently a substituted or unsubstituted alkylene group; or a substituted or unsubstituted cycloalkylene group,
a and b are each independently an integer from 1 to 10, and when a and b are each 2 or higher, structures in each parenthesis are the same as or different from each other,
R1 to R4 are each independently hydrogen; a substituted or unsubstituted alkyl group; a substituted or unsubstituted cycloalkyl group; a substituted or unsubstituted aryl group; or a substituted or unsubstituted heteroaryl group,
r1 and r2 are each independently an integer from 0 to 3, and when r1 and r2 are each 2 or higher, two or more of R1 and R2 are each the same as or different from each other,
r3 and r4 are each independently an integer from 0 to 4, and when r3 and r4 are each 2 or higher, two or more of R3 and R4 are each the same as or different from each other,

[Chemical Formula 2a]

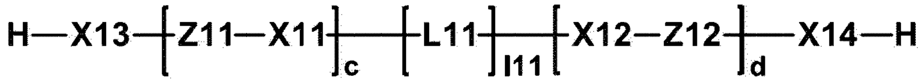

in Chemical Formula 2a,
L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,
l11 is an integer from 1 to 5, and when l11 is 2 or higher, two or more L11s are the same as or different from each other,
X11 to X14 are each independently O or S,
Z11 and Z12 are each independently a substituted or unsubstituted alkylene group; or a substituted or unsubstituted cycloalkylene group, and
c and d are each independently an integer from 0 to 10, and when c and d are each 2 or higher, structures in each parenthesis are the same as or different from each other.

**14.** The method of claim 13, wherein the ratio of the compound of Chemical Formula 1a and the compound of Chemical Formula 2a is 0.01 mole% to 99.99 mole% : 99.99 mole% to 0.01 mole%.

**15.** The method of claim 13, wherein the polycarbonate precursor is the following Chemical Formula A:

[Chemical Formula A]

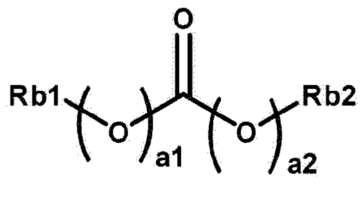

in Chemical Formula A,
Rb1 and Rb2 are each independently a halogen group; a substituted or unsubstituted alkyl group; or a substituted or unsubstituted aryl group, and
a1 and a2 are each 0 or 1.

**16.** The method of claim 13, wherein the polyester precursor is the following Chemical Formula B:

[Chemical Formula B]

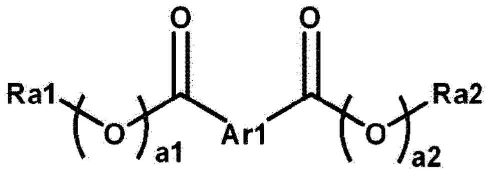

in Chemical Formula B,
Ra1 and Ra2 are each independently a halogen group; a hydroxyl group; a substituted or unsubstituted alkyl group; or a substituted or unsubstituted aryl group,
Ar1 is a substituted or unsubstituted arylene group, and
a1 and a2 are each 0 or 1.

**17.** A resin composition comprising the resin of any one of claims 1 to 12.

**18.** A molded article comprising the resin composition of claim 17.

## INTERNATIONAL SEARCH REPORT

International application No.
**PCT/KR2023/015453**

**A. CLASSIFICATION OF SUBJECT MATTER**

**C08G 64/16**(2006.01)i; **C08G 64/08**(2006.01)i; **C08L 69/00**(2006.01)i; **G02B 1/04**(2006.01)i; **C08G 64/30**(2006.01)i; **C08G 63/66**(2006.01)i; **C08G 63/64**(2006.01)i

According to International Patent Classification (IPC) or to both national classification and IPC

**B. FIELDS SEARCHED**

Minimum documentation searched (classification system followed by classification symbols)

C08G 64/16(2006.01); C07D 311/96(2006.01); C08G 63/193(2006.01); C08G 63/197(2006.01); C08G 63/78(2006.01); C08G 64/00(2006.01); C08G 64/06(2006.01); C08G 64/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 광학 수지(optical resin), 스피로[플루오렌-9,9'-크산텐](spiro[fluorene-9,9'-xanthene]), 폴리카보네이트 수지(polycarbonate resin), 폴리에스터 수지(polyester resin)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2020-114907 A (TOSOH CORP.) 30 July 2020 (2020-07-30)<br>See claims 1-3; paragraphs [0025]-[0030], [0055], [0056] and [0074]-[0114]; and example 2. | 1-3,6-15,17,18<br>4,5,16 |
| Y | JP 2018-076419 A (TAOKA CHEM. CO., LTD.) 17 May 2018 (2018-05-17)<br>See claim 1; and paragraphs [0093] and [0094]. | 4,5,16 |
| A | CN 109456298 A (CHANGZHOU HIGH-TECH RESEARCH INSTITUTE OF NANJING UNIVERSITY) 12 March 2019 (2019-03-12)<br>See entire document. | 1-18 |
| A | JP 2003-313280 A (DAINIPPON INK & CHEM. INC.) 06 November 2003 (2003-11-06)<br>See entire document. | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 January 2024** | **25 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/015453**

| C. DOCUMENTS CONSIDERED TO BE RELEVANT | | |
|---|---|---|
| Category* | Citation of document, with indication, where appropriate, of the relevant passages | Relevant to claim No. |
| A | JP 2003-040995 A (DAINIPPON INK & CHEM. INC.) 13 February 2003 (2003-02-13) See entire document. | 1-18 |

Form PCT/ISA/210 (second sheet) (July 2022)

**INTERNATIONAL SEARCH REPORT**
**Information on patent family members**

International application No.
**PCT/KR2023/015453**

| Patent document cited in search report | Publication date (day/month/year) | Patent family member(s) | Publication date (day/month/year) |
|---|---|---|---|
| JP 2020-114907 A | 30 July 2020 | JP 7346825 B2 | 20 September 2023 |
| JP 2018-076419 A | 17 May 2018 | JP 6793432 B2 | 02 December 2020 |
| CN 109456298 A | 12 March 2019 | CN 109456298 B | 29 April 2022 |
| JP 2003-313280 A | 06 November 2003 | None | |
| JP 2003-040995 A | 13 February 2003 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220128853
- KR 1020220128859
- KR 1020220128861
- KR 1020220159379